# EUROPÄISCHE PATENTSCHRIFT

(11) **EP 2 576 674 B1**
(45) Veröffentlichungstag und Bekanntmachung des Hinweises auf die Patenterteilung: **27.08.2014**
(21) Anmeldenummer: 11722085.5
(22) Anmeldetag: 31.05.2011
(51) Int. Cl.: C08J 9/00

(54) **VERFAHREN ZUR HERSTELLUNG VON EXPANDIERBAREN STYROLPOLYMER-ZUSAMMENSETZUNGEN**
PROCESS FOR MAKING EXPANDABLE COMPOSITIONS BASED ON STYRENEPOLYMER
PROCÉDÉ DE PRÉPARATION DE COMPOSITIONS DE POLYMÈRE DE STYRÈNE EXPANSIBLES

(30) Priorität: 01.06.2010 EP 10164622; 13.07.2010 EP 10169384
(43) Veröffentlichungstag der Anmeldung: 10.04.2013
(73) Patentinhaber: BASF SE, 67056 Ludwigshafen (DE)
(72) Erfinder: HUSEMANN, Wolfram, 67435 Neustadt (DE); LEHNEN, Uwe-Johannes, 67459 Böhl-Iggelheim (DE); SPIES, Patrick, 67433 Neustadt (DE); BREITSCHEIDEL, Boris, 67117 Limburgerhof (DE); HAHN, Klaus, 67281 Kirchheim (DE); HOLOCH, Jan, 69181 Leimen (DE); KRIHA, Olaf, 67433 Neustadt (DE); SCHMIED, Bernhard, 67227 Frankenthal (DE); HESSE, Pascal, 68199 Mannheim (DE)
(86) Internationale Anmeldenummer: PCT/EP2011/058885
(87) Internationale Veröffentlichungsnummer: WO 2011/151301

(56) Entgegenhaltungen:
- EP-A1- 2 058 361
- WO-A1-2009/068515
- WO-A1-2010/034778
- US-A- 5 064 874
- US-A- 5 182 308
- US-A1- 2007 173 554
- DATABASE WPI Week 198918 Thomson Scientific, London, GB; AN 1989-134353 XP002649369, & JP 1 079238 A (KANEGAFUCHI CHEM KK) 24. März 1989 (1989-03-24)

## Beschreibung

Die vorliegende Erfindung betrifft expandierbare Styrolpolymer-Zusammensetzungen, Verfahren zur Herstellung von expandierbaren Styrolpolymeren und Produkte mit hoher mechanischer Belastbarkeit. Ferner betrifft die Erfindung Verfahren zur Herstellung von Styrolpolymer-Schaumstoffen und die expandierbaren Styrolpolymere sowie die Styrolpolymer-Schaumstoffe selbst und die verschiedenen Verwendungen der expandierbaren Styrolpolymere und der Schaumstoffe.

Verschiedene Schaumstoffe werden seit Jahrzehnten als Werkstoffe für unterschiedliche Anwendungen eingesetzt. Als Ausgangsprodukte für die Herstellung von Schaumstoffen kommen Styrol, Butadien und andere ungesättigte Verbindungen infrage. Mit den Monomeren können Polymere gewonnen werden, die dann - häufig unter Einsatz eines Treibmittels - unter Expansion in Schaumstoffe überführt werden können.

Expandierbare Styrolpolymere, d. h. insbesondere Polymere mit einem Anteil von mindestens 50 Gew.-Prozent an Styrol-Bausteinen im Polymer, werden bei ihrem Herstellungsprozess oftmals mit weiteren Komponenten, z. B. Hilfskomponenten, wie Weißöl, versetzt. Dies hat sich auch für Styrol-Homopolymere als vorteilhaft erwiesen.

Dabei werden weitere Komponenten häufig in einer Menge von 0,05 - 5 % zugesetzt, u. a. um das Schaumbildungsverhalten der Polymere zu verbessern. Weißöle (also Paraffine) wirken auch als Fließverbesserer und Weichmacher. Diese Komponenten setzen auch die Glasübergangstemperatur der Polymermatrix herab. Die Verwendung von Weißölen bei der Herstellung von expandierbaren Polymeren hat auch Nachteile. Unter dem Begriff Weißöl kann ein flüssiges Gemisch aliphatischer, linearer oder verzweigter Kohlenwasserstoffe oder funktionalisierter Kohlenwasserstoffe (in der Regel mit einer mittleren Molmasse von ca. 300 - 3000 g/mol) verstanden werden. Die Molmassenverteilung unterschiedlicher Weißöl-Chargen und Typen kann auch starken Schwankungen unterworfen sein.

Die Auswahl der weiteren Komponente wirkt sich auf die Schaumstoff-Eigenschaften und die Verarbeitungsqualität der expandierbaren Zusammensetzung aus. Besitzt das Weißöl beispielsweise einen größeren niedermolekularen Anteil, so wird der Glaspunkt des Polymers, in dem es eingesetzt wird, abgesenkt. Als Konsequenz kann die erhaltene, expandierbare Styrolpolymer-Zusammensetzung ein stark abweichendes Expansionsverhalten zeigen.

Die erhaltenen Styrolpolymer-Schaumstoffe weisen dann auch andere mechanische Festigkeiten auf. Ein weiterer Nachteil der bekannten Verwendung von Weißöl ist, dass die expandierbare Styrolpolymer-Zusammensetzung bei Zusatz von anderen Additiven mit Weißöl eine merkliche Verschlechterung der mechanischen Festigkeit, wie Druck und Biegefestigkeit, gegenüber einem Styrolpolymer-Schaum ohne Weißöl aufweist.

Im Stand der Technik werden verschiedene Verfahren beschrieben, wie weitere Komponenten (Hilfsstoffe für Polymerisate) gewonnen werden können. So wird beispielsweise in WO 1999/32427 ein Verfahren zur Hydrierung von Benzolpolycarbonsäuren beschrieben, bei dem verschiedene Cyclohexancarbonsäureester gewonnen werden. Diese Reaktionsprodukte können als Weichmacher in Kunststoffen eingesetzt werden. In DE-A 10 032 580 werden Weichmacher für verschiedene Kunststoffe beschrieben, die ausgehend von Phthalsäureestern gewonnen werden können.

Eine Aufgabe der vorliegenden Erfindung ist es, expandierbare Styrolpolymer-Zusammensetzungen bereitzustellen, die zu einer verbesserten mechanischen Belastbarkeit der Schaumstoffe führen. Ferner sollen die Qualität und die Eigenschaften der expandierbaren Styrolpolymere (bzw. der Zusammensetzungen) und der daraus hergestellten (bzw. herstellbaren) Styrolpolymer-Schaumstoffe durch Zusatz spezieller Weichmacher steuerbar sein. Unter Styrolpolymeren werden Polystyrol und solche Mischpolymere des Styrols verstanden, die mindestens 50 Gewichtsprozent Styrol einpolymerisiert enthalten. Als Co-Monomere kommen insbesondere Alphamethylstyrol, kern-alkylierte Styrole, kernhalogenierte Styrole, Acrylnitril, Ester der Acrylsäure und der Methacrylsäure mit C1-C8-Alkoholen, N-Vinylverbindungen wie Vinylcarbazol, Maleinsäure-anhydrid und auch verbindungen mit zwei polymerisierbaren Doppelbindungen (z. B. kleinen Mengen an Butadien, Divinylbenzol oder Butandioldiacrylat) in Frage.

Überraschend wurde gefunden, dass bestimmte Cyclohexancarbonsäureester einen sehr positiven Einfluss auf das Schäumverhalten und gleichzeitig die mechanischen Schaumstoffeigenschaften von Styrolpolymeren, wie EPS ("Expandierbares Polystyrol", wie Styropor) haben. Insbesondere führt der Einsatz des handelsüblichen Produktes Hexamoll Dinch (Hersteller: BASF SE, Deutschland), welches als Weichmacher für PVC bereits bekannt ist, überraschend zu verbesserten Styrolpolymer-Zusammensetzungen und Schäumen.

Durch die Zugabe bereits geringer Mengen von Cyclohexancarbonsäureestern, wie z. B. Hexamoll Dinch, kann nicht nur das Expansionsverhalten des EPS verbessert werden konnte, sondern es können gleichzeitig auch bessere Druck- und Biegefestigkeiten der daraus erhaltenen Partikel-Schaumstoffe realisiert werden.

Bei Hexamoll Dinch handelt es sich mit Düsononyl-cyclohexan-dicarboxylat um eine chemische Verbindung (häufig eine Mischung mehrerer Isomere) und nicht um eine komplexe Kohlenwasserstoff-Mischung, wie beispielsweise Weißöl. Derartige Cyclohexancarbonsäureester, wie beispielsweise Hexamoll Dinch, können in einer konstanteren Qualität und mit hohen Reinheitsgraden hergestellt bzw. geliefert werden. Der Einsatz von Hexamoll Dinch in Polymeren wie PVC wird in DE 20021356 U1 beschrieben.

Zur Herstellung der Styrolpolymer-Zusammensetzungen und der schaumförmigen Produkte (EPS) kann Hexamoll Dinch beispielsweise in einem EPS-Suspensionsverfahren eingesetzt werden. Es wurde gefunden, dass die bekannte Komponente Weißöl bei der Polymerisation ohne aufwändige Anpassung der Rezeptur der Zusammensetzung durch Hexamoll Dinch substituiert werden kann (beispielsweise unter Anwendung einer "Drop-In Lösung"). Die daraus erhaltene Styrolpolymer-Zusammensetzung (z. B. EPS Rohstoff) zeigt eine deutlich verbesserte Schäumbarkeit und besitzt höhere Druck- und Biegefestigkeiten als das Vergleichsprodukt, welches mit Weißöl hergestellt wurde.

Die verschiedenen Aufgaben der Erfindung werden unter anderem gelöst durch die Bereitstellung eines Verfahrens zur Herstellung von expandierbaren Styrolpolymer-Zusammensetzungen umfassend die Polymerisation mindestens eines Styrolmonomers (und ggf. weiterer Monomere wie AMS, Butadien und/oder Acrylnitril) unter Verwendung mindestens eines Cyclohexancarbonsäureesters. Als Cyclohexancarbonsäureester werden solche Verbindungen verstanden, die einen Cyclohexanring aufweisen und zwei oder mehrere Carbonsäureester-Gruppen.

Die Erfindung betrifft eine Zusammensetzung enthaltend mindestens eine expandierbare Styrolpolymer-Komponente (S) und mindestens einen Cyclohexancarbonsäureester, sowie gegebenenfalls weitere Komponenten. Die Erfindung betrifft insbesondere eine Zusammensetzung, die mindestens einen Cyclohexancarbonsäureester der Formel (I) enthält. Sie enthält bevorzugt 100 ppm bis 10,0 Gew.-% (und insbesondere 100 ppm bis 5,0 Gew.-%, häufig auch 150 ppm bis 3,0 Gew.-%) mindestens eines Cyclohexancarbonsäureesters der Formel (I), 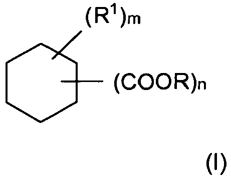 worin bedeuten:
- R¹: C₁-C₁₀-Alkyl oder C₃-C₈-Cycloalkyl, vorzugsweise C₁-C₁₀-Alkyl;
- m: 0, 1, 2 oder 3; vorzugsweise 0 bis 2, insbesondere 0 oder 1;
- n: 2, 3 oder 4; vorzugsweise 2 oder 3, insbesondere 2;
- R: C₁-C₃₀-Alkyl, vorzugsweise C₁-C₂₀-Alkyl.

Gegenstand der Erfindung ist auch eine Zusammensetzung, die mindestens 50 Gew.-% (insbesondere mindestens 80 Gew.-%, häufig sogar mindestens 90 Gew.-%) eines Styrolpolymers (S) enthält, wobei dieses Polymer aus mindestens 80 Gew.-Prozent Styrol-Monomeren (häufig aus mehr als 90 Prozent) aufgebaut ist, und wobei die Zusammensetzung ferner 100 ppm bis 5,0 Gew.-% (häufig auch 150 ppm bis 3,0 Gew.-%) mindestens eines Cyclohexancarbonsäureesters der Formel (I) enthält, worin bedeuten:
- R¹: C₁-C₁₀-Alkyl;
- m: 0, 1 oder 2;
- n: 2 oder 3;
- R: C₆-C₁₂-Alkyl.

Die Erfindung betrifft auch eine Zusammensetzung, die mindestens 80 Gew.-% (häufig auch mindestens 90 Gew.-%) eines Styrolpolymer (S) enthält, dass aus mindestens 95 Gew.-Prozent Styrol-Monomeren aufgebaut ist, und wobei die Zusammensetzung ferner 150 ppm bis 3,0 Gew.-% mindestens eines Cyclohexancarbonsäureesters der Formel (I) enthält, worin bedeuten:
- R¹: C₁-C₁₀-Alkyl;
- m: 0 oder 1; insbesondere 0;
- n: 2 oder 3; insbesondere 2;
- R: C₆-C₁₂-Alkyl.

Die Erfindung betrifft auch eine Zusammensetzung, die mindestens 90 Gew.-% eines Styrol-Homopolymer (S) enthält, und dass die Zusammensetzung ferner 150 ppm bis 3,0 Gew.-% mindestens eines Cyclohexancarbonsäureesters der Formel (I) enthält, worin bedeuten:
- R¹: C₁-C₁₀-Alkyl;
- m: 0 oder 1; insbesondere 0;
- n: 2 oder 3; insbesondere 2;
- R: C₆-C₁₂-Alkyl, insbesondere C₈-C₁₀-Alkyl,
und wobei die Zusammensetzung gegebenenfalls bis zu 8 Gew.-% einer oder mehrerer weiterer Komponenten, wie Treibmittel (wie Pentan), Flammschutzmittel (wie phosphorhaltige Verbindungen), Flammschutz-Synergisten (wie PTFE), Verzweigungshilfsmittel, Initiatoren und/oder Graphit enthält. Insbesondere ein Graphitgehalt von 0,1 bis 5 Gew.-% kann der Zusammensetzung besondere Eigenschaften verleihen.

Die Erfindung betrifft auch eine Zusammensetzung, die mindestens 90 Gew.-% eines Styrol-homopolymer (S) enthält, und die ferner 150 ppm bis 3,0 Gew.-% mindestens eines Cyclohexancarbonsäureesters der Formel (I) enthält, worin bedeuten m ist 0, n ist 2 und R bedeutet C₈-C₁₀-Alkyl, und wobei die Zusammensetzung 0,1 bis 8 Gew.-% (häufig auch 0,1 bis 5 Gew.-%) einer oder mehrerer weiterer Komponenten enthält.

Bei den erfindungsgemäßen Zusammensetzungen hat sich der kombinierte Einsatz von zwei speziellen Additiven als besonders vorteilhaft erwiesen, die Verwendung einer kleinen Mengen (insbesondere 50 bis 500 ppm) eines oder mehrerer Verzweigungshilfsmittel (insbesondere Divinylbenzole (wie ortho, meta und para Divinylbenzol) oder Butandiolester (wie 1,4-Butandiolmethacrylat, 1,4-Butandioldimethacrylat) oder 1,4-Butandioldivinylether oder Dihydrodicyclopentadienylacrylat) zusammen mit z.B. 100 ppm bis 5,0 Gew.-% mindestens eines Cyclohexancarbonsäureesters der Formel (I).

Die Erfindung betrifft auch ein Verfahren zur Herstellung von expandierbaren Styrolpolymer-Zusammensetzungen, bei dem bei der Polymerisation der Styrol-Monomere (und ggf. weiterer Monomere) mindestens ein Cyclohexancarbonsäureester der allgemeinen Formel (I) eingesetzt wird, 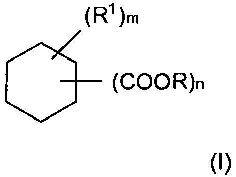 worin bedeuten:
- R¹: C₁-C₁₀-Alkyl oder C₃-C₈-Cycloalkyl;
- m: 0, 1, 2 oder 3;
- n: 2, 3 oder 4;
- R: C₁-C₃₀-Alkyl; bevorzugt C₁-C₂₀-Alkyl, insbesondere C₆-C₁₂-Alkyl, insbesondere C₈-C₁₀-Alkyl.

Die Erfindung betrifft auch ein Verfahren zur Herstellung von expandierbaren Styrolpolymer-Zusammensetzungen, wobei bei der Polymerisation folgende Komponenten zum Einsatz kommen, wobei die Gew.-% bezogen sind auf die Gesamtmenge aller organischen Komponenten:
(A) 10 ppm bis 10 Gew.% mindestens eines Cyclohexancarbonsäureesters,
(B) mindestens 50 Gew.-% (häufig mindestens 80 Gew.%) Styrol-Monomere und
(C) gegebenenfalls bis zu 8 Gew.-% weitere Komponenten.

Das Verfahren kann als einen Schritt das Dispergieren einer vinylaromatischen Verbindung (wie Styrol) in Wasser, Zusatz mindestens eines Cyclohexancarbonsäureesters sowie ggf. weiterer Komponenten, Durchführen der Suspensionspolymerisation und Abtrennen der Styrolpolymer-Partikel beinhalten. Bei der Polymerisation sind häufig als weitere Komponenten mindestens ein Treibmittel (beispielsweise in einer Menge von 1 bis 10, insbesondere 4 bis 8 Gewichtsprozent) und/oder mindestens ein Initiator (beispielsweise in einer Menge von 0,1 bis 1 Gewichtsprozent) zugegen. Die Herstellung ist jedoch auch im Prinzip durch eine Schmelzimprägnierung durchführbar.

Die Erfindung betrifft auch ein Verfahren zur Herstellung von expandierbaren Styrolpolymer-Zusammensetzungen, bei dem es sich bei dem Cyclohexan-carbonsäureester um mindestens einen 1,2-Cyclohexan-dicarbonsäure-diisononylester handelt. Häufig wird ein Gemisch von konstitutions-isomeren 1,2-Cyclohexan-dicarbonsäure-diisononylestern eingesetzt, insbesondere Hexamoll Dinch.

Gegenstand ist auch ein Verfahren zur Herstellung von expandierbaren Styrolpolymer-Zusammensetzungen, bei dem als weitere Komponenten mindestens eine Komponente ausgewählt aus der Gruppe bestehend aus Treibmitteln, Flammschutzmitteln, Flammschutz-Synergisten, Verzweigungshilfsmittel, Initiatoren und Graphit verwendet wird. Typische Mengen dieser Komponenten liegen im Bereich von 0,01 bis 4 Gew.-%. Als weitere Komponenten können auch weitere Weichmacher eingesetzt werden.

Die Erfindung betrifft auch ein Verfahren zur Herstellung eines Schaumstoffs, bei dem eine Zusammensetzung, wie oben beschrieben, aufgeschäumt wird. Dies kann z. B. durch thermische Behandlung erfolgen. Auch ein Verfahren zur Herstellung von Formteilen, z. B. durch partielles Vorschäumen der Styrolpolymer-Zusammensetzung und anschließendes Verschweißen der Polymerpartikel ist Gegenstand der Erfindung.

Gegenstand der Erfindung ist auch ein Schaumstoff, herstellbar durch Aufschäumung einer Zusammensetzung wie oben beschrieben. Der Schaumstoff herstellbar (bzw. hergestellt) durch thermische Aufschäumung einer Zusammensetzung, wie oben beschrieben, ist auch Gegenstand der Erfindung. Dieser hat vorzugsweise eine Dichte von 8,0 bis 200 g/l, insbesondere von 10 bis 50 g/l.

Die Erfindung betrifft auch die diversen Verwendungen eines Schaumstoffes, wie oben beschrieben, insbesondere zur Wärmedämmung, zur thermischen Isolierung von Maschinen und Haushaltsgeräten, als Formteil oder als Verpackungsmaterial.

Auch die Verwendung eines Cyclohexancarbonsäureesters der Formel (I), insbesondere von 1,2-Cyclohexan-dicarbonsäure-diisononylestern, insbesondere von Hexamoll Dinch zur Herstellung von expandierbaren Styrolpolymer-Zusammensetzungen und von Styrolpolymer-Schäumen ist von Interesse.

Die Herstellung der eingesetzten Cyclohexancarbonsäure-Derivate erfolgt beispielsweise gemäß dem in WO 1999/32427 offenbarten Verfahren. Dieses Verfahren umfasst die Hydrierung einer Benzolpolycarbonsäure oder eines Derivats davon (oder eines Gemisches aus zwei oder mehr davon), durch das in Kontaktbringen der Benzolpolycarbonsäure, oder des Derivats davon, oder des Gemischs aus zwei oder mehr davon, mit einem Wasserstoff enthaltenden Gas in Gegenwart eines Katalysators, der als Aktivmetall mindestens ein Metall der VIII. Nebengruppe des Periodensystems allein oder zusammen mit mindestens einem Metall der I. oder VII. Nebengruppe des Periodensystems, aufgebracht auf einem Träger, umfasst. Der Träger kann Makroporen aufweisen. In einer bevorzugten Ausführungsform weist der Träger einen mittleren Porendurchmesser von mindestens 50 nm und eine BET-Oberfläche von höchstens 30 m²/g auf. Die Menge des Aktivmetalls beträgt 0,01 bis 30 Gew.-%, bezogen auf das Gesamtgewicht des Katalysators. In einer Ausführungsform wird ein Katalysator eingesetzt, worin die Menge des Aktivmetalls 0,01 bis 30 Gew.-%, bezogen auf das Gesamtgewicht des Katalysators, beträgt und 10 bis 50% des Porenvolumens des Trägers von Makroporen mit einem Porendurchmesser im Bereich von 50 nm bis 10.000 nm und 50 bis 90% des Porenvolumens des Trägers von Mesoporen mit einem Porendurchmesser im Bereich von 2 bis 50 nm gebildet werden, wobei sich die Summe der Anteile der Porenvolumina zu 100% addiert. In einer weiteren Ausführungsform weist der Katalysator 0,01 bis 30 Gew.-%, bezogen auf das Gesamtgewicht des Katalysators, eines Aktivmetalls auf, aufgebracht auf einem Träger, wobei der Träger einen mittleren Porendurchmesser von mindestens 0,1 µm und eine BET-Oberfläche von höchstens 15 m²/g aufweist. Als Träger können prinzipiell alle Träger eingesetzt werden, die Makroporen aufweisen, d.h. Träger, die ausschließlich Makroporen aufweisen, sowie solche, die neben Makroporen auch Meso- und/oder Mikroporen enthalten.
Als Aktivmetall können prinzipiell alle Metalle der VIII. Nebengruppe des Periodensystems eingesetzt werden. Bevorzugt werden als Aktivmetalle Platin, Rhodium, Palladium, Cobalt, Nickel oder Ruthenium oder ein Gemisch aus zwei oder mehr davon eingesetzt, wobei insbesondere Ruthenium als Aktivmetall verwendet wird. Unter den ebenfalls verwendbaren Metallen der I. oder VII. oder aber der I. und der VII. Nebengruppe des Periodensystems, die ebenfalls allesamt prinzipiell verwendbar sind, werden vorzugsweise Kupfer und/oder Rhenium eingesetzt. Die Begriffe "Makroporen" und "Mesoporen" werden so verwendet, wie sie in Pure Appl. Chem., 45 S. 79 (1976) definiert sind, nämlich als Poren, deren Durchmesser oberhalb von 50 nm (Makroporen) oder deren Durchmesser zwischen 2 nm und 50 nm liegt (Mesoporen).

Der Gehalt des Aktivmetalls beträgt im allgemeinen 0,01 bis 30 Gew.-%, bevorzugt 0,01 bis 5 Gew.-%, besonders bevorzugt 0,1 bis 5 Gew.%, jeweils bezogen auf das Gesamtgewicht des verwendeten Katalysators.

Der verwendete Begriff "Benzolpolycarbonsäure oder eines Derivats davon" umfasst alle Benzolpolycarbonsäuren an sich, zum Beispiel Phthalsäure, Isophthalsäure, Terephthalsäure, Trimellitsäure, Trimesinsäure, Hemimellitsäure und Pyrromellitsäure und Derivate davon, wobei insbesondere Mono-, Di-, Tri- und Tetraester, insbesondere Alkylester, und Anhydride zu nennen sind. Bevorzugt sind die Alkylester der genannten Säuren, wobei die Alkylgruppe bevorzugt ein Rest R ist, der vorstehend definiert wurde. Die bevorzugt eingesetzten Benzolpolycarbonsäurealkylester werden im Allgemeinen durch Umsetzung von Benzolpolycarbonsäuren mit den den Alkylgruppen der Ester entsprechenden Alkoholen hergestellt. Geeignete Reaktionsbedingungen zur Umsetzung der Benzolpolycarbonsäuren mit den entsprechenden Alkoholen sind dem Fachmann bekannt.

Ein weiterer Gegenstand der vorliegenden Anmeldung ist ganz allgemein die Verwendung von Cyclohexancarbonsäurederivaten als Weichmacher für Styrolpolymere.

Die erfindungsgemäß eingesetzten Cyclohexancarbonsäure-Derivate sind beispielsweise nach dem folgenden Verfahren herstellbar:
a) Veresterung einer Benzolpolycarbonsäure der Formel II 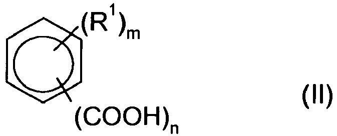 worin
   - R¹: C₁-C₃₀-Alkyl oder C₃-C₈-Cycloalkyl bedeutet,
   - m: 0, 1, 2 oder 3 bedeutet, und
   - n: 2,3 oder 4 bedeutet,
   mit einem oder mehreren Alkoholen der allgemeinen Formel

   R - OH.

   In dieser Formel bedeutet R C₁-C₃₀-Alkyl ; bevorzugt C₁-C₂₀-Alkyl,
   insbesondere C₆-C₁₂-Alkyl,
   insbesondere C₈-C₁₀-Alkyl.
   Es wird ein Benzolpolycarbonsäureester der Formel III erhalten. 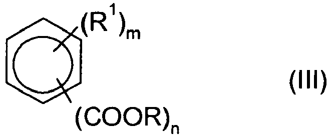
b) Hydrierung des Benzolpolycarbonsäureesters der Formel III zu einem entsprechenden Cyclohexancarbonsäureester der allgemeinen Formel (I).

Bevorzugte Ausführungsformen von R¹, m, n und R werden für die Cyclohexancarbonsäureester gemäß Formel (I) erwähnt. Bevorzugt eingesetzte Benzolpolycarbonsäuren sind Phthalsäure, Isophthalsäure, Terephthalsäure, Trimellitsäure, Trimesinsäure, Hemimellitsäure und Pyromellitsäure. Ganz besonders bevorzugt wird Phthalsäure eingesetzt. Die vorstehend genannten Säuren sind kommerziell erhältlich.

Als Alkohole werden bevorzugt die den Resten R der Cyclohexancarbonsäurederivate der Formel (I) entsprechenden Alkohole eingesetzt. Bevorzugt werden somit lineare oder verzweigte Alkohole mit C₁-C₃₀-Alkylresten eingesetzt.
Bei den zur Veresterung mit den Benzolpolycarbonsäuren eingesetzten Alkoholen kann es sich jeweils um die den vorstehend genannten Resten R entsprechenden einzelnen Isomere der Alkohole oder um Gemische verschiedener Alkohole mit isomeren Alkylresten mit derselben Zahl von Kohlenstoffatomen handeln und/oder um Gemische verschiedener Alkohole mit unterschiedlicher Zahl der Kohlenstoffatome. Die zur Umsetzung mit den Benzolpolycarbonsäuren geeigneten Alkohole oder Alkoholgemische können nach allen dem Fachmann bekannten Verfahren hergestellt werden. Geeignete Verfahren zur Herstellung von Alkoholen oder Verfahrensschritte, die bei der Herstellung von Alkoholen angewendet werden, sind zum Beispiel:
- Hydroformylierung mit anschließender Hydrierung der gebildeten Aldehyde, zum Beispiel wie in WO 92/13818, DE-A 2 009 505, DE-A 199 24 339, EP-A 1 113 034, WO 00/63151, WO 99/25668, JP-A 1 160 928, JP-A 03 083 935, JP-A 2000/053803, EP-A 0 278 407, EP-A 1 178 029, FR-A 1 304 144, JP-A 30 44 340, JP-A 30 44 341, JP-A 30 44 342, JP-A 0 40 36 251, GB-A 721,540, DE-A 195 304 14, JP-A 2001/049029, US 2,781,396, US 3,094,564, FR-A 1 324 873, JP-A 0 816 9854, US 3,153,673, US 3,127,451, US 1,828,344, WO 2003/66642, WO 2003/18912, EP-A 0 424 767, WO 2002/68369, EP-A 0 366 089, JP-A 2001/002829, DE-A 100 35 617, DE-A 199 55 593, WO 2002/00580, EP-A 0 643 031, US 2,876,264, JP-A 2000/319444 und DE-A 100 32 580 offenbart;
- Hydrierung von Aldolprodukten, zum Beispiel wie in DE-A 102 51 311, JP-A 05 194 761, US 3,272, 873, DE-A 3 151 086, JP-A 2001/322959, WO 98/03462 und EP-A 0 603 630 offenbart;
- Hydratisierung von Alkenen, zum Beispiel wie in US 5,136,108, EP-A 0 325 144, EP-A 0 325 143, DE-A 100 50 627, US 4,982,022, GB-A 2,187,741, DE-A 36 28 008, US 3,277,191, JP-A 2000/191 566, DE-A 854 377, DE-A 38 01 275, DE-A 39 25 217, JP-A 06 321 828, JP-A 02 088 536, JP-A 06 287 156, JP-A 06 287 155, JP-A 54 141 712, JP-A 08 283 186, JP-A 09 263 558 und US 4,684,751 offenbart;
- Hydrierung von Carbonsäuren und Carbonsäureestern, insbesondere Fettsäuren und Fettsäureestern, zum Beispiel wie in US 5,463,143, US 5,475,159, WO 94/10112, CA 2,314,690, WO 94/06738, JP-A 06 065 125 und US 3,361,832 offenbart;
- Hydrierung von ungesättigten Alkoholen oder von Carbonylverbindungen, zum Beispiel wie in EP-A 0 394 842, DE-A 1 269 605, WO 88/05767, FR-A 1,595,013, EP-A 0 326 674, BE-A 756 877, BE-A 757 561, DE-A 1 277 232, FR-A 1,499,041 und DE-A 1 276 620 offenbart;
- Hydrierung von Epoxiden, zum Beispiel wie in FR-A 1,508,939, GB-A 879 803 und DE-A 1 078 106 offenbart;
- Verfahren umfassend einen Telomerisationsschritt, zum Beispiel wie in EP-A 0 330 999, DE-A 1 138 751, US 5,908,807, NE-6,603,884 und US 3,091,628 offenbart;
- Verfahren umfassend einen Isomerisierungsschritt, zum Beispiel wie in DE- A 42 28 887 offenbart;
- Hydrolyse von Sulfaten, zum Beispiel wie in GB-A 1,165,309 offenbart;
- Umsetzung von Dienen mit Aminen, zum Beispiel wie in DE-A 44 31 528 offenbart;
- Enzymatische Herstellung von Alkoholen, zum Beispiel wie in WO 93/24644 offenbart;
- Selektive Hydrierung von Dienen, zum Beispiel wie in US 3,203,998, DE-A 21 41 186, GB-A 2,093,025, JP-A 02 129 24, JP-A 1 122 8468, DE-A 195 44 133, WO 94/00410, GB-A 2,260,136, DE-A 44 10 746 und JP-A 08 176 036 offenbart;
- Herstellung von Alkoholen aus Nitrilen, zum Beispiel wie in EP-A 0 271 092 offenbart;
- Herstellung von Alkoholen durch Umsetzung von Alkinen, zum Beispiel wie in RU 205 9597-C1 offenbart; und
- Hydrogenolyse von substituierten Tetrahydropyranen,
zum Beispiel wie in GB 1,320,188 offenbart.

Dem Fachmann sind weitere Verfahren zur Herstellung von Alkoholen bekannt, die ebenfalls zur Herstellung von zur Veresterung mit Benzolpolycarbonsäuren geeigneten Alkoholen oder Alkoholgemischen eingesetzt werden können. Bevorzugt eingesetzte Alkohole sind - wie vorstehend erwähnt - Alkohole, die C₁-C₂₀-Alkylreste aufweisen. Insbesondere die längerkettigen C₆-C₁₂-Alkohole bzw. Alkoholgemische, die diese Alkohole enthalten, werden besonders bevorzugt durch katalytische Hydroformylierung (auch als Oxoreaktion bezeichnet) von Olefinen und anschließende Hydrierung der gebildeten Aldehyde hergestellt. Geeignete Hydroformylierungsverfahren sind dem Fachmann bekannt und sind in den vorstehend genannten Dokumenten offenbart. Die in den genannten Dokumenten offenbarten Alkohole und Alkoholgemische können mit den vorstehend genannten Benzolpolycarbonsäuren zu den gewünschten Benzolpolycarbonsäurealkylestern bzw. -estergemischen umgesetzt werden.

Mischungen enthaltend C₈-Alkohole und deren Herstellungsverfahren sind zum Beispiel in GB-A 721 540 offenbart, worin ein Verfahren zur Herstellung von Isooctylalkoholen ausgehend von Heptenen mittels Hydroformylierung und anschließender Hydrierung beschrieben wird.

C₉-Alkohole bzw. Mischungen enthaltend C₉-Alkohole werden bevorzugt durch Dimerisierung von Butenen, Hydroformylierung der erhaltenen Octene und anschließende Hydrierung des erhaltenen C₉-Aldehyds hergestellt. Geeignete Verfahren und C₉-Alkohle enthaltende Mischungen sind zum Beispiel in WO 1992/13818, DE-A 20 09 505, DE-A 199 24 339, EP-A 1 113 034, WO 2000/63151, WO 1999/25668, JP-A 1 160 928, JP-A 03 083 935, JP-A 2000/053803, EP-A 0 278 407 und EP-A 1 178 029 offenbart.

C₁₀-Alkohole und Mischungen enthaltend diese Alkohole sind zum Beispiel in WO 2003/66642, WO 2003/18912, EP-A 0 424 767, WO 2002/68369, EP-A 0 366 089 und JP-A 2001/002829 offenbart. C₁₂-Alkohole bzw. Mischungen enthaltend C₁₂-Alkohole, insbesondere Trimethylnonanol, und ein Verfahren zu dessen Herstellung ist zum Beispiel in WO 98/03462 offenbart. C₁₃-Alkohole sowie Mischungen enthaltend diese Alkohole sind zum Beispiel in DE-A 100 32 580, DE-A 199 55 593 und WO 2002/00580 offenbart.

Besonders bevorzugt werden gemäß der vorliegenden Anmeldung Dialkylester der vorstehend genannten Cyclohexandicarbonsäuren, insbesondere 1,2-, 1,3- oder 1,4-Dialkylester und bevorzugt 1,2-Dialkylester eingesetzt. Dabei können Dialkylester eingesetzt werden, worin beide Estergruppen der Dialkylester dieselben Alkylreste tragen, sowie Estergruppen, worin die beiden Estergruppen der Dialkylester unterschiedliche Alkylgruppen tragen. Beispiele für gemischte und nicht gemischte Dialkylester der Cyclohexandicarbonsäuren sind bereits vorstehend genannt.
Weiterhin ist es möglich, dass die Alkylgruppen der Cyclohexandicarbon-säurealkylester zwar die gleiche Kohlenstoffatomanzahl aufweisen, jedoch geradkettig sind oder unterschiedliche Verzweigungen aufweisen und somit Isomerengemische bilden. Solche Isomerengemische können auch eingesetzt werden, wenn die Kohlenstoffanzahl der Alkylgruppen der Dialkylester unterschiedlich ist. Der Anteil der verschiedenen Isomeren der Alkylgruppen ergibt sich im Allgemeinen aus der Zusammensetzung der Alkohole, die zur Veresterung der Benzoldicarbonsäuren eingesetzt werden, die nach Veresterung zu den Cyclohexandicarbonsärueestern hydriert werden. Geeignete Alkoholmischungen sind vorstehend bereits genannt. Im Sinne der vorliegenden Anmeldung sind somit unter geradkettigen oder verzweigten Alkylresten mit einer bestimmten Anzahl von Kohlenstoffatomen neben den jeweils einzelnen Isomeren Isomerengemische zu verstehen, deren Zusammensetzung sich - wie vorstehend erwähnt - aus der Zusammensetzung der zur Veresterung der Benzoldicarbonsäuren eingesetzten Alkohole ergibt. Unter geradkettigen Alkylresten sind im Sinne der vorliegenden Anmeldung ausschließlich geradkettige Alkylreste zu verstehen, jedoch auch Mischungen von Alkylresten, die überwiegend geradkettig sind.

Handelt es sich bei den Alkylresten R der Cyclohexancarbonsäureester um C₆- bis C₁₂-Alkylreste, werden bevorzugt C₆- bis C₁₂-Alkohole eingesetzt, die Verzweigungsgrade (ISO-Index) von im Allgemeinen 0,10 bis 4, bevorzugt 0,5 bis 3, besonders bevorzugt 0,8 bis 2 und insbesondere bei 1 bis 1,5, d.h. im Allgemeinen handelt es sich bei den jeweiligen Alkoholen um Gemische verschiedener Isomere. Ganz besonders bevorzugt werden C9-Alkoholgemische mit einem ISO-Index vom 1 bis 1,5, insbesondere Nonanolgemische mit einem ISO-Index von 1,25 bzw. 1,6 eingesetzt. Der ISO-Index ist eine dimensionslose Größe, die mittels Gaschromatographie bestimmt wurde.

Ein weiterer Gegenstand sind Cyclohexancarbonsäureester herstellbar durch ein Verfahren umfassend die Schritte
a) Veresterung einer Benzolpolycarbonsäure der Formel II 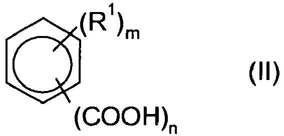 worin
   R¹, m und n wie oben definiert sind, mit einem oder mehreren Alkoholen der Formel

   R'-OH

   worin
   R' C₆-C₁₂-Alkyl bedeutet, wobei die Alkylreste R' Verzweigungsgrade von 0,1 bis 4, bevorzugt 0,5 bis 3, besonders bevorzugt 0,8 bis 2, ganz besonders bevorzugt 1 bis 1,5 aufweisen (ISO-Index),
   wobei ein Benzolpolycarbonsäureester der Formel III' erhalten wird 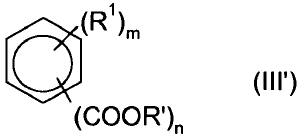
b) Hydrierung des Benzolpolycarbonsäureesters der Formel III' zu einem entsprechenden Cyclohexancarbonsäureester.

Bevorzugte Alkohole R'-OH, insbesondere Nonanol-Gemische, sind die vorstehend genannten Alkohole und Alkoholgemische. Bevorzugte Ausführungsformen von R¹, m und n sind vorstehend bezüglich der Cyclohexancarbonsäureester gemäß Formel I erwähnt. Ausgewählte Beispiele für erfindungsgemäß einsetzbare Cyclohexan-carbonsäureester sind folgende Verbindungen:
Cyclohexan-1,2-dicarbonsäure-(2-propylheptyl)-n-octylester, Cyclohexan-1,2-dicarbon-säure-n-decyl-n-octylester, Cyclohexan-1,2-dicarbonsäureisodecyl-n-octylester, Cyclohexan-1,2-dicarbonsäure-n-undecyl-n-octylester, Cyclohexan-1,2-dicarbonsäure-isoundecyl-n-octylester, Cyclohexan-1,2-dicarbonsäure-n-docecyl-n-octylester, Cyclohexan-1,2-dicarbonsäureisododecyl-n-octylester, Cyclohexan-1,2-dicarbonsäure-n-tridecyl-n-octylester, Cyclohexan-1,2-dicarbonsäureisotridecyl-n-octylester, Cyclohexan-1,2-dicarbonsäure-(2-ethylhexyl)isooctylester, Cyclohexan-1,2-dicarbon-säure-n-nonylisooctylester, Cyclohexan-1,2-dicarbonsäureisononylisooctylester, Cyclohexan-1,2-dicarbonsäure-(2-propylheptyl)isooctylester, Cyclohexan-1,2-dicarbon-säure-n-decylisooctylester, Cyclohexan-1,2-dicarbonsäureisodecylisooctylester, Cyclohexan-1,2-dicarbonsäure-n-undecylisooctylester, Cyclohexan-1,2-dicarbonsäureisoundecylisooctylester, Cyclohexan-1,2-dicarbonsäure-n-docecylisooctylester, Cyclohexan-1,2-dicarbonsäureisododecylisooctylester, Cyclohexan-1,2-dicarbonsäure-n-tridecylisooctylester, Cyclohexan-1,2-dicarbonsäureisotridecylisooctylester, Cyclohexan-1,2-dicarbonsäure-n-nonyl-(2-ethylhexyl)ester, Cyclohexan-1,2-dicarbonsäureisononyl-(2-ethylhexyl)ester, Cyclohexan-1,2-dicarbonsäure-(2-propylheptyl)-(2-ethylhexyl)ester, Cyclohexan-1,2-dicarbonsäure-n-decyl-(2-ethylhexyl)ester, Cyclohexan-1,2-dicarbonsäureisodecyl-(2-ethylhexyl)ester, Cyclohexan-1,2-dicarbonsäure-n-undecyl-(2-ethylhexyl)ester, Cyclohexan-1,2-dicarbonsäureisoundecyl-(2-ethylhexyl)ester, Cyclohexan-1,2-dicarbonsäure-n-docecyl-(2-ethylhexyl)ester, Cyclohexan-1,2-dicarbonsäureiso-dodecyl-(2-ethylhexyl)ester, Cyclohexan-1,2-dicarbonsäure-n-tridecyl-(2-ethylhexyl)ester, Cyclohexan-1,2-dicarbonsäureisotridecyl-(2-ethylhexyl)ester, Cyclohexan-1,2-dicarbonsäureisononyl-n-nonylester, Cyclohexan-1,2-dicarbonsäure-(2-propylheptyl)-n-nonylester, Cyclohexan-1,2-dicarbonsäure-n-decyl-n-nonylester, Cyclohexan-1,2-dicarbonsäureisodecyl-n-nonylester, Cyclohexan-1,2-dicarbonsäure-n-undecyl-n-nonylester, Cyclohexan-1,2-dicarbonsäureisoundecyl-n-nonylester, Cyclohexan-1,2-dicarbonsäure-n-docecyl-n-nonylester, Cyclohexan-1,2-dicarbonsäureisododecyl-n-nonylester, Cyclohexan-1,2-dicarbonsäure-n-tridecyl-n-nonylester, Cyclohexan-1,2-dicarbonsäureisotridecyl-n-nonylester, Cyclohexan-1,2-dicarbonsäure-(2-propylheptyl)isononylester, Cyclohexan-1,2-dicarbonsäure-n-decylisononylester, Cyclohexan-1,2-dicarbonsäureisodecylisononylester, Cyclohexan-1,2-dicarbonsäure-n-undecylisononylester, Cyclohexan-1,2-dicarbon-säureisoundecylisononylester, Cyclohexan-1,2-dicarbonsäure-n-docecylisononylester, Cyclohexan-1,2-dicarbonsäureisododecylisononylester, Cyclohexan-1,2-dicarbon-säure-n-tridecylisononylester, Cyclohexan-1,2-dicarbonsäureisotridecylisononylester, Cyclohexan-1,2-dicarbonsäure-n-decyl-(2-propylheptyl)ester, Cyclohexan-1,2-dicarbonsäureisodecyl-(2-propylheptyl)ester, Cyclohexan-1,2-dicarbonsäure-n-undecyl-(2-propylheptyl)ester, Cyclohexan-1,2-dicarbonsäureisoundecyl-(2-propylheptyl)ester, Cyclohexan-1,2-dicarbonsäure-n-docecyl-(2-propylheptyl)ester, Cyclohexan-1,2-dicar-bonsäureisododecyl-(2-propylheptyl)ester, Cyclohexan-1,2-dicarbonsäure-n-tridecyl-(2-propylheptyl)ester, Cyclohexan-1,2-dicarbonsäureisotridecyl-(2-propylheptyl)ester, Cyclohexan-1,2-dicarbonsäureisodecyl-n-decylester, Cyclohexan-1,2-dicarbonsäure-n-undecyl-n-decylester, Cyclohexan-1,2-dicarbonsäureisoundecyl-n-decylester, Cyclo-hexan-1,2-dicarbonsäure-n-docecyl-n-decylester, Cyclohexan-1,2-dicarbonsäure-isododecyl-n-decylester, Cyclohexan-1,2-dicarbonsäure-n-tridecyl-n-decylester, Cyclo-hexan-1,2-dicarbonsäureisotridecyl-n-decylester, Cyclohexan-1,2-dicarbonsäure-n-undecylisodecylester, Cyclohexan-1,2-dicarbonsäureisoundecylisodecylester, Cyclo-hexan-1,2-dicarbonsäure-n-docecylisodecylester, Cyclohexan-1,2-dicarbonsäureiso-dodecylisodecylester, Cyclohexan-1,2-dicarbonsäure-n-tridecylisodecylester, Cyclohexan-1,2-dicarbonsäureisotridecylisodecylester, Cyclohexan-1,2-dicarbonsäure-isoundecyl-n-undecylester, Cyclohexan-1,2-dicarbonsäure-n-docecyl-n-undecylester, Cyclohexan-1,2-dicarbonsäureisododecyl-n-undecylester, Cyclohexan-1,2-dicarbon-säure-n-tridecyl-n-undecylester, Cyclohexan-1,2-dicarbonsäureisotridecyl-n-undecyl-ester, Cyclohexan-1,2-dicarbonsäure-n-docecylisoundecylester, Cyclohexan-1,2-dicarbonsäureisododecylisoundecylester, Cyclohexan-1,2-dicarbonsäure-n-tridecyliso-undecylester, Cyclohexan-1,2-dicarbonsäureisotridecylisoundecylester, Cyclohexan-1,2-dicarbonsäureisododecyl-n-dodecylester, Cyclohexan-1,2-dicarbonsäure-n-tridecyl-n-dodecylester, Cyclohexan-1,2-dicarbonsäureisotridecyl-n-dodecylester, Cyclohexan-1,2-dicarbonsäure-n-tridecylisododecylester, Cyclohexan-1,2-dicarbonsäureisotridecyl-isododecylester, Cyclohexan-1,2-dicarbonsäureisotridecyl-n-tridecylester, Cyclohexan-1,2-dicarbonsäuremethylcyclohexylester, Cyclohexan-1,2-dicarbonsäureethylcyclo-hexylester, Cyclohexan-1,2-dicarbonsäure-n-propylcyclohexylester, Cyclohexan-1,2-dicarbonsäureisopropylcyclohexylester, Cyclohexan-1,2-dicarbonsäure-n-butylcyclo-hexylester, Cyclohexan-1,2-dicarbonsäure-tert-butylcyclohexylester, Cyclohexan-1,2-dicarbonsäureisobutylcyclohexylester, Cyclohexan-1,2-dicarbonsäureglycolcyclohexyl-ester, Cyclohexan-1,2-dicarbonsäure-n-hexylcyclohexylester, Cyclohexan-1,2-dicarbonsäureisohexylcyclohexylester, Cyclohexan-1,2-dicarbonsäure-n-heptylcyclo-hexylester, Cyclohexan-1,2-dicarbonsäureisoheptylcyclohexylester, Cyclohexan-1,2-dicarbonsäure-n-octylcyclohexylester, _ Cyclohexan-1,2-dicarbonsäureisooctylcyclo-hexylester, Cyclohexan-1,2-dicarbonsäure-(2-ethylhexyl)cyclohexylester, Cyclohexan-1,2-dicarbonsäure-n-nonylcyclohexylester, Cyclohexan-1,2-dicarbonsäureisononyl-cyclohexylester, Cyclohexan-1,2-dicarbonsäure-(2-propylheptyl)cyclohexylester, Cyclohexan-1,2-dicarbonsäure-n-decylcyclohexylester, Cyclohexan-1,2-dicarbonsäure-isodecylcyclohexylester, Cyclohexan-1,2-dicarbonsäure-n-undecylcyclohexylester, Cyclohexan-1,2-dicarbonsäureisoundecylcyclohexylester, Cyclohexan-1,2-dicarbon-säure-n-docecylcyclohexylester, Cyclohexan-1,2-dicarbonsäureisododecylcyclohexyl-ester, Cyclohexan-1,2-dicarbonsäure-n-tridecylcyclohexylester, Cyclohexan-1,2-dicarbonsäureisotridecylcyclohexylester, Cyclohexan-1,2-dicarbonsäuremethyliso-pentylester, Cyclohexan-1,2-dicarbonsäureethylisopentylester, Cyclohexan-1,2-dicar-bonsäure-n-propylisopentylester, Cyclohexan-1,2-dicarbonsäureisopropylisopentyl-ester, Cyclohexan-1,2-dicarbonsäure-n-butylisopentylester, Cyclohexan-1,2-dicarbonsäure-tert-butylisopentylester, Cyclohexan-1,2-dicarbonsäureisobutylisopentyl-ester, Cyclohexan-1,2-dicarbonsäureglykolisopentylester, Cyclohexan-1,2-dicarbon-säure-n-hexylisopentylester, Cyclohexan-1,2-dicarbonsäureisohexylisopentylester, Cyclohexan-1,2-dicarbonsäure-n-heptylisopentylester, Cyclohexan-1,2-dicarbonsäure-isoheptylisopentylester, Cyclohexan-1,2-dicarbonsäure-n-octylisopentylester, Cyclohexan-1,2-dicarbonsäureisooctylisopentylester, Cyclohexan-1,2-dicarbonsäure-(2-ethylhexyl)isopentylester, Cyclohexan-1,2-dicarbonsäure-n-nonylisopentylester, Cyclohexan-1,2-dicarbonsäureisononylisopentylester, Cyclohexan-1,2-dicarbonsäure-(2-propylheptyl)isopentylester, Cyclohexan-1,2-dicarbonsäure-n-decylisopentylester, Cyclohexan-1,2-dicarbonsäureisodecylisopentylester, Cyclohexan-1,2-dicarbonsäure-n-undecylisopentylester, Cyclohexan-1,2-dicarbonsäureisoundecylisopentylester, Cyclohexan-1,2-dicarbonsäure-n-docecylisopentylester, Cyclohexan-1,2-dicarbon-säureisododecylisopentylester, Cyclohexan-1,2-dicarbonsäure-n-tridecylisopentylester, Cyclohexan-1,2-dicarbonsäureisotridecylisopentylester, Cyclohexan-1,2-dicarbon-säuremethyl-n-pentylester, Cyclohexan-1,2-dicarbonsäureethyl-n-pentylester, Cyclo-hexan-1,2-dicarbonsäure-n-propyl-n-pentylester, Cyclohexan-1,2-dicarbonsäureiso-propyl-n-pentylester, Cyclohexan-1,2-dicarbonsäure-n-butyl-n-pentylester, Cyclohexan-1,2-dicarbonsäure-tert-butyl-n-pentylester, Cyclohexan-1,2-dicarbonsäureisobutyl-n-pentylester, Cyclohexan-1,2-dicarbonsäureglycol-n-pentylester, Cyclohexan-1,2-dicarbonsäure-n-hexyl-n-pentylester, Cyclohexan-1,2-dicarbonsäureisohexyl-n-pentylester, Cyclohexan-1,2-dicarbonsäure-n-heptyl-n-pentylester, Cyclohexan-1,2-dicarbonsäureisoheptyl-n-pentylester, Cyclohexan-1,2-dicarbonsäure-n-octyl-n-pentylester, Cyclohexan-1,2-dicarbonsäureisooctyl-n-pentylester, Cyclohexan-1,2-dicarbonsäure-(2-ethylhexyl)-n-pentylester, Cyclohexan-1,2-dicarbonsäure-n-nonyl-n-pentylester, Cyclohexan-1,2-dicarbonsäureisononyl-n-pentylester, Cyclohexan-1,2-dicarbonsäure-(2-propylheptyl)-n-pentylester, Cyclohexan-1,2-dicarbonsäure-n-decyl-n-pentylester, Cyclohexan-1,2-dicarbonsäureisodecyl-n-pentylester, Cyclohexan-1,2-dicarbonsäure-n-undecyl-n-pentylester, Cyclohexan-1,2-dicarbonsäureisoundecyl-n-pentylester, Cyclohexan-1,2-dicarbonsäure-n-docecyl-n-pentylester, Cyclohexan-1,2-dicarbonsäureisododecyl-n-pentylester, Cyclohexan-1,2-dicarbonsäure-n-tridecyl-n-pentylester, Cyclohexan-1,2-dicarbonsäureisotridecyl-n-pentylester;
gemischte Ester der Cyclohexan-1,3-dicarbonsäure mit C1 bis C13-Alkoholen, wie z.B. Cyclohexan-1,3-dicarbonsäureethylmethylester, Cyclohexan-1,3-dicarbonsäure-n-propylmethylester, Cyclohexan-1,3-dicarbonsäureisopropylmethylester, Cyclohexan-1,3-dicarbonsäure-n-butylmethylester, Cyclohexan-1,3-dicarbonsäure-tert-butylmethyl-ester, Cyclohexan-1,3-dicarbonsäureisobutylmethylester, Cyclohexan-1,3-dicarbon-säureglycolmethylester, Cyclohexan-1,3-dicarbonsäure-n-hexylmethylester, Cyclo-hexan-1,3-dicarbonsäureisohexylmethylester, Cyclohexan-1,3-dicarbonsäure-n-heptylmethylester, Cyclohexan-1,3-dicarbonsäureisoheptylmethylester, Cyclohexan-1,3-dicarbonsäure-n-octylmethylester, Cyclohexan-1,3-dicarbonsäureisooctylmethyl-ester, Cyclohexan-1,3-dicarbonsäure-(2-ethylhexyl)methylester, Cyclohexan-1,3-dicarbonsäure-n-nonylmethylester, Cyclohexan-1,3-dicarbonsäureisononylmethylester, Cyclohexan-1,3-dicarbonsäure-(2-propylheptyl)methylester, Cyclohexan-1,3-dicarbon-säure-n-decylmethylester, Cyclohexan-1,3-dicarbonsäureisodecylmethylester, Cyclohexan-1,3-dicarbonsäure-n-undecylmethylester, Cyclohexan-1,3-dicarbonsäureiso-undecylmethylester, Cyclohexan-1,3-dicarbonsäure-n-docecylmethylester, Cyclohexan-1,3-dicarbonsäureisododecylmethylester, Cyclohexan-1,3-dicarbonsäure-n-tridecylmethylester, Cyclohexan-1,3-dicarbonsäureisotridecylmethylester, Cyclohexan-1,3-dicarbonsäure-n-propylethylester, Cyclohexan-1,3-dicarbonsäureisopropylethyl-ester, Cyclohexan-1,3-dicarbonsäure-n-butylethylester, Cyclohexan-1,3-dicarbonsäure-tert-butylethylester, Cyclohexan-1,3-dicarbonsäureisobutylethylester, Cyclohexan-1,3-dicarbonsäureglycolethylester, Cyclohexan-1,3-dicarbonsäure-n-hexylethylester, Cyclohexan-1,3-dicarbonsäureisohexylethylester, Cyclohexan-1,3-dicarbonsäure-n-heptylethylester, Cyclohexan-1,3-dicarbonsäureisoheptylethylester, Cyclohexan-1,3-dicarbonsäure-n-octylethylester, Cyclohexan-1,3-dicarbonsäureisooctylethylester, Cyclohexan-1,3-dicarbonsäure-(2-ethylhexyl)ethylester, Cyclohexan-1,3-dicarbon-säure-n-nonylethylester, Cyclohexan-1,3-dicarbonsäureisononylethylester, Cyclo-hexan-1,3-dicarbonsäure-(2-propylheptyl)ethylester, Cyclohexan-1,3-dicarbonsäure-n-decylethylester, Cyclohexan-1,3-dicarbonsäureisodecylethylester, Cyclohexan-1,3-dicarbonsäure-n-undecylethylester, Cyclohexan-1,3-dicarbonsäureisoundecylethyl-ester, Cyclohexan-1,3-dicarbonsäure-n-docecylethylester, Cyclohexan-1,3-dicarbonsäureisododecylethylester, Cyclohexan-1,3-dicarbonsäure-n-tridecylethylester, Cyclohexan-1,3-dicarbonsäureisotridecylethylester, Cyclohexan-1,3-dicarbonsäureiso-propyl-n-propylester, Cyclohexan-1,3-dicarbonsäure-n-butyl-n-propylester, Cyclo-hexan-1,3-dicarbonsäure-tert-butyt-n-propylester, Cyclohexan-1,3-dicarbonsäureiso-butyl-n-propylester, Cyclohexan-1,3-dicarbonsäureglycol-n-propylester, Cyclohexan-1,3-dicarbonsäure-n-hexyl-n-propylester, Cyclohexan-1,3-dicarbonsäureisohexyl-n-propylester, Cyclohexan-1,3-dicarbonsäure-n-heptyl-n-propylester, Cyclohexan-1,3-dicarbonsäureisoheptyl-n-propylester, Cyclohexan-1,3-dicarbonsäure-n-octyl-n-propyl-ester, Cyclohexan-1,3-dicarbonsäureisooctyl-n-propylester, Cyclohexan-1,3-dicarbonsäure-(2-ethylhexyl)-n-propylester, Cyclohexan-1,3-dicarbonsäure-n-nonyl-n-propylester, Cyclohexan-1,3-dicarbonsäureisononyl-n-propylester, Cyclohexan-1,3-dicarbonsäure-(2-propylheptyl)-n-propylester, Cyclohexan-1,3-dicarbonsäure-n-decyl-n-propylester, Cyclohexan-1,3-dicarbonsäureisodecyl-n-propylester, Cyclohexan-1,3-dicarbonsäure-n-undecyl-n-propylester, Cyclohexan-1,3-dicarbonsäureisoundecyl-n-propylester, Cyclohexan-1,3-dicarbonsäure-n-docecyl-n-propylester, Cyclohexan-1,3-dicarbonsäureisododecyl-n-propylester, Cyclohexan-1,3-dicarbonsäure-n-tridecyl-n-propylester, Cyclohexan-1,3-dicarbonsäureisotridecyl-n-propylester, Cyclohexan-1,3-dicarbonsäure-n-butylisopropylester, Cyclohexan-1,3-dicarbonsäure-tert-butylisopropyl-ester, Cyclohexan-1,3-dicarbonsäureisobutylisopropylester, Cyclohexan-1,3-dicarbon-säureglycolisopropylester, Cyclohexan-1,3-dicarbonsäure-n-hexylisopropylester, Cyclohexan-1,3-dicarbonsäureisohexylisopropylester, Cyclohexan-1,3-dicarbonsäure-n-heptylisopropylester, Cyclohexan-1,3-dicarbonsäureisoheptylisopropylester, Cyclo-hexan-1,3-dicarbonsäure-n-octylisopropylester, Cyclohexan-1,3-dicarbonsäureisooctyl-isopropylester, Cyclohexan-1,3-dicarbonsäure-(2-ethylhexyl)isopropylester, Cyclohexan-1,3-dicarbonsäure-n-nonylisopropylester, Cyclohexan-1,3-dicarbonsäureiso-nonylisopropylester, Cyclohexan-1,3-dicarbonsäure-(2-propylheptyl)isopropylester, Cyclohexan-1,3-dicarbonsäure-n-decylisopropylester, Cyclohexan-1,3-dicarbonsäure-isodecylisopropylester, Cyclohexan-1,3-dicarbonsäure-n-undecylisopropylester, Cyclohexan-1,3-dicarbonsäureisoundecylisopropylester, Cyclohexan-1,3-dicarbon-säure-n-docecylisopropylester, Cyclohexan-1,3-dicarbonsäureisododecylisopropyl-ester, Cyclohexan-1,3-dicarbonsäure-n-tridecylisopropylester, Cyclohexan-1,3-dicarbonsäureisotridecylisopropylester, Cyclohexan-1,3-dicarbonsäure-tert-butyl-n-butylester, Cyclohexan-1,3-dicarbonsäureisobutyl-n-butylester, Cyclohexan-1,3-dicarbonsäureglycol-n-butylester, Cyclohexan-1,3-dicarbonsäure-n-hexyl-n-butylester, Cyclohexan-1,3-dicarbonsäureisohexyl-n-butylester, Cyclohexan-1,3-dicarbonsäure-n-heptyl-n-butylester, Cyclohexan-1,3-dicarbonsäureisoheptyl-n-butylester, Cyclohexan-1,3-dicarbonsäure-n-octyl-n-butylester, Cyclohexan-1,3-dicarbonsäureisooctyl-n-butyl-ester, Cyclohexan-1,3-dicarbonsäure-(2-ethylhexyl)-n-butylester, Cyclohexan-1,3-dicarbonsäure-n-nonyl-n-butylester, Cyclohexan-1,3-dicarbonsäureisononyl-n-butyl-ester, Cyclohexan-1,3-dicarbonsäure-(2-propylheptyl)-n-butylester, Cyclohexan-1,3-dicarbonsäure-n-decyl-n-butylester, Cyclohexan-1,3-dicarbonsäureisodecyl-n-butyl-ester, Cyclohexan-1,3-dicarbonsäure-n-undecyl-n-butylester, Cyclohexan-1,3-dicarbon-säureisoundecyl-n-butylester, Cyclohexan-1,3-dicarbonsäure-n-docecyl-n-butylester, Cyclohexan-1,3-dicarbonsäureisododecyl-n-butylester, Cyclohexan-1,3-dicarbonsäure-n-tridecyl-n-butylester, Cyclohexan-1,3-dicarbonsäureisotridecyl-n-butylester, Cyclo-hexan-1,3-dicarbonsäureisobutyl-tert-butylester, Cyclohexan-1,3-dicarbonsäureglycol-tert-butylester, Cyclohexan-1,3-dicarbonsäure-n-hexyl-tert-butylester, Cyclohexan-1,3-dicarbonsäureisohexyl-tert-butylester, Cyclohexan-1,3-dicarbonsäure-n-heptyl-tert-butylester, Cyclohexan-1,3-dicarbonsäureisoheptyl-tert-butylester, Cyclohexan-1,3-dicarbonsäure-n-octyl-tert-butylester, Cyclohexan-1,3-dicarbonsäureisooctyl-tert-butyl-ester, Cyclohexan-1,3-dicarbonsäure-(2-ethylhexyl)-tert-butylester, Cyclohexan-1,3-dicarbonsäure-n-nonyl-tert-butylester, Cyclohexan-1,3-dicarbonsäureisononyl-tert-butylester, Cyclohexan-1,3-dicarbonsäure-(2-propylheptyl)-tert-butylester, Cyclohexan-1,3-dicarbonsäure-n-decyl-tert-butylester, Cyclohexan-1,3-dicarbonsäureisodecyl-tert-butylester, Cyclohexan-1,3-dicarbonsäure-n-undecyl-tert-butylester, Cyclohexan-1,3-dicarbonsäureisoundecyl-tert-butylester, Cyclohexan-1,3-dicarbonsäure-n-docecyl-tert-butylester, Cyclohexan-1,3-dicarbonsäureisododecyl-tert-butylester, Cyclohexan-1,3-dicarbonsäure-n-tridecyl-tert-butylester, Cyclohexan-1,3-dicarbonsäureisotridecyl-tert-butylester, Cyclohexan-1,3-dicarbonsäureglycolisobutylester, Cyclohexan-1,3-dicarbonsäure-n-hexylisobutylester, Cyclohexan-1,3-dicarbonsäureisohexylisobutyl-ester, Cyclohexan-1,3-dicarbonsäure-n-heptylisobutylester, Cyclohexan-1,3-dicarbon-säureisoheptylisobutylester, Cyclohexan-1,3-dicarbonsäure-n-octylisobutylester, Cyclo-hexan-1,3-dicarbonsäureisooctylisobutylester, Cyclohexan-1,3-dicarbonsäure-(2-ethyl-hexyl)isobutylester, Cyclohexan-1,3-dicarbonsäure-n-nonylisobutylester, Cyclohexan-1,3-dicarbonsäureisononylisobutylester, Cyclohexan-1,3-dicarbonsäure-(2-propyl-heptyl)isobutylester, Cyclohexan-1,3-dicarbonsäure-n-decylisobutylester, Cyclohexan-1,3-dicarbonsäureisodecylisobutylester, Cyclohexan-1,3-dicarbonsäure-n-undecyliso-butylester, Cyclohexan-1,3-dicarbonsäureisoundecylisobutylester, Cyclohexan-1,3-dicarbonsäure-n-docecylisobutylester, Cyclohexan-1,3-dicarbonsäureisododecyl-isobutylester, Cyclohexan-1,3-dicarbonsäure-n-tridecylisobutylester, Cyclohexan-1,3-dicarbonsäureisotridecylisobutylester, Cyclohexan-1,3-dicarbonsäure-n-hexylglycol-ester, Cyclohexan-1,3-dicarbonsäureisohexylglycolester, Cyclohexan-1,3-dicarbon-säure-n-heptylglycolester, Cyclohexan-1,3-dicarbonsäureisoheptylglycolester, Cyclo-hexan-1,3-dicarbonsäure-n-octylglycolester, Cyclohexan-1,3-dicarbonsäureiso-octylglycolester, Cyclohexan-1,3-dicarbonsäure-(2-ethylhexyl)glycolester, Cyclohexan-1,3-dicarbonsäure-n-nonylglycolester, Cyclohexan-1,3-dicarbonsäureisononylglycol-ester, Cyclohexan-1,3-dicarbonsäure-(2-propylheptyl)glycolester, Cyclohexan-1,3-dicarbonsäure-n-decylglycolester, Cyclohexan-1,3-dicarbonsäureisodecylglycolester, Cyclohexan-1,3-dicarbonsäure-n-undecylglycolester, Cyclohexan-1,3-dicarbonsäure-isoundecylglycolester, Cyclohexan-1,3-dicarbonsäure-n-docecylglycolester, Cyclo-hexan-1,3-dicarbonsäureisododecylglycolester, Cyclohexan-1,3-dicarbonsäure-n-tridecylglycolester, Cyclohexan-1,3-dicarbonsäureisotridecylglycolester, Cyclohexan-1,3-dicarbonsäureisohexyl-n-hexylester, Cyclohexan-1,3-dicarbonsäure-n-heptyl-n-hexylester, Cyclohexan-1,3-dicarbonsäureisoheptyl-n-hexylester, Cyclohexan-1,3-dicarbonsäure-n-octyl-n-hexylester, Cyclohexan-1,3-dicarbonsäureisooctyl-n-hexyl-ester, Cyclohexan-1 ,3-dicarbonsäure-(2-ethylhexyl)-n-hexylester, Cyclohexan-1,3-dicarbonsäure-n-nonyl-n-hexylester, Cyclohexan-1,3-dicarbonsäureisononyl-n-hexyl-ester, Cyclohexan-1,3-dicarbonsäure-(2-propylheptyl)-n-hexylester, Cyclohexan-1,3-dicarbonsäure-n-decyl-n-hexylester, Cyclohexan-1,3-dicarbonsäureisodecyl-n-hexyl-ester, Cyclohexan-1,3-dicarbonsäure-n-undecyl-n-hexylester, Cyclohexan-1,3-dicarbonsäureisoundecyl-n-hexylester, Cyclohexan-1,3-dicarbonsäure-n-docecyl-n-hexylester, Cyclohexan-1,3-dicarbonsäureisododecyl-n-hexylester, Cyclohexan-1,3-dicarbonsäure-n-tridecyl-n-hexylester, Cyclohexan-1,3-dicarbonsäureisotridecyl-n-hexylester, Cyclohexan-1,3-dicarbonsäure-n-heptylisohexylester, Cyclohexan-1,3-dicarbonsäureisoheptylisohexylester, Cyclohexan-1,3-dicarbonsäure-n-octylisohexyl-ester, Cyclohexan-1,3-dicarbonsäureisooctylisohexylester, Cyclohexan-1,3-dicarbon-säure-(2-ethylhexyl)isohexylester, Cyclohexan-1,3-dicarbonsäure-n-nonylisohexylester, Cyclohexan-1,3-dicarbonsäureisononylisohexylester, Cyclohexan-1,3-dicarbonsäure-(2-propylheptyl)isohexylester, Cyclohexan-1,3-dicarbonsäure-n-decylisohexylester, Cyclohexan-1,3-dicarbonsäureisodecylisohexylester, Cyclohexan-1,3-dicarbonsäure-n-undecylisohexylester, Cyclohexan-1,3-dicarbonsäureisoundecylisohexylester, Cyclo-hexan-1,3-dicarbonsäure-n-docecylisohexylester, Cyclohexan-1,3-dicarbonsäureiso-dodecylisohexylester, Cyclohexan-1,3-dicarbonsäure-n-tridecylisohexylester, Cyclohexan-1,3-dicarbonsäureisotridecylisohexylester, Cyclohexan-1,3-dicarbonsäureiso-heptyl-n-heptylester, Cyclohexan-1,3-dicarbonsäure-n-octyl-n-heptylester, Cyclohexan-1,3-dicarbonsäureisooctyl-n-heptylester, Cyclohexan-1,3-dicarbonsäure-(2-ethylhexyl)-n-heptylester, Cyclohexan-1,3-dicarbonsäure-n-nonyl-n-heptylester, Cyclohexan-1,3-dicarbonsäureisononyl-n-heptylester, Cyclohexan-1,3-dicarbonsäure-(2-propylheptyl)-n-heptylester, Cyclohexan-1,3-dicarbonsäure-n-decyl-n-heptylester, Cyclohexan-1,3-dicarbonsäureisodecyl-n-heptylester, Cyclohexan-1,3-dicarbonsäure-n-undecyl-n-heptylester, Cyclohexan-1,3-dicarbonsäureisoundecyl-n-heptylester, Cyclohexan-1,3-dicarbonsäure-n-docecyl-n-heptylester, Cyclohexan-1,3-dicarbonsäureisododecyl-n-heptylester, Cyclohexan-1,3-dicarbonsäure-n-tridecyl-n-heptylester, Cyclohexan-1,3-dicarbonsäureisotridecyl-n-heptylester, Cyclohexan-1,3-dicarbonsäure-n-octyliso-heptylester, Cyclohexan-1,3-dicarbonsäureisooctylisoheptylester, Cyclohexan-1,3-dicarbonsäure-(2-ethylhexyl)isoheptylester, Cyclohexan-1,3-dicarbonsäure-n-nonyl-isoheptylester, Cyclohexan-1,3-dicarbonsäureisononylisoheptylester, Cyclohexan-1,3-dicarbonsäure-(2-propylheptyl)isoheptylester, Cyclohexan-1,3-dicarbonsäure-n-decyl-isoheptylester, Cyclohexan-1,3-dicarbonsäureisodecylisoheptylester, Cyclohexan-1,3-dicarbonsäure-n-undecylisoheptylester, Cyclohexan-1,3-dicarbonsäureisoundecyl-isoheptylester, Cyclohexan-1,3-dicarbonsäure-n-docecylisoheptylester, Cyclohexan-1,3-dicarbonsäureisododecylisoheptylester, Cyclohexan-1,3-dicarbonsäure-n-tridecylisoheptylester, Cyclohexan-1,3-dicarbonsäureisotridecylisoheptylester, Cyclohexan-1,3-dicarbonsäureisooctyl-n-octylester, Cyclohexan-1,3-dicarbonsäure-(2-ethylhexyl)-n-octylester, Cyclohexan-1,3-dicarbonsäure-n-nonyl-n-octylester, Cyclohexan-1,3-dicarbonsäureisononyl-n-octylester, Cyclohexan-1,3-dicarbonsäure-(2-propylheptyl)-n-octylester, Cyclohexan-1,3-dicarbonsäure-n-decyl-n-octylester, Cyclohexan-1,3-dicarbonsäureisodecyl-n-octylester, Cyclohexan-1,3-dicarbonsäure-n-undecyl-n-octylester, Cyclohexan-1,3-dicarbonsäureisoundecyl-n-octylester, Cyclohexan-1,3-dicarbonsäure-n-docecyl-n-octylester, Cyclohexan-1,3-dicarbonsäureisodo-decyl-n-octylester, Cyclohexan-1,3-dicarbonsäure-n-tridecyl-n-octylester, Cyclohexan-1,3-dicarbonsäureisotridecyl-n-octylester, Cyclohexan-1,3-dicarbonsäure-(2-ethyl-hexyl)isooctylester, Cyclohexan-1,3-dicarbonsäure-n-nonylisooctylester, Cyclohexan-1,3-dicarbonsäureisononylisooctylester, Cyclohexan-1,3-dicarbonsäure-(2-propyl-heptyl)isooctylester, Cyclohexan-1,3-dicarbonsäure-n-decylisooctylester, Cyclohexan-1,3-dicarbonsäureisodecylisooctylester, Cyclohexan-1,3-dicarbonsäure-n-undecyliso-octylester, Cyclohexan-1,3-dicarbonsäureisoundecylisooctylester, Cyclohexan-1,3-dicarbonsäure-n-docecylisooctylester, Cyclohexan-1,3-dicarbonsäureisododecyliso-octylester, Cyclohexan-1,3-dicarbonsäure-n-tridecylisooctylester, Cyclohexan-1,3-dicarbonsäureisotridecylisooctylester, Cyclohexan-1,3-dicarbonsäure-n-nonyl-(2-ethylhexyl)ester, Cyclohexan-1,3-dicarbonsäureisononyl-(2-ethylhexyl)ester, Cyclohexan-1,3-dicarbonsäure-(2-propylheptyl)-(2-ethylhexyl)ester, Cyclohexan-1,3-dicar-bonsäure-n-decyl-(2-ethylhexyl)ester, Cyclohexan-1,3-dicarbonsäureisodecyl-(2-ethyl-hexyl)ester, Cyclohexan-1,3-dicarbonsäure-n-undecyl-(2-ethylhexyl)ester, Cyclohexan-1,3-dicarbonsäureisoundecyl-(2-ethylhexyl)ester, Cyclohexan-1,3-dicarbonsäure-n-docecyl-(2-ethylhexyl)ester, Cyclohexan-1,3-dicarbonsäureisododecyl-(2-ethylhexyl)ester, Cyclohexan-1,3-dicarbonsäure-n-tridecyl-(2-ethylhexyl)ester, Cyclohexan-1,3-dicarbonsäureisotridecyl-(2-ethylhexyl)ester, Cyclohexan-1,3-dicarbonsäureiso-nonyl-n-nonylester, Cyclohexan-1,3-dicarbonsäure-(2-propylheptyl)-n-nonylester, Cyclohexan-1,3-dicarbonsäure-n-decyl-n-nonylester, Cyclohexan-1,3-dicarbonsäure-isodecyl-n-nonylester, Cyclohexan-1,3-dicarbonsäure-n-undecyl-n-nonylester, Cyclohexan-1,3-dicarbonsäureisoundecyl-n-nonylester, Cyclohexan-1,3-dicarbon-säure-n-docecyl-n-nonylester, Cyclohexan-1,3-dicarbonsäureisododecyl-n-nonylester, Cyclohexan-1,3-dicarbonsäure-n-tridecyl-n-nonylester, Cyclohexan-1,3-dicarbonsäure-isotridecyl-n-nonylester, Cyclohexan-1,3-dicarbonsäure-(2-propylheptyl)isononylester, Cyclohexan-1,3-dicarbonsäure-n-decylisononylester, Cyclohexan-1,3-dicarbonsäure-isodecylisononylester, Cyclohexan-1,3-dicarbonsäure-n-undecylisononylester, Cyclo-hexan-1,3-dicarbonsäureisoundecylisononylester, Cyclohexan-1,3-dicarbonsäure-n-docecylisononylester, Cyclohexan-1,3-dicarbonsäureisododecylisononylester, Cyclohexan-1,3-dicarbonsäure-n-tridecylisononylester, Cyclohexan-1,3-dicarbonsäure-isotridecylisononylester, Cyclohexan-1,3-dicarbonsäure-n-decyl-(2-propylheptyl)ester, Cyclohexan-1,3-dicarbonsäureisodecyl-(2-propylheptyl)ester, Cyclohexan-1,3-dicar-bonsäure-n-undecyl-(2-propylheptyl)ester, Cyclohexan-1,3-dicarbonsäureisoundecyl-(2-propylheptyl)ester, Cyclohexan-1,3-dicarbonsäure-n-docecyl-(2-propylheptyl)ester, Cyclohexan-1,3-dicarbonsäureisododecyl-(2-propylheptyl)ester, Cyclohexan-1,3-dicar-bonsäure-n-tridecyl-(2-propylheptyl)ester, Cyclohexan-1,3-dicarbonsäureisotridecyl-(2-propylheptyl)ester, Cyclohexan-1,3-dicarbonsäureisodecyl-n-decylester, Cyclohexan-1,3-dicarbonsäure-n-undecyl-n-decylester, Cyclohexan-1,3-dicarbonsäureisoundecyl-n-decylester, Cyclohexan-1,3-dicarbonsäure-n-docecyl-n-decylester, Cyclohexan-1,3-dicarbonsäureisododecyl-n-decylester, Cyclohexan-1,3-dicarbonsäure-n-tridecyl-n-decylester, Cyclohexan-1,3-dicarbonsäureisotridecyl-n-decylester, Cyclohexan-1,3-dicarbonsäure-n-undecylisodecylester, Cyclohexan-1,3-dicarbonsäureisoundecyl-isodecylester, Cyclohexan-1,3-dicarbonsäure-n-docecylisodecylester, Cyclohexan-1,3-dicarbonsäureisododecylisodecylester, Cyclohexan-1,3-dicarbonsäure-n-tridecyliso-decylester, Cyclohexan-1,3-dicarbonsäureisotridecylisodecylester, Cyclohexan-1,3-dicarbonsäureisoundecyl-n-undecylester, Cyclohexan-1,3-dicarbonsäure-n-docecyl-n-undecylester, Cyclohexan-1,3-dicarbonsäureisododecyl-n-undecylester, Cyclohexan-1,3-dicarbonsäure-n-tridecyl-n-undecylester, Cyclohexan-1,3-dicarbonsäureisotridecyl-n-undecylester, Cyclohexan-1,3-dicarbonsäure-n-docecylisoundecylester, Cyclohexan-1,3-dicarbonsäureisododecylisoundecylester, Cyclohexan-1,3-dicarbonsäure-n-tridecyl-isoundecylester, Cyclohexan-1,3-dicarbonsäureisotridecylisoundecylester, Cyclohexan-1,3-dicarbonsäureisododecyl-n-dodecylester, Cyclohexan-1,3-dicarbonsäure-n-tridecyl-n-dodecylester, Cyclohexan-1,3-dicarbonsäureisotridecyl-n-dodecylester, Cyclohexan-1,3-dicarbonsäure-n-tridecylisododecylester, Cyclohexan-1,3-dicarbonsäureisotridecyl-isododecylester, Cyclohexan-1,3-dicarbonsäureisotridecyl-n-tridecylester, Cyclohexan-1,3-dicarbonsäuremethylcyclohexylester, Cyclohexan-1,3-dicarbonsäureethylcyclo-hexylester, Cyclohexan-1,3-dicarbonsäure-n-propylcyclohexylester, Cyclohexan-1,3-dicarbonsäureisopropylcyclohexylester, Cyclohexan-1,3-dicarbonsäure-n-butylcyclo-hexylester, Cyclohexan-1,3-dicarbonsäure-tert-butylcyclohexylester, Cyclohexan-1,3-dicarbonsäureisobutylcyclohexylester, Cyclohexan-1,3-dicarbonsäureglycolcyclohexyl-ester, Cyclohexan-1,3-dicarbonsäure-n-hexylcyclohexylester, Cyclohexan-1,3-dicarbonsäureisohexylcyclohexylester, Cyclohexan-1,3-dicarbonsäure-n-heptylcyclohexyl-ester, Cyclohexan-1,3-dicarbonsäureisoheptylcyclohexylester, Cyclohexan-1,3-dicarbonsäure-n-octylcyclohexylester, Cyclohexan-1,3-dicarbonsäureisooctylcyclo-hexylester, Cyclohexan-1,3-dicarbonsäure-(2-ethylhexyl)cyclohexylester, Cyclohexan-1,3-dicarbonsäure-n-nonylcyclohexylester, Cyclohexan-1,3-dicarbonsäureisononyl-cyclohexylester, Cyclohexan-1,3-dicarbonsäure-(2-propylheptyl)cyclohexylester, Cyclohexan-1,3-dicarbonsäure-n-decylcyclohexylester, Cyclohexan-1,3-dicarbonsäure-isodecylcyclohexylester, Cyclohexan-1,3-dicarbonsäure-n-undecylcyclohexylester, Cyclohexan-1,3-dicarbonsäureisoundecylcyclohexylester, Cyclohexan-1,3-dicarbon-säure-n-docecylcyclohexylester, Cyclohexan-1,3-dicarbonsäureisododecylcyclohexyl-ester, Cyclohexan-1,3-dicarbonsäure-n-tridecylcyclohexylester, Cyclohexan-1,3-dicar-bonsäureisotridecylcyclohexylester, Cyclohexan-1,3-dicarbonsäuremethylisopentyl-ester, Cyclohexan-1,3-dicarbonsäureethylisopentylester, Cyclohexan-1,3-dicarbon-säure-n-propylisopentylester, Cyclohexan-1,3-dicarbonsäureisopropylisopentylester, Cyclohexan-1,3-dicarbonsäure-n-butylisopentylester, Cyclohexan-1,3-dicarbonsäure-tert-butylisopentylester, Cyclohexan-1,3-dicarbonsäureisobutylisopentylester, Cyclohexan-1,3-dicarbonsäureglycolisopentylester, Cyclohexan-1,3-dicarbonsäure-n-hexyl-isopentylester, Cyclohexan-1,3-dicarbonsäureisohexylisopentylester, Cyclohexan-1,3-dicarbonsäure-n-heptylisopentylester, Cyclohexan-1,3-dicarbonsäureisoheptyliso-pentylester, Cyclohexan-1,3-dicarbonsäure-n-octylisopentylester, Cyclohexan-1,3-dicarbonsäureisooctylisopentylester, Cyclohexan-1,3-dicarbonsäure-(2-ethylhexyl)isopentylester, Cyclohexan-1,3-dicarbonsäure-n-nonylisopentylester, Cyclohexan-1,3-dicarbonsäureisononylisopentylester, Cyclohexan-1,3-dicarbonsäure-(2-propyl-heptyl)isopentytester, Cyclohexan-1,3-dicarbonsäure-n-decylisopentylester, Cyclo-hexan-1,3-dicarbonsäureisodecylisopentylester, Cyclohexan-1,3-dicarbonsäure-n-un-decylisopentylester, Cyclohexan-1,3-dicarbonsäureisoundecylisopentylester, Cyclo-hexan-1,3-dicarbonsäure-n-docecylisopentylester, Cyclohexan-1,3-dicarbonsäureiso-dodecylisopentylester, Cyclohexan-1,3-dicarbonsäure-n-tridecylisopentylester, Cyclohexan-1,3-dicarbonsäureisotridecylisopentylester, Cyclohexan-1,3-dicarbonsäure-methyl-n-pentylester, Cyclohexan-1,3-dicarbonsäureethyl-n-pentylester, Cyclohexan-1,3-dicarbonsäure-n-propyl-n-pentylester, Cyclohexan-1,3-dicarbonsäureisopropyl-n-pentylester, Cyclohexan-1,3-dicarbonsäure-n-butyl-n-pentylester, Cyclohexan-1,3-dicarbonsäure-tert-butyl-n-pentylester, Cyclohexan-1,3-dicarbonsäureisobutyl-n-pentyl-ester, Cyclohexan-1,3-dicarbonsäureglycol-n-pentylester, Cyclohexan-1,3-dicarbon-säure-n-hexyl-n-pentylester, Cyclohexan-1,3-dicarbonsäureisohexyl-n-pentylester, Cyclohexan-1,3-dicarbonsäure-n-heptyl-n-pentylester, Cyclohexan-1,3-dicarbonsäure-isoheptyl-n-pentylester, Cyclohexan-1,3-dicarbonsäure-n-octyl-n-pentylester, Cyclo-hexan-1,3-dicarbonsäureisooctyl-n-pentylester, Cyclohexan-1,3-dicarbonsäure-(2-ethylhexyl)-n-pentylester, Cyclohexan-1,3-dicarbonsäure-n-nonyl-n-pentylester, Cyclo-hexan-1,3-dicarbonsäureisononyl-n-pentylester, Cyclohexan-1,3-dicarbonsäure-(2-propylheptyl)-n-pentylester, Cyclohexan-1,3-dicarbonsäure-n-decyl-n-pentylester, Cyclohexan-1,3-dicarbonsäureisodecyl-n-pentylester, Cyclohexan-1,3-dicarbonsäure-n-undecyl-n-pentylester, Cyclohexan-1,3-dicarbonsäureisoundecyl-n-pentylester, Cyclohexan-1,3-dicarbonsäure-n-docecyl-n-pentylester, Cyclohexan-1,3-dicarbon-säureisododecyl-n-pentylester, Cyclohexan-1,3-dicarbonsäure-n-tridecyl-n-pentylester, Cyclohexan-1,3-dicarbonsäureisotridecyl-n-pentylester;
gemischte Ester der Cyclohexan-1,4-dicarbonsäure mit C1 bis C13-Alkoholen, wie z.B. Cyclohexan-1,4-dicarbonsäureethylmethylester, Cyclohexan-1,4-dicarbonsäure-n-propylmethylester, Cyclohexan-1,4-dicarbonsäureisopropylmethylester, Cyclohexan-1,4-dicarbonsäure-n-butylmethylester, Cyclohexan-1,4-dicarbonsäure-tert-butylmethyl-ester, Cyclohexan-1,4-dicarbonsäureisobutylmethylester, Cyclohexan-1,4-dicar-bonsäureglycolmethylester, Cyclohexan-1,4-dicarbonsäure-n-hexylmethylester, Cyclo-hexan-1,4-dicarbonsäureisohexylmethylester, Cyclohexan-1,4-dicarbonsäure-n-heptyl-methylester, Cyclohexan-1,4-dicarbonsäureisoheptylmethylester, Cyclohexan-1,4-dicarbonsäure-n-octylmethylester, Cyclohexan-1,4-dicarbonsäureisooctylmethylester, Cyclohexan-1,4-dicarbonsäure-(2-ethylhexyl)methylester, Cyclohexan-1,4-dicarbon-säure-n-nonylmethylester, Cyclohexan-1,4-dicarbonsäureisononylmethylester, Cyclo-hexan-1,4-dicarbonsäure-(2-propylheptyl)methylester, Cyclohexan-1,4-dicarbonsäure-n-decylmethylester, Cyclohexan-1,4-dicarbonsäureisodecylmethylester, Cyclohexan-1,4-dicarbonsäure-n-undecylmethylester, Cyclohexan-1,4-dicarbonsäureisoundecyl-methylester, Cyclohexan-1,4-dicarbonsäure-n-docecylmethylester, Cyclohexan-1,4-dicarbonsäureisododecylmethylester, Cyclohexan-1,4-dicarbonsäure-n-tridecylmethyl-ester, Cyclohexan-1,4-dicarbonsäureisotridecylmethylester, Cyclohexan-1,4-dicar-bonsäure-n-propylethylester, Cyclohexan-1,4-dicarbonsäureisopropylethylester, Cyclohexan-1,4-dicarbonsäure-n-butylethylester, Cyclohexan-1,4-dicarbonsäure-tert-butylethylester, Cyclohexan-1,4-dicarbonsäureisobutylethylester, Cyclohexan-1,4-dicar-bonsäureglycolethylester, Cyclohexan-1,4-dicarbonsäure-n-hexylethylester, Cyclohexan-1,4-dicarbonsäureisohexylethylester, Cyclohexan-1,4-dicarbonsäure-n-heptylethylester, Cyclohexan-1,4-dicarbonsäureisoheptylethylester, Cyclohexan-1,4-dicar-bonsäure-n-octylethylester, Cyclohexan-1,4-dicarbonsäureisooctylethylester, Cyclo-hexan-1,4-dicarbonsäure-(2-ethylhexyl)ethylester, Cyclohexan-1,4-dicarbonsäure-n-nonylethylester, Cyclohexan-1,4-dicarbonsäureisononylethylester, Cyclohexan-1,4-dicarbonsäure-(2-propylheptyl)ethylester, Cyclohexan-1,4-dicarbonsäure-n-decyl-ethylester, Cyclohexan-1,4-dicarbonsäureisodecylethylester, Cyclohexan-1,4-dicarbon-säure-n-undecylethylester, Cyclohexan-1,4-dicarbonsäureisoundecylethylester, Cyclo-hexan-1,4-dicarbonsäure-n-docecylethylester, Cyclohexan-1,4-dicarbonsäureiso-dodecylethylester, Cyclohexan-1,4-dicarbonsäure-n-tridecylethylester, Cyclohexan-1,4-dicarbonsäureisotridecylethylester, Cyclohexan-1,4-dicarbonsäureisopropyl-n-propyl-ester, Cyclohexan-1,4-dicarbonsäure-n-butyl-n-propylester, Cyclohexan-1,4-dicarbonsäure-tert-butyl-n-propylester, Cyclohexan-1,4-dicarbonsäureisobutyl-n-propylester, Cyclohexan-1,4-dicarbonsäureglycol-n-propylester, Cyclohexan-1,4-dicarbonsäure-n-hexyl-n-propylester, Cyclohexan-1,4-dicarbonsäureisohexyl-n-propylester, Cyclohexan-1,4-dicarbonsäure-n-heptyl-n-propylester, Cyclohexan-1,4-dicarbonsäureisoheptyl-n-propylester, Cyclohexan-1,4-dicarbonsäure-n-octyl-n-propylester, Cyclohexan-1,4-dicarbonsäureisooctyl-n-propylester, Cyclohexan-1,4-dicarbonsäure-(2-ethylhexyl)-n-propylester, Cyclohexan-1,4-dicarbonsäure-n-nonyl-n-propylester, Cyclohexan-1,4-dicarbonsäureisononyl-n-propylester, Cyclohexan-1,4-dicarbonsäure-(2-propylheptyl)-n-propylester, Cyclohexan-1,4-dicarbonsäure-n-decyl-n-propylester, Cyclohexan-1,4-dicarbonsäureisodecyl-n-propylester, Cyclohexan-1,4-dicarbonsäure-n-undecyl-n-propylester, Cyclohexan-1,4-dicarbonsäureisoundecyl-n-propylester, Cyclohexan-1,4-dicarbonsäure-n-docecyl-n-propylester, Cyclohexan-1,4-dicarbonsäureisododecyl-n-propylester, Cyclohexan-1,4-dicarbonsäure-n-tridecyl-n-propylester, Cyclohexan-1,4-dicarbonsäureisotridecyl-n-propylester, Cyclohexan-1,4-dicarbonsäure-n-butyliso-propylester, Cyclohexan-1,4-dicarbonsäure-tert-butylisopropylester, Cyclohexan-1,4-dicarbonsäureisobutylisopropylester, Cyclohexan-1,4-dicarbonsäureglycolisopropyl-ester, Cyclohexan-1,4-dicarbonsäure-n-hexylisopropylester, Cyclohexan-1,4-dicarbon-säureisohexylisopropylester, Cyclohexan-1,4-dicarbonsäure-n-heptylisopropylester, Cyclohexan-1,4-dicarbonsäureisoheptylisopropylester, Cyclohexan-1,4-dicarbonsäure-n-octylisopropylester, Cyclohexan-1,4-dicarbonsäureisooctylisopropylester, Cyclo-hexan-1,4-dicarbonsäure-(2-ethylhexyl)isopropylester, Cyclohexan-1,4-dicarbonsäure-n-nonylisopropylester, Cyclohexan-1,4-dicarbonsäureisononylisopropylester, Cyclo-hexan-1,4-dicarbonsäure-(2-propylheptyl)isopropylester, Cyclohexan-1,4-dicarbon-säure-n-decylisopropylester, Cyclohexan-1,4-dicarbonsäureisodecylisopropylester, Cyclohexan-1,4-dicarbonsäure-n-undecylisopropylester, Cyclohexan-1,4-dicarbon-säureisoundecylisopropylester, Cyclohexan-1,4-dicarbonsäure-n-docecyliso-propylester, Cyclohexan-1,4-dicarbonsäureisododecylisopropylester, Cyclohexan-1,4-dicarbonsäure-n-tridecylisopropylester, Cyclohexan-1,4-dicarbonsäureisotridecyliso-propylester, Cyclohexan-1,4-dicarbonsäure-tert-butyl-n-butylester, Cyclohexan-1,4-dicarbonsäureisobutyl-n-butylester, Cyclohexan-1,4-dicarbonsäureglycol-n-butylester, Cyclohexan-1,4-dicarbonsäure-n-hexyl-n-butylester, Cyclohexan-1,4-dicarbonsäureiso-hexyl-n-butylester, Cyclohexan-1,4-dicarbonsäure-n-heptyl-n-butylester, Cyclohexan-1,4-dicarbonsäureisoheptyl-n-butylester, Cyclohexan-1,4-dicarbonsäure-n-octyl-n-butylester, Cyclohexan-1,4-dicarbonsäureisooctyl-n-butylester, Cyclohexan-1,4-dicar-bonsäure-(2-ethylhexyl)-n-butylester, Cyclohexan-1,4-dicarbonsäure-n-nonyl-n-butyl-ester, Cyclohexan-1,4-dicarbonsäureisononyl-n-butylester, Cyclohexan-1,4-dicar-bonsäure-(2-propylheptyl)-n-butylester, Cyclohexan-1,4-dicarbonsäure-n-decyl-n-butyl-ester, Cyclohexan-1,4-dicarbonsäureisodecyl-n-butylester, Cyclohexan-1,4-dicarbon-säure-n-undecyl-n-butylester, Cyclohexan-1,4-dicarbonsäureisoundecyl-n-butylester, Cyclohexan-1,4-dicarbonsäure-n-docecyl-n-butylester, Cyclohexan-1,4-dicarbonsäure-isododecyl-n-butylester, Cyclohexan-1,4-dicarbonsäure-n-tridecyl-n-butylester, Cyclohexan-1,4-dicarbonsäureisotridecyl-n-butylester, Cyclohexan-1,4-dicarbonsäureiso-butyl-tert-butylester, Cyclohexan-1,4-dicarbonsäureglycol-tert-butylester, Cyclohexan-1,4-dicarbonsäure-n-hexyl-tert-butylester, Cyclohexan-1,4-dicarbonsäureisohexyl-tert-butylester, Cyclohexan-1,4-dicarbonsäure-n-heptyl-tert-butylester, Cyclohexan-1,4-dicarbonsäureisoheptyl-tert-butylester, Cyclohexan-1,4-dicarbonsäure-n-octyl-tert-butylester, Cyclohexan-1,4-dicarbonsäureisooctyl-tert-butylester, Cyclohexan-1,4-dicarbonsäure-(2-ethylhexyl)-tert-butylester, Cyclohexan-1,4-dicarbonsäure-n-nonyl-tert-butylester, Cyclohexan-1,4-dicarbonsäureisononyl-tert-butylester, Cyclohexan-1,4-dicarbonsäure-(2-propylheptyl)-tert-butylester, Cyclohexan-1,4-dicarbonsäure-n-decyl-tert-butylester, Cyclohexan-1,4-dicarbonsäureisodecyl-tert-butylester, Cyclohexan-1,4-dicarbonsäure-n-undecyl-tert-butylester, Cyclohexan-1,4-dicarbonsäureisoundecyl-tert-butylester, Cyclohexan-1,4-dicarbonsäure-n-docecyl-tert-butylester, Cyclohexan-1,4-dicarbonsäureisododecyl-tert-butylester, Cyclohexan-1,4-dicarbonsäure-n-tridecyl-tert-butylester, Cyclohexan-1,4-dicarbonsäureisotridecyl-tert-butylester, Cyclohexan-1,4-dicarbonsäureglycolisobutylester, Cyclohexan-1,4-dicarbonsäure-n-hexylisobutylester, Cyclohexan-1,4-dicarbonsäureisohexylisobutylester, Cyclohexan-1,4-dicarbonsäure-n-heptylisobutylester, Cyclohexan-1,4-dicarbonsäureisoheptylisobutylester, Cyclohexan-1,4-dicarbonsäure-n-octylisobutylester, Cyclohexan-1,4-dicarbonsäureisooctyliso-butyl-ester, Cyclohexan-1,4-dicarbonsäure-(2-ethylhexyl)isobutylester, Cyclohexan-1,4-dicarbonsäure-n-nonylisobutylester, Cyclohexan-1,4-dicarbonsäureisononylisobutyl-ester, Cyclohexan-1,4-dicarbonsäure-(2-propylheptyl)isobutylester, Cyclohexan-1,4-dicarbonsäure-n-decylisobutylester, Cyclohexan-1,4-dicarbonsäureisodecylisobutyl-ester, Cyclohexan-1,4-dicarbonsäure-n-undecylisobutylester, Cyclohexan-1,4-dicar-bonsäureisoundecylisobutylester, Cyclohexan-1,4-dicarbonsäure-n-docecylisobutyl-ester, Cyclohexan-1,4-dicarbonsäureisododecylisobutylester, Cyclohexan-1,4-dicar-bonsäure-n-tridecylisobutylester, Cyclohexan-1,4-dicarbonsäureisotridecylisobutyl-ester, Cyclohexan-1,4-dicarbonsäure-n-hexylglycolester, Cyclohexan-1,4-dicar-bonsäureisohexylglycolester, Cyclohexan-1,4-dicarbonsäure-n-heptylglycolester, Cyclohexan-1,4-dicarbonsäureisoheptylglycolester, Cyclohexan-1,4-dicarbonsäure-n-octylglycolester, Cyclohexan-1,4-dicarbonsäureisooctylglycolester, Cyclohexan-1,4-dicarbonsäure-(2-ethylhexyl)glycolester, Cyclohexan-1,4-dicarbonsäure-n-nonylglycol-ester, Cyclohexan-1,4-dicarbonsäureisononylglycolester, Cyclohexan-1,4-dicar-bonsäure-(2-propylheptyl)glycolester, Cyclohexan-1,4-dicarbonsäure-n-decyl-glycolester, Cyclohexan-1,4-dicarbonsäureisodecylglycolester, Cyclohexan-1,4-dicarbonsäure-n-undecylglycolester, Cyclohexan-1,4-dicarbonsäureisoundecylglycol-ester, Cyclohexan-1,4-dicarbonsäure-n-docecylglycolester, Cyclohexan-1,4-dicar-bonsäureisododecylglycolester, Cyclohexan-1,4-dicarbonsäure-n-tridecylglycolester, Cyclohexan-1,4-dicarbonsäureisotridecylglycolester, Cyclohexan-1,4-dicarbonsäureiso-hexyl-n-hexylester, Cyclohexan-1,4-dicarbonsäure-n-heptyl-n-hexylester, Cyclohexan-1,4-dicarbonsäureisoheptyl-n-hexylester, Cyclohexan-1,4-dicarbonsäure-n-octyl-n-hexylester, Cyclohexan-1,4-dicarbonsäureisooctyl-n-hexylester, Cyclohexan-1,4-dicarbonsäure-(2-ethylhexyl)-n-hexylester, Cyclohexan-1,4-dicarbonsäure-n-nonyl-n-hexylester, Cyclohexan-1,4-dicarbonsäureisononyl-n-hexylester, Cyclohexan-1,4-dicarbonsäure-(2-propylheptyl)-n-hexylester, Cyclohexan-1,4-dicarbonsäure-n-decyl-n-hexylester, Cyclohexan-1,4-dicarbonsäureisodecyl-n-hexylester, Cyclohexan-1,4-dicarbonsäure-n-undecyl-n-hexylester, Cyclohexan-1,4-dicarbonsäureisoundecyl-n-hexylester, Cyclohexan-1,4-dicarbonsäure-n-docecyl-n-hexylester, Cyclohexan-1,4-dicarbonsäureisododecyl-n-hexylester, Cyclohexan-1,4-dicarbonsäure-n-tridecyl-n-hexylester, Cyclohexan-1,4-dicarbonsäureisotridecyl-n-hexylester, Cyclohexan-1,4-dicarbonsäure-n-heptylisohexylester, Cyclohexan-1,4-dicarbonsäureisoheptyliso-hexylester, Cyclohexan-1,4-dicarbonsäure-n-octylisohexylester, Cyclohexan-1,4-dicarbonsäureisooctylisohexylester, Cyclohexan-1,4-dicarbonsäure-(2-ethylhexyl)iso-hexylester, Cyclohexan-1,4-dicarbonsäure-n-nonylisohexylester, Cyclohexan-1,4-dicar-bonsäureisononylisohexylester, Cyclohexan-1,4-dicarbonsäure-(2-propylheptyl)iso-hexylester, Cyclohexan-1,4-dicarbonsäure-n-decylisohexylester, Cyclohexan-1,4-dicarbonsäureisodecylisohexylester, Cyclohexan-1,4-dicarbonsäure-n-undecylisohexyl-ester, Cyclohexan-1,4-dicarbonsäureisoundecylisohexylester, Cyclohexan-1,4-dicarbonsäure-n-docecylisohexylester, Cyclohexan-1,4-dicarbonsäureisododecyliso-hexylester, Cyclohexan-1,4-dicarbonsäure-n-tridecylisohexylester, Cyclohexan-1,4-dicarbonsäureisotridecylisohexylester, Cyclohexan-1,4-dicarbonsäureisoheptyl-n-heptylester, Cyclohexan-1,4-dicarbonsäure-n-octyl-n-heptylester, Cyclohexan-1,4-dicarbonsäureisooctyl-n-heptylester, Cyclohexan-1,4-dicarbonsäure-(2-ethylhexyl)-n-heptylester, Cyclohexan-1,4-dicarbonsäure-n-nonyl-n-heptylester, Cyclohexan-1,4-dicarbonsäureisononyl-n-heptylester, Cyclohexan-1,4-dicarbonsäure-(2-propylheptyl)-n-heptylester, Cyclohexan-1,4-dicarbonsäure-n-decyl-n-heptylester, Cyclohexan-1,4-dicarbonsäureisodecyl-n-heptylester, Cyclohexan-1,4-dicarbonsäure-n-undecyl-n-heptylester, Cyclohexan-1,4-dicarbonsäureisoundecyl-n-heptylester, Cyclohexan-1,4-dicarbonsäure-n-docecyl-n-heptylester, Cyclohexan-1,4-dicarbonsäureisododecyl-n-heptylester, Cyclohexan-1,4-dicarbonsäure-n-tridecyl-n-heptylester, Cyclohexan-1,4-dicarbonsäureisotridecyl-n-heptylester, Cyclohexan-1,4-dicarbonsäure-n-octylisoheptyl-ester, Cyclohexan-1,4-dicarbonsäureisooctylisoheptylester, Cyclohexan-1,4-dicar-bonsäure-(2-ethylhexyl)isoheptylester, Cyclohexan-1,4-dicarbonsäure-n-nonyliso-heptylester, Cyclohexan-1,4-dicarbonsäureisononylisoheptylester, Cyclohexan-1,4-dicarbonsäure-(2-propylheptyl)isoheptylester, Cyclohexan-1,4-dicarbonsäure-n-decyl-isoheptylester, Cyclohexan-1,4-dicarbonsäureisodecylisoheptylester, Cyclohexan-1,4-dicarbonsäure-n-undecylisoheptylester, Cyclohexan-1,4-dicarbonsäureisoundecyl-isoheptylester, Cyclohexan-1,4-dicarbonsäure-n-docecylisoheptylester, Cyclohexan-1,4-dicarbonsäureisododecylisoheptylester, Cyclohexan-1,4-dicarbonsäure-n-tridecyl-isoheptylester, Cyclohexan-1,4-dicarbonsäureisotridecylisoheptylester, Cyclohexan-1,4-dicarbonsäureisooctyl-n-octylester, Cyclohexan-1,4-dicarbonsäure-(2-ethylhexyl)-n-octylester, Cyclohexan-1,4-dicarbonsäure-n-nonyl-n-octylester, Cyclohexan-1,4-dicarbonsäureisononyl-n-octylester, Cyclohexan-1,4-dicarbonsäure-(2-propylheptyl)-n-octylester, Cyclohexan-1,4-dicarbonsäure-n-decyl-n-octylester, Cyclohexan-1,4-dicar-bonsäureisodecyl-n-octylester, Cyclohexan-1,4-dicarbonsäure-n-undecyl-n-octylester, Cyclohexan-1,4-dicarbonsäureisoundecyl-n-octylester, Cyclohexan-1,4-dicarbonsäure-n-docecyl-n-octylester, Cyclohexan-1,4-dicarbonsäureisododecyl-n-octylester, Cyclo-hexan-1,4-dicarbonsäure-n-tridecyl-n-octylester, Cyclohexan-1,4-dicarbonsäure-iso-tridecyl-n-octylester, Cyclohexan-1,4-dicarbonsäure-(2-ethylhexyl)isooctylester, Cyclohexan-1,4-dicarbonsäure-n-nonylisooctylester, Cyclohexan-1,4-dicarbonsäureisononyl-isooctylester, Cyclohexan-1,4-dicarbonsäure-(2-propylheptyl)isooctylester, Cyclo-hexan-1,4-dicarbonsäure-n-decylisooctylester, Cyclohexan-1,4-dicarbonsäure-iso-decylisooctylester, Cyclohexan-1,4-dicarbonsäure-n-undecylisooctylester, Cyclohexan-1,4-dicarbonsäureisoundecylisooctylester, Cyclohexan-1,4-dicarbonsäure-n-docecyl-isooctylester, Cyclohexan-1,4-dicarbonsäureisododecylisooctylester, Cyclohexan-1,4-dicarbonsäure-n-tridecylisooctylester, Cyclohexan-1,4-dicarbonsäureisotridecyl-isooctylester, Cyclohexan-1,4-dicarbonsäure-n-nonyl-(2-ethylhexyl)ester, Cyclohexan-1,4-dicarbonsäureisononyl-(2-ethylhexyl)ester, Cyclohexan-1,4-dicarbonsäure-(2-propylheptyl)-(2-ethylhexyl)ester, Cyclohexan-1,4-dicarbonsäure-n-decyl-(2-ethylhexyl)ester, Cyclohexan-1,4-dicarbonsäureisodecyl-(2-ethylhexyl)ester, Cyclohexan-1,4-dicarbonsäure-n-undecyl-(2-ethylhexyl)ester, Cyclohexan-1,4-dicarbon-säureisoundecyl-(2-ethylhexyl)ester, Cyclohexan-1,4-dicarbonsäure-n-docecyl-(2-ethylhexyl)ester, Cyclohexan-1,4-dicarbonsäureisododecyl-(2-ethylhexyl)ester, Cyclohexan-1,4-dicarbonsäure-n-tridecyl-(2-ethylhexyl)ester, Cyclohexan-1,4-dicarbonsäureisotridecyl-(2-ethylhexyl)ester, Cyclohexan-1,4-dicarbonsäureisononyl-n-nonylester, Cyclohexan-1,4-dicarbonsäure-(2-propylheptyl)-n-nonylester, Cyclohexan-1,4-dicarbonsäure-n-decyl-n-nonylester, Cyclohexan-1,4-dicarbonsäureisodecyl-n-nonylester, Cyclohexan-1,4-dicarbonsäure-n-undecyl-n-nonylester, Cyclohexan-1,4-dicarbonsäureisoundecyl-n-nonylester, Cyclohexan-1,4-dicarbonsäure-n-docecyl-n-nonylester, Cyclohexan-1,4-dicarbonsäureisododecyl-n-nonylester, Cyclohexan-1,4-dicarbonsäure-n-tridecyl-n-nonylester, Cyclohexan-1,4-dicarbonsäureisotridecyl-n-nonylester, Cyclohexan-1,4-dicarbonsäure-(2-propylheptyl)isononylester, Cyclohexan-1,4-dicarbonsäure-n-decylisononylester, Cyclohexan-1,4-dicarbonsäureisodecyl-isononylester, Cyclohexan-1,4-dicarbonsäure-n-undecylisononylester, Cyclohexan-1,4-dicarbonsäureisoundecylisononylester, Cyclohexan-1,4-dicarbonsäure-n-docecyliso-nonylester, Cyclohexan-1,4-dicarbonsäureisododecylisononylester, Cyclohexan-1,4-dicarbonsäure-n-tridecylisononylester, Cyclohexan-1,4-dicarbonsäureisotridecylisononylester, Cyclohexan-1,4-dicarbonsäure-n-decyl-(2-propylheptyl)ester, Cyclohexan-1,4-dicarbonsäureisodecyl-(2-propylheptyl)ester, Cyclohexan-1,4-dicarbonsäure-n-undecyl-(2-propylheptyl)ester, Cyclohexan-1,4-dicarbonsäureisoundecyl-(2-propyl-heptyl)ester, Cyclohexan-1,4-dicarbonsäure-n-docecyl-(2-propylheptyl)ester, Cyclohexan-1,4-dicarbonsäureisododecyl-(2-propylheptyl)ester, Cyclohexan-1,4-dicarbonsäure-n-tridecyl-(2-propylheptyl)ester, Cyclohexan-1,4-dicarbonsäureisotridecyl-(2-propylheptyl)ester, Cyclohexan-1,4-dicarbonsäureisodecyl-n-decylester, Cyclohexan-1,4-dicarbonsäure-n-undecyl-n-decylester, Cyclohexan-1,4-dicarbonsäureisoundecyl-n-decylester, Cyclohexan-1,4-dicarbonsäure-n-docecyl-n-decylester, Cyclohexan-1,4-dicarbonsäureisododecyl-n-decylester, Cyclohexan-1,4-dicarbonsäure-n-tridecyl-n-decylester, Cyclohexan-1,4-dicarbonsäureisotridecyl-n-decylester, Cyclohexan-1,4-dicarbonsäure-n-undecylisodecylester, Cyclohexan-1,4-dicarbonsäureisoundecylisodecylester, Cyclohexan-1,4-dicarbonsäure-n-docecylisodecylester, Cyclohexan-1,4-dicarbonsäureisododecylisodecylester, Cyclohexan-1,4-dicarbonsäure-n-tridecylisodecylester, Cyclohexan-1,4-dicarbonsäureisotridecylisodecylester, Cyclohexan-1,4-dicarbonsäureisoundecyl-n-undecylester, Cyclohexan-1,4-dicarbonsäure-n-docecyl-n-undecylester, Cyclohexan-1,4-dicarbonsäureisododecyl-n-undecylester, Cyclohexan-1,4-dicarbonsäure-n-tridecyl-n-undecylester, Cyclohexan-1,4-dicarbonsäureisotridecyl-n-undecylester, Cyclohexan-1,4-dicarbonsäure-n-docecylisoundecylester, Cyclohexan-1,4-dicarbonsäureisododecylisoundecylester, Cyclohexan-1,4-dicarbonsäure-n-tridecylisoundecylester, Cyclohexan-1,4-dicarbonsäureisotridecylisoundecylester, Cyclohexan-1,4-dicarbonsäureisododecyl-n-dodecylester, Cyclohexan-1,4-dicarbonsäure-n-tridecyl-n-dodecylester, Cyclohexan-1,4-dicarbonsäureisotridecyl-n-dodecylester, Cyclohexan-1,4-dicarbonsäure-n-tridecylisododecylester, Cyclohexan-1,4-dicarbonsäureisotridecylisododecylester, Cyclohexan-1,4-dicarbonsäureisotridecyl-n-tridecylester, Cyclohexan-1,4-dicarbonsäuremethylcyclohexylester, Cyclohexan-1,4-dicarbonsäureethylcyclohexylester, Cyclohexan-1,4-dicarbonsäure-n-propylcyclohexylester, Cyclohexan-1,4-dicarbonsäureisopropylcyclohexylester, Cyclohexan-1,4-dicarbonsäure-n-butylcyclohexylester, Cyclohexan-1,4-dicarbonsäure-tert-butylcyclohexylester, Cyclohexan-1,4-dicarbonsäureisobutylcyclohexylester, Cyclohexan-1,4-dicarbonsäureglycolcyclohexylester, Cyclohexan-1,4-dicarbonsäure-n-hexylcyclohexylester, Cyclohexan-1,4-dicarbonsäureisohexylcyclohexylester, Cyclohexan-1,4-dicarbonsäure-n-heptylcyclohexylester, Cyclohexan-1,4-dicarbonsäureisoheptylcyclohexylester, Cyclohexan-1,4-dicarbonsäure-n-octylcyclohexylester, Cyclohexan-1,4-dicarbonsäureisooctylcyclohexylester, Cyclohexan-1,4-dicarbonsäure-(2-ethylhexyl)cyclohexylester, Cyclohexan-1,4-dicarbonsäure-n-nonylcyclohexylester, Cyclohexan-1,4-dicarbonsäureisononylcyclohexylester, Cyclohexan-1,4-dicarbonsäure-(2-propylheptyl)cyclohexylester, Cyclohexan-1,4-dicarbonsäure-n-decylcyclohexylester, Cyclohexan-1,4-dicarbonsäureisodecylcyclohexylester, Cyclohexan-1,4-dicarbonsäure-n-undecylcyclohexylester, Cyclohexan-1,4-dicarbonsäureisoundecylcyclohexylester, Cyclohexan-1,4-dicarbonsäure-n-docecylcyclohexylester, Cyclohexan-1,4-dicarbonsäureisododecylcyclohexylester, Cyclohexan-1,4-dicarbonsäure-n-tridecylcyclohexylester, Cyclohexan-1,4-dicarbonsäureisotridecylcyclohexylester, Cyclohexan-1,4-dicarbonsäuremethylisopentylester, Cyclohexan-1,4-dicarbonsäureethylisopentylester, Cyclohexan-1,4-dicarbonsäure-n-propylisopentylester, Cyclohexan-1,4-dicarbonsäureisopropylisopentylester, Cyclohexan-1,4-dicarbonsäure-n-butylisopentylester, Cyclohexan-1,4-dicarbonsäure-tert-butylisopentylester, Cyclohexan-1,4-dicarbonsäureisobutylisopentyl-ester, Cyclohexan-1,4-dicarbonsäureglycolisopentylester, Cyclohexan-1,4-dicarbonsäure-n-hexylisopentylester, Cyclohexan-1,4-dicarbonsäureisohexylisopentylester, Cyclohexan-1,4-dicarbonsäure-n-heptylisopentylester, Cyclohexan-1,4-dicarbonsäureisoheptylisopentylester, Cyclohexan-1,4-dicarbonsäure-n-octylisopentylester, Cyclohexan-1,4-dicarbonsäureisooctylisopentylester, Cyclohexan-1,4-dicarbonsäure-(2-ethylhexyl)isopentylester, Cyclohexan-1,4-dicarbonsäure-n-nonylisopentylester, Cyclohexan-1,4-dicarbonsäureisononylisopentylester, Cyclohexan-1,4-dicarbonsäure-(2-propylheptyl)isopentylester, Cyclohexan-1,4-dicarbonsäure-n-decylisopentylester, Cyclohexan-1,4-dicarbonsäureisodecylisopentylester, Cyclohexan-1,4-dicarbonsäuren-undecylisopentylester, Cyclohexan-1,4-dicarbonsäureisoundecylisopentylester, Cyclohexan-1,4-dicarbonsäure-n-docecylisopentylester, Cyclohexan-1,4-dicarbonsäureisododecylisopentylester, Cyclohexan-1,4-dicarbonsäure-n-tridecylisopentylester, Cyclohexan-1,4-dicarbonsäureisotridecylisopentylester, Cyclohexan-1,4-dicarbonsäuremethyl-n-pentylester, Cyclohexan-1,4-dicarbonsäureethyl-n-pentylester, Cyclohexan-1,4-dicarbonsäure-n-propyl-n-pentylester, Cyclohexan-1,4-dicarbonsäureisopropyl-n-pentylester, Cyclohexan-1,4-dicarbonsäure-n-butyl-n-pentylester, Cyclohexan-1,4-dicarbonsäure-tert-butyl-n-pentylester, Cyclohexan-1,4-dicarbonsäureisobutyl-n-pentylester, Cyclohexan-1,4-dicarbonsäureglycol-n-pentylester, Cyclohexan-1,4-dicarbonsäure-n-hexyl-n-pentylester, Cyclohexan-1,4-dicarbonsäureisohexyl-n-pentylester, Cyclohexan-1,4-dicarbonsäure-n-heptyl-n-pentylester, Cyclohexan-1,4-dicarbonsäureisoheptyl-n-pentylester, Cyclohexan-1,4-dicarbonsäure-n-octyl-n-pentyl-ester, Cyclohexan-1,4-dicarbonsäureisooctyl-n-pentylester, Cyclohexan-1,4-dicarbonsäure-(2-ethylhexyl)-n-pentylester, Cyclohexan-1,4-dicarbonsäure-n-nonyl-n-pentyl-ester, Cyclohexan-1,4-dicarbonsäureisononyl-n-pentylester, Cyclohexan-1,4-dicarbonsäure-(2-propylheptyl)-n-pentylester, Cyclohexan-1,4-dicarbonsäure-n-decyl-n-pentylester, Cyclohexan-1,4-dicarbonsäureisodecyl-n-pentylester, Cyclohexan-1,4-dicarbonsäure-n-undecyl-n-pentylester, Cyclohexan-1,4-dicarbonsäureisoundecyl-n-pentylester, Cyclohexan-1,4-dicarbonsäure-n-docecyl-n-pentylester, Cyclohexan-1,4-dicarbonsäureisododecyl-n-pentylester, Cyclohexan-1,4-dicarbonsäure-n-tridecyl-n-pentylester, Cyclohexan-1,4-dicarbonsäureisotridecyl-n-pentylester;
Cyclohexan-1,3-dicarbonsäurealkylester, wie z.B. Cyclohexan-1,3-dicarbonsäuremonomethylester, Cyclohexan-1,3-dicarbonsäuredimethylester, Cyclohexan-1,3-dicarbonsäurediethylester, Cyclohexan-1,3-dicarbonsäuredi-n-propylester, Cyclohexan-1,3-dicarbonsäuredi-n-butylester, Cyclohexan-1,3-dicarbonsäuredi-tert.-butylester, Cyclohexan-1,3-dicarbonsäurediisobutylester, Cyclohexan-1,3-dicarbonsäuremonoglykolester, Cyclohexan-1,3-dicarbonsäurediglykolester, Cyclohexan-1,3-dicarbonsäuredi-n-octylester, Cyclohexan-1,3-dicarbonsäurediisooctylester, Cyclohexan-1,3-dicarbonsäuredi-2-ethylhexylester, Cyclohexan-1,3-dicarbonsäuredi-n-nonylester, Cyclohexan-1,3-dicarbonsäurediisononylester, Cyclohexan-1,3-dicarbonsäuredi-n-decylester, Cyclohexan-1,3-dicarbonsäurediisodecylester, Cyclohexan-1,3-dicarbonsäuredi-n-undecylester, Cyclohexan-1,3-dicarbonsäurediisododecylester, Cyclohexan-1,3-dicarbonsäuredi-n-octadecylester, Cyclohexan-1,3-dicarbonsäurediisooctadecylester, Cyclohexan-1,3-dicarbonsäuredi-n-eicosylester, Cyclohexan-1,3-dicarbonsäuremonocyclohexylester, Cyclohexan-1,3-dicarbonsäuredicyclohexylester. Cyclohexan-1,3-dicarbonsäurediisopropylester, Cyclohexan-1,3-dicarbonsäuredi-n-hexylester, Cyclohexan-1,3-dicarbonsäurediisohexylester, Cyclohexan-1,3-dicarbonsäuredi-n-heptylester, Cyclohexan-1,3-dicarbonsäurediisoheptylester, Cyclohexan-1,3-dicarbonsäuredi-2-propylheptylester, Cyclohexan-1,3-dicarbonsäurediisoundecylester, Cyclohexan-1,3-dicarbonsäuredi-n-dodecylester, Cyclohexan-1,2-dicarbonsäuredi-n-tridecylester, Cyclohexan-1,3-dicarbonsäurediisotridecylester, Cyclohexan-1,3-dicarbonsäuredi-n-pentylester, Cyclohexan-1,3-dicarbonsäurediisopentylester; Cyclohexan-1,2,4-tricarbonsäurealkylester, wie z.B. Cyclohexan-1,2,4-tricarbonsäuremonomethylester, Cyclohexan-1,2,4-tricarbonsäuredimethylester, Cyclohexan-1,2,4-tricarbonsäurediethylester, Cyclohexan-1,2,4-tricarbonsäuredi-n-propylester, Cyclohexan-1,2,4-tricarbonsäurediisopropylester, Cyclohexan-1,2,4-tricarbonsäuredi-n-butylester, Cyclohexan-1,2,4-tricarbonsäuredi-tert-butylester, Cyclohexan-1,2,4-tricarbonsäurediisobutylester, Cyclohexan-1,2,4-tricarbonsäuremonoglykolester, Cyclohexan-1,2,4-tricarbonsäurediglykolester, Cyclohexan-1,2,4-tricarbonsäuredi-n-octyl-ester, Cyclohexan-1,2,4-tricarbonsäurediisooctylester, Cyclohexan-1,2,4-tricarbonsäuredi-2-ethylhexylester, Cyclohexan-1,2,4-tricarbonsäuredi-n-nonylester, Cyclo-hexan-1,2,4-tricarbonsäurediisononylester, Cyclohexan-1,2,4-tricarbonsäuredi-n-decylester, Cyclohexan-1,2,4-tricarbonsäurediisodecylester, Cyclohexan-1,2,4-tricarbonsäuredi-n-undecylester, Cyclohexan-1,2,4-tricarbonsäurediisododecylester, Cyclohexan-1,2,4-tricarbonsäuredi-n-octadecyl-ester, Cyclohexan-1,2,4-tricarbonsäurediisooctadecylester, Cyclohexan-1,2,4-tricarbonsäuredi-n-eicosylester, Cyclohexan-1,2,4-tricarbonsäuremonocyclohexylester, Cyclohexan-1,2,4-tricarbonsäuredicyclohexylester sowie Cyclohexan-1,2,4-tricarbonsäuretrimethylester, Cyclohexan-1,2,4-tricarbonsäuretriethylester, Cyclohexan-1,2,4-tricarbonsäuretri-n-propylester, Cyclohexan-1,2,4-tricarbonsäuretri-n-butylester, Cyclohexan-1,2,4-tricarbonsäuretri-tert-butylester, Cyclohexan-1,2,4-tricarbonsäuretriisobutylester, Cyclohexan-1,2,4-tricarbonsäuretriglykolester, Cyclohexan-1,2,4-tricarbonsäuretri-n-octylester, Cyclohexan-1,2,4-tricarbonsäuretriisooctylester, Cyclohexan-1,2,4-tricarbonsäuretri-2-ethylhexylester, Cyclohexan-1,2,4-tricarbonsäuretri-n-nonylester, Cyclohexan-1,2,4-tricarbonsäuretriisononylester, Cyclohexan-1,2,4-tricarbonsäuretri-n-decylester, Cyclohexan-1,2,4-tricarbonsäuretriisododecylester, Cyclohexan-1,2,4-tricarbonsäuretri-n-undecylester, Cyclohexan-1,2,4-tricarbonsäuretriisododecylester, Cyclohexan-1,2,4-tricarbonsäuretrin-octadecylester, Cyclohexan-1,2,4-tricarbonsäuretriisooctadecylester, Cyclohexan-1,2,4-tricarbonsäuretri-n-eicosylester, Cyclohexan-1,2,4-tricarbonsäuretricyclohexyl-ester, Cyclohexan-1,2,4-tricarbonsäuredi-n-hexylester, Cyclohexan-1,2,4-tricarbonsäurediisohexylester, Cyclohexan-1,2,4-tricarbonsäuretri-n-hexylester, Cyclohexan-1,2,4-tricarbonsäuretriisohexylester, Cyclohexan-1,2,4-tricarbonsäuredi-n-heptylester, Cyclohexan-1,2,4-tricarbonsäurediisoheptylester, Cyclohexan-1,2,4-tricarbonsäuretri-n-heptylester, Cyclohexan-1,2,4-tricarbonsäuretriisoheptylester, Cyclohexan-1,2,4-tricarbonsäuredi-n-pentylester, Cyclohexan-1,2,4-tricarbonsäurediisopentylester, Cyclohexan-1,2,4-tricarbonsäuretri-n-pentylester, Cyclohexan-1,2,4-tricarbonsäuretriisopentylester, Cyclohexan-1,2,4-tricarbonsäuredi-n-tridecylester, Cyclohexan-1,2,4-tricarbonsäurediisotridecylester, Cyclohexan-1,2,4-tricarbonsäuretri-n-tridecylester, Cyclohexan-1,2,4-tricarbonsäuretriisotridecylester, Cyclohexan-1,2,4-tricarbonsäuredin-dodecylester, Cyclohexan-1,2,4-tricarbonsäurediisoundecylester, Cyclohexan-1,2,4tricarbonsäuretri-n-dodecylester, Cyclohexan-1,2,4-tricarbonsäuretriisoundecylester, Cyclohexan-1,2,4-tricarbonsäuretriisopropylester. Cyclohexan-1,3,5-tricarbonsäurealkylester, wie z.B. Cyclohexan-1,3,5-tricarbonsäuremonomethylester, Cyclohexan-1,3,5-tricarbonsäuredimethylester, Cyclohexan-1,3,5-tricarbonsäurediethylester, Cyclohexan-1,3,5-tricarbonsäuredi-n-propylester, Cyclohexan-1,3,5-tricarbonsäuredi-n-butylester, Cyclohexan-1,3,5-tricarbonsäuredi-tert-butylester, Cyclohexan-1,3,5-tricarbonsäurediisobutylester, Cyclohexan-1,3,5-tricarbonsäuremonoglykolester, Cyclohexan-1,3,5-tricarbonsäurediglykolester, Cyclohexan-1,3,5-tricarbonsäuredi-n-octylester, Cyclohexan-1,3,5-tricarbonsäurediisooctylester, Cyclohexan-1,3,5-tricarbonsäuredi-2-ethylhexylester, Cyclohexan1,3,5-tricarbonsäuredi-n-nonylester, Cyclohexan-1,3,5-tricarbonsäurediisononylester, Cyclohexan-1,3,5-tricarbonsäuredi-n-decylester, Cyclohexan-1,3,5-tricarbonsäurediisodecylester, Cyclohexan-1,3,5-tricarbonsäuredi-n-undecylester, Cyclohexan-1,3,5-tricarbonsäurediisododecylester, Cyclohexan-1,3,5-tricarbonsäuredi-n-octadecylester, Cyclohexan-1,3,5-tricarbonsäurediisooctadecylester, Cyclohexan-1,3,5-tricarbonsäuredi-n-eicosylester, Cyclohexan-1,3,5-tricarbonsäuremonocyclohexylester, Cyclohexan-1,3,5-tricarbonsäuredicyclohexylester, sowie Cyclohexan1,3,5-tricarbonsäuretrimethylester, Cyclohexan-1,3,5-tricarbonsäuretriethylester, Cyclohexan-1,3,5-tricarbonsäuretri-n-propylester, Cyclohexan-1,3,5-tricarbonsäuretri-n-butylester, Cyclohexan-1,3,5-tricarbonsäuretri-tert-butylester, Cyclohexan-1,3,5-tricarbonsäuretriisobutylester, Cyclohexan-1,3,5-tricarbonsäuretriglykolester, Cyclo-hexan-1,3,5-tricarbonsäuretri-n-octylester, Cyclohexan-1,3,5-tricarbonsäuretriisooctyl-ester, Cyclohexan-1,3,5-tricarbonsäuretri-2-ethylhexylester, Cyclohexan-1,3,5-tricarbonsäuretri-n-nonylester, Cyclohexan-1,3,5-tricarbonsäuretriisononylester, Cyclohexan-1,3,5-tricarbonsäuretri-n-decylester, Cyclohexan-1,3,5-tricarbonsäuretriisododecylester, Cyclohexan-1,3,5-tricarbonsäuretri-n-undecylester, Cyclohexan-1,3,5-tricarbonsäuretriisododecylester, Cyclohexan-1,3,5-tricarbonsäuretri-n-octadecylester, Cyclohexan-1,3,5-tricarbonsäuretriisooctadecylester, Cyclohexan-1,3,5-tricarbonsäure-tri-n-eicosylester, Cyclohexan-1,3,5-tricarbonsäuretricyclohexylester, Cyclohexan-1,3,5-tricarbonsäuredi-n-hexylester, Cyclohexan-1,3,5-tricarbonsäurediisohexylester, Cyclohexan-1,3,5-tricarbonsäuretri-n-hexylester, Cyclohexan-1,3,5-tricarbonsäuretriisohexylester, Cyclohexan-1,3,5-tricarbonsäuredi-n-heptylester, Cyclohexan-1,3,5-tricarbonsäurediisoheptylester, Cyclohexan-1,3,5-tricarbonsäuretri-n-heptylester, Cyclohexan-1,3,5-tricarbonsäuretriisoheptylester, Cyclohexan-1,3,5-tricarbonsäuredi-n-pentylester, Cyclohexan-1,3,5-tricarbonsäurediisopentylester, Cyclohexan-1,3,5-tricarbonsäuretri-n-pentylester, Cyclohexan-1,3,5-tricarbonsäuretriisopentylester, Cyclohexan-1,3,5-tricarbonsäuredi-n-tridecylester, Cyclohexan-1,3,5-tricarbonsäurediisotridecylester, Cyclohexan-1,3,5-tricarbonsäuretri-n-tridecylester, Cyclohexan-1,3,5-tricarbonsäuretriisotridecylester, Cyclohexan-1,3,5-tricarbonsäuredi-n-dodecylester, Cyclohexan-1,3,5-tricarbonsäurediisoundecylester, Cyclohexan-1,3,5-tricarbonsäuretrin-dodecylester, Cyclohexan-1,3,5-tricarbonsäuretriisoundecylester, Cyclohexan-1,3,5-tricarbonsäuretriisopropylester.
Cyclohexan-1,2,3-tricarbonsäurealkylester, wie z.B. Cyclohexan-1,2,3-tricarbonsäuremonomethylester, Cyclohexan-1,2,3-tricarbonsäuredimethylester, Cyclohexan-1,2,3-tricarbonsäurediethylester, Cyclohexan-1,2,3-tricarbonsäuredi-n-propylester, Cyclohexan-1,2,3-tricarbonsäuredi-n-butylester, Cyclohexan-1,2,3-tricarbonsäuredi-tert-butylester, Cyclohexan-1,2,3-tricarbonsäurediisobutylester, Cyclohexan-1,2,3-tricarbonsäuremonoglykolester, Cyclohexan-1,2,3-tricarbonsäurediglykolester, Cyclohexan-1,2,3-tricarbonsäuredi-n-octylester, Cyclohexan-1,2,3-tricarbonsäurediisooctylester, Cyclohexan-1,2,3-tricarbonsäuredi-2-ethylhexylester, Cyclohexan-1,2,3-tricarbonsäuredi-n-nonylester, Cyclohexan-1,2,3-tricarbonsäurediiso-nonylester, Cyclohexan-1,2,3-tricarbonsäuredi-n-decylester, Cyclohexan-1,2,3-tricarbonsäurediisodecylester, Cyclohexan-1,2,3-tricarbonsäuredi-n-undecylester, Cyclohexan-1,2,3-tricarbonsäurediisododecylester, Cyclohexan-1,2,3-tricarbonsäuredi-n-octadecylester, Cyclohexan-1,2,3-tricarbonsäurediisooctadecylester, Cyclohexan-1,2,3-tricarbonsäuredi-n-eicosylester, Cyclohexan-1,2,3-tricarbonsäuremonocyclo-hexylester, Cyclohexan-1,2,3-tricarbonsäuredicyclohexylester, sowie Cyclohexan-1,2,3-tricarbonsäuretrimethylester, Cyclohexan-1,2,3-tricarbonsäuretriethylester, Cyclo-hexan-1,2,3-tricarbonsäuretri-n-propylester, Cyclohexan-1,2,3-tricarbonsäuretri-n-butylester, Cyclohexan-1,2,3-tricarbonsäuretri-tert-butylester, Cyclohexan-1,2,3-tricarbonsäuretriisobutylester, Cyclohexan-1,2,3-tricarbonsäuretriglykolester, Cyclo-hexan-1,2,3-tricarbonsäuretri-n-octylester, Cyclohexan-1,2,3-tricarbonsäuretriisooctyl-ester, Cyclohexan-1,2,3-tricarbonsäuretri-2-ethylhexylester, Cyclohexan-1,2,3-tricarbonsäuretri-n-nonylester, Cyclohexan-1,2,3-tricarbonsäuretriisononylester, Cyclohexan-1,2,3-tricarbonsäuretri-n-decylester, Cyclohexan-1,2,3-tricarbonsäuretriisododecylester, Cyclohexan-1,2,3-tricarbonsäuretri-n-undecylester, Cyclohexan-1,2,3-tricarbonsäuretriisododecylester, Cyclohexan-1,2,3-tricarbonsäuretri-n-octadecylester, Cyclohexan-1,2,3-tricarbonsäuretriisooctadecylester, Cyclohexan-1,2,3-tricarbonsäuretri-n-eicosylester, Cyclohexan-1,2,3-tricarbonsäuretricyclohexylester, Cyclohexan-1,2,3-tricarbonsäuredi-n-hexylester, Cyclohexan-1,2,3-tricarbonsäurediisohexyl-ester, Cyclohexan-1,2,3-tricarbonsäuretri-n-hexylester, Cyclohexan-1,2,3-tricarbonsäuretriisohexylester, Cyclohexan-1,2,3-tricarbonsäuredi-n-heptylester, Cyclohexan-1,2,3-tricarbonsäurediisoheptylester, Cyclohexan-1,2,3-tricarbonsäuretri-n-heptylester, Cyclohexan-1,2,3-tricarbonsäuretriisoheptylester, Cyclohexan-1,2,3-tricarbonsäuredi-n-pentylester, Cyclohexan-1,2,3-tricarbonsäurediisopentylester, Cyclohexan-1,2,3-tricarbonsäuretri-n-pentylester, Cyclohexan-1,2,3-tricarbonsäuretriisopentylester, Cyclohexan-1,2,3-tricarbonsäuredi-n-tridecylester, Cyclohexan-1,2,3-tricarbonsäurediisotridecylester, Cyclohexan-1,2,3-tricarbonsäuretri-n-tridecylester, Cyclohexan-1,2,3-tricarbonsäuretriisotridecylester, Cyclohexan-1,2,3-tricarbonsäuredin-dodecylester, Cyclohexan-1,2,3-tricarbonsäurediisoundecylester, Cyclohexan-1,2,3-tricarbonsäuretri-n-dodecylester, Cyclohexan-1,2,3-tricarbonsäuretriisoundecylester, Cyclohexan-1,2,3-tricarbonsäuretriisopropylester.
Cyclohexan-1,2,4,5-tetracarbonsäurealkylester, wie z.B. Cyclohexan-1,2,4,5-tetracarbonsäuremonomethylester, Cyclohexan-1,2,4,5-tetracarbonsäuredimethylester, Cyclohexan-1,2,4,5-tetracarbonsäurediethylester, Cyclohexan-1,2,4,5-tetracarbonsäuredi-n-propylester, Cyclohexan-1,2,4,5-tetracarbonsäuredi-n-butylester, Cyclohexan-1,2,4,5-tetracarbonsäuredi-tert.-butylester, Cyclohexan-1,2,4,5-tetracarbonsäurediisobutylester, Cyclohexan-1,2,4,5-tetracarbonsäuremonoglykolester, Cyclohexan-1,2,4,5-tetracarbonsäurediglykolester, Cyclohexan-1,2,4,5-tetracarbonsäuredi-n-octylester, Cyclohexan-1,2,4,5-tetracarbonsäurediisooctylester, Cyclohexan-1,2,4,5-tetracarbonsäuredi-2-ethylhexylester, Cyclohexan-1,2,4,5-tetracarbonsäuredin-nonylester, Cyclohexan-1,2,4,5-tetracarbonsäurediisononylester, Cyclohexan-1,2,4,5-tetracarbonsäuredi-n-decylester, Cyclohexan-1,2,4,5-tetracarbonsäurediisodecylester, Cyclohexan-1,2,4,5-tetracarbonsäuredi-n-undecylester, Cyclohexan-1,2,4,5-tetracarbonsäurediisododecylester, Cyclohexan-1,2,4,5-tetracarbonsäuredi-n-octadecylester, Cyclohexan-1,2,4,5-tetracarbonsäurediisooctadecylester, Cyclohexan-1,2,4,5-tetracarbonsäuredi-n-eicosylester, Cyclohexan-1,2,4,5-tetracarbonsäuremonocyclohexylester, Cyclohexan-1,2,4,5-tetracarbonsäuretrimethylester, Cyclohexan-1,2,4,5-tetracarbonsäuretriethylester, Cyclohexan-1,2,4,5-tetracarbonsäuretri-n-propylester, Cyclohexan-1,2,4,5-tetracarbonsäuretri-n-butylester, Cyclohexan-1,2,4,5-tetracarbonsäuretri-tert-butylester, Cyclohexan-1,2,4,5-tetracarbonsäuretriisobutylester, Cyclohexan-1,2,4,5-tetracarbonsäuretriglykolester, Cyclohexan-1,2,4,5-tetracarbonsäuretri-n-octylester, Cyclohexan-1,2,4,5-tetracarbonsäuretriisooctylester, Cyclohexan-1,2,4,5-tetracarbonsäuretri-2-ethylhexylester, Cyclohexan-1,2,4,5-tetracarbonsäuretri-n-nonylester, Cyclohexan-1,2,4,5-tetracarbonsäuretriisononylester, Cyclohexan-1,2,4,5-tetracarbonsäuretri-n-decylester Cyclohexan-1,2,4,5-tetracarbonsäuretriisododecylester, Cyclohexan-1,2,4,5-tetracarbonsäuretri-n-undecylester, Cyclohexan-1,2,4,5-tetracarbonsäuretriisododecylester, Cyclohexan-1,2,4,5-tetracarbonsäuretri-n-octadecylester, Cyclohexan-1,2,4,5-tetracarbonsäuretriisooctadecylester, Cyclohexan-1,2,4,5-tetracarbonsäuretri-n-eicosylester, Cyclohexan-1,2,4,5-tetracarbonsäuretricyclohexylester, sowie Cyclohexan-1,2,4,5-tetracarbonsäuretetramethylester, Cyclohexan-1,2,4,5-tetracarbonsäuretetraethylester, Cyclohexan-1,2,4,5-tetracarbonsäuretetra-n-propylester, Cyclohexan-1,2,4,5-tetracarbonsäuretetra-n-butylester, Cyclohexan-1,2,4,5-tetracarbonsäuretetra-tert-butylester, Cyclohexan-1,2,4,5-tetracarbonsäuretetraisobutylester, Cyclohexan-1,2,4,5-tetracarbonsäuretetraglykolester, Cyclohexan-1,2,4,5-tetracarbonsäuretetra-n-octylester, Cyclohexan-1,2,4,5-tetracarbonsäuretetraisooctylester, Cyclohexan-1,2,4,5-tetracarbonsäuretetra-2-ethylhexylester, Cyclohexan-1,2,4,5-tetracarbonsäuretetra-n-nonylester, Cyclohexan-1,2,4,5-tetracarbonsäuretetraisononylester, Cyclohexan-1,2,4,5-tetracarbonsäuretetra-n-decylester, Cyclohexan-1,2,4,5-tetracarbonsäuretetra-isodecylester, Cyclohexan-1,2,4,5-tetracarbonsäuretetraisododecylester, Cyclohexan-1,2,4,5-tetracarbonsäuretetra-n-undecylester, Cyclohexan-1,2,4,5-tetracarbonsäuretetra-n-octadecylester, Cyclohexan-1,2,4,5-tetracarbonsäuretetraisooctadecylester, Cyclohexan-1,2,4,5-tetracarbonsäuretetra-n-eicosylester, Cyclohexan-1,2,4,5-tetracarbonsäuretetracyclohexylester, Cyclohexan-1,2,4,5-tetracarbonsäuredi-n-hexylester, Cyclohexan-1,2,4,5-tetracarbonsäurediisohexylester, Cyclohexan-1,2,4,5-tetracarbonsäuretri-n-hexylester, Cyclohexan-1,2,4,5-tetracarbonsäuretriisohexylester, Cyclohexan-1,2,4,5-tetracarbonsäuredi-n-heptylester, Cyclohexan-1,2,4,5-tetracarbonsäurediisoheptylester, Cyclohexan-1,2,4,5-tetracarbonsäuretri-n-heptylester, Cyclohexan-1,2,4,5-tetracarbonsäuretriisoheptylester, Cyclohexan-1,2,4,5-tetracarbonsäuredi-n-pentylester, Cyclohexan-1,2,4,5-tetracarbonsäurediisopentylester, Cyclohexan-1,2,4,5-tetracarbonsäure-tri-n-pentylester, Cyclohexan-1,2,4,5-tetracarbonsäuretriisopentylester, Cyclohexan-1,2,4,5-tetracarbonsäuredi-n-tridecylester, Cyclohexan-1,2,4,5-tetracarbonsäurediisotridecylester, Cyclohexan-1,2,4,5-tetracarbonsäuretri-n-tridecylester, Cyclohexan-1,2,4,5-tetracarbonsäuretriisotridecylester, Cyclohexan-1,2,4,5-tetracarbonsäuredi-n-dodecylester, Cyclohexan-1,2,4,5-tetracarbonsäurediisoundecylester, Cyclohexan-1,2,4,5-tetracarbonsäuretri-n-dodecylester, Cyclohexan-1,2,4,5-tetracarbonsäuretriisoundecylester, Cyclohexan-1,2,4,5-tetracarbonsäuretriisopropylester, Cyclohexan-1,2,4,5-tetracarbonsäuretetra-n-hexylester, Cyclohexan-1,2,4,5-tetracarbonsäuretetraisohexylester, Cyclohexan-1,2,4,5-tetracarbonsäuretetra-n-heptylester, Cyclohexan-1,2,4,5-tetracarbonsäuretetraisoheptylester, Cyclohexan-1,2,4,5-tetracarbonsäuretetra-n-pentylester, Cyclohexan-1,2,4,5-tetracarbonsäuretetraisopentylester, Cyclohexan-1,2,4,5-tetracarbonsäuretetra-n-tridecylester, Cyclohexan-1,2,4,5-tetracarbonsäuretetraisotridecylester, Cyclohexan-1,2,4,5-tetracarbonsäuretetra-n-dodecylester, Cyclohexan-1,2,4,5-tetracarbonsäuretetraisoundecylester, Cyclohexan-1,2,4,5-tetracarbonsäuretetraisopropylester.

Im Sinne der vorliegenden Erfindung geeignet sind darüber hinaus auch die in der WO 1999/32427 offenbarten, nachfolgend aufgelisteten Cyclohexan-1,2-dicarbonsäure-ester:
Gemischte Ester der Cyclohexan-1,2-dicarbonsäure mit C1- bis C12-Alkoholen;
Cyclohexan-1,2-dicarbonsäuredi(isopentyl)ester, erhältlich durch Hydrierung von Di(isopentyl)phthalat mit der Chemical Abstracts Registry Nummer (im folgenden: CAS Nr.) 84777-06-0;
Cyclohexan-1,2-dicarbonsäuredi(isoheptyl)ester, erhältlich durch Hydrierung von Di(isoheptyl)phthalat mit der CAS Nr. 71888-89-6;
Cyclohexan-1,2-dicarbonsäuredi(isononyl)ester, erhältlich durch Hydrierung eines Di(isononyl)phthalats mit der CAS Nr. 68515-48-0;
Cyclohexan-1,2-dicarbonsäuredi(isononyl)ester, erhältlich durch Hydrierung eines Di(isononyl)phthalats mit der CAS Nr. 28553-12-0, basierend auf n-Buten;
Cyclohexan-1,2-dicarbonsäuredi(isononyl)ester, erhältlich durch Hydrierung eines Di(isononyl)phthalats mit der CAS Nr. 28553-12-0 basierend auf Isobuten;
ein 1,2-Di-C9-Ester der Cyclohexandicarbonsäure, erhältlich durch Hydrierung eines Di(nonyl)phthalats mit der CAS Nr. 68515-46-8;
ein Cyclohexan-1,2-dicarbonsäuredi(isodecyl)ester erhältlich durch Hydrierung eines Di(isodecyl)phthalats mit der CAS Nr. 68515-49-1;
ein 1,2-Di-C7-11-Ester der Cyclohexandicarbonsäure, erhältlich durch Hydrierung des entsprechenden Phthalsäureesters mit der CAS Nr. 68515-42-4;
ein 1,2-Di-C7-11-Ester der Cyclohexandicarbonsäure, erhältlich durch Hydrierung der Di-C7-11-Phthalate mit folgenden CAS Nr. 111381-89-6, 11138190-9, 11138191-0, 68515-44-6, 68515-45-7 und 3648-20-2;
ein 1,2-Di-C9-11-Ester der Cyclohexandicarbonsäure, erhältlich durch Hydrierung eines Di-C9-11-Phthalats mit der CAS Nr. 98515-43-6;
ein 1,2-Di(isodecyl)cyclohexandicarbonsäureester, erhältlich durch Hydrierung eines Di(isodecyl)phthalats, das hauptsächlich aus Di-(2-propylheptyl)phthalt besteht;
ein 1,2-Di-C7-9-Cyclohexandicarbonsäureester, erhältlich durch Hydrierung des entsprechenden Phthalsäureesters der verzweigtkettige oder lineare C7-9-Alkylestergruppen aufweist; entsprechende beispielsweise als Ausgangsprodukte verwendbare Phthalate haben die folgende CAS Nr.:
   Di-C7,9-Alkylphthalat mit der CAS Nr. 111 381-89-6;
   Di-C7-Alkylphthalat mit der CAS Nr. 68515-44-6; und
   Di-C9-Alkylphthalat mit der CAS Nr. 68515-45-7.

Erfindungsgemäß sind auch Hydrierprodukte von Phthalsäure-Mischestern mit C10-und C12-Alkoholen verwendbar wie sie in der DE-A 100 32 580.7 beschrieben sind. Des weiteren sind auch die Hydrierungsprodukte der kommerziell erhältlichen Benzolcarbonsäureester mit den Handelsnamen Jayflex DINP (CAS Nr. 68515-48-0), Jayflex DIDP (CAS Nr. 68515-49-1), Palatinol 9-P, Vestinol 9 (CAS Nr. 28553-12-0), TOTM-I (CAS Nr. 3319-31-1), Linplast 68-TM, Palatinol N (CAS Nr. 28553-12-0), Jayflex DHP (CAS Nr. 68515-50-4), Jayflex DIOP (CAS Nr. 27554-26-3), Jayflex UDP (CAS Nr. 68515-47-9), Jayflex DIUP (CAS Nr. 85507-79-5), Jayflex DTDP (CAS Nr. 68515-47-9), Jayflex L9P (CAS Nr. 68515-45-7), Jayflex L911 P (CAS Nr. 68515-43-5), Jayflex L11P (CAS Nr. 3648-20-2), Witamol 110 (CAS Nr. 90193-91-2), Witamol 118 (Di-n-C8-C10-alkylphthalat), Unimoll BB (CAS Nr. 85-68-7), Linplast 1012 BP (CAS Nr. 90193-92-3), Linplast 13 XP (CAS Nr. 27253-26-5), Linplast 610 P (CAS Nr. 68515-51-5), Linplast 68 FP (CAS Nr. 68648-93-1) und Linplast 812 HP (CAS Nr. 70693-30-0), Palatinol AH (CAS Nr. 117-81-7), Palatinol 711 (CAS Nr. 68515-42-4), Palatinol 911 (CAS Nr. 68515-43-5), Palatinol 11 (CAS Nr. 3648-20-2), Palatinol Z (CAS Nr. 26761-40-0) und Palatinol DIPP (CAS Nr. 84777-06-0) als geeignet im Sinne der vorliegenden Erfindung zu bewerten.

Bevorzugt sind Dialkylester der 1,2 Cyclohexandicarbonsäure. Als Estergruppe R bevorzugt sind geradkettige oder verzweigte Alkylgruppen mit 1 bis 12 C-Atomen oder Gemische der genannten Alkylgruppen. Als Estergruppe R besonders bevorzugt sind geradkettige oder verzweigte Alkylgruppen mit 6 bis 12 C-Atomen oder Gemische der genannten Alkylgruppen. Als Estergruppe R ganz besonders bevorzugt sind Alkylgruppen mit 9 C-Atomen.

In einer bevorzugten Ausgestaltung der Erfindung handelt es sich bei dem Cyclohexancarbonsäureester (I) um mindestens einen Cyclohexandicarbonsäuredialkylester.

In einer weiteren besonders bevorzugten Ausführungsform der Erfindung handelt es sich bei dem Cyclohexancarbonsäureester (I) um mindestens einen 1,2-Cyclohexandicarbonsäurediisononylester.

Der eingesetzte 1,2-Cyclohexan-dicarbonsäure-diisononylester kann bzgl. der AlkoholKomponente unter Verwendung folgender Messungen näher charakterisiert werden:

| | | |
|---|---|---|
| Methode: | Kapillar GC | |
| Apparatur: | Kapillar Gaschromatograph mit Autosampler, Split/Splitless-Injektionssystem und Flammenionisationsdetektor (FID) | |
| Chemikalien: | - MSTFA (N-Methyl-N-trimethylsilyltrifluoracetamid) | |
| | - Vergleiche zur Bestimmung der Retentionszeiten | |
| Probenvorbereitung: | 3 Tropfen der Probe werden in 1 ml MSTFA und für 60 Minuten bei 80 °C gehalten | |
| GC Bedingungen: | Kapillarsäule: | Ultra-1 |
| | - Länge: | 50 m |
| | - Innendurchmesser: | 0,25 mm |
| | - Filmdicke: | 0,1 Mikrometer |
| | Trägergas: | Helium |
| | Säulenvordruck: | 200 psi constant |
| | Split: | 80 ml/min |
| | Septumspülung: | 3 ml/min |
| | Ofentemperatur: | 120 °C, 25 min isotherm |
| | Injektortemperatur: | 250 °C |
| | Detektortemperatur: | 250 °C (FID) |
| | Injektionsvolumen: | 0,5 Mikroliter |

Die Vorgehensweise bei der Berechnung des Isoindex wird in der folgenden Tabelle ersichtlich:

| Komponente | Name | Verzweigung | Anteil in FI.% | Index |
|---|---|---|---|---|
| 1 | 2-Ethyl-2-methylhexanol-1 | 2 | 1,00 | 0,0200 |
| 2 | 2-Ethyl-4-methylhexanol-1 | 2 | 1,00 | 0,0200 |
| 3 | 2-Ethyl-4-methylhexanol-1 | 2 | 1,00 | 0,0200 |
| 4 | 2-Propyl-3-methylpentanol-1 | 2 | 1,00 | 0,0200 |
| 5 | 2-Propyl-hexanol-1 | 1 | 1,00 | 0,0100 |
| 6 | 2,5-Dimethylheptanol-1 | 2 | 1,00 | 0,0200 |
| 7 | 2,3-Dimethylheptanol-1 | 2 | 1,00 | 0,0200 |
| 8 | 2,3,4-Trimethylhexanol-1 | 3 | 1,00 | 0,0300 |
| 9 | 2-Ethylheptanol-1 | 1 | 1,00 | 0,0100 |
| 10 | 3-Ethyl-4-methylhexanol-1 | 2 | 82,00 | 1,6400 |
| 11 | 3-Ethylheptanol-1 | 1 | 1,00 | 0,0100 |
| 12 | 2-Methyloktanol-1 | 1 | 1,00 | 0,0100 |
| 13 | 4,5-Dimethylheptanol-1 | 2 | 1,00 | 0,0200 |
| 14 | 4,5-Dimethylheptanol-1 | 2 | 1,00 | 0,0200 |
| 15 | 4-Methyloktanol-1 | 1 | 1,00 | 0,0100 |
| 15a | 7-Methyloktanol-1 | 1 | 1,00 | 0,0000 |
| 16 | 6-Methyloktanol-1 | 1 | 1,00 | 0,0100 |
| 17 | Nonanol-1 | 0 | 1,00 | 0,0000 |
| 18 | Unbekannte Komponente | 2 | 1,00 | 0,0200 |
| | | | Isoindex: | 1,9200 |

Die C₅- bis C₁₃-Alkohole werden gemäß den vorstehend genannten Verfahren hergestellt. Zur Herstellung von Cyclohexancarbonsäureestern, worin R 9 ist, wird besonders bevorzugt ein Nonanol-Gemisch eingesetzt, worin 0 bis 20 Gew.-%, bevorzugt 0,5 bis 18 Gew.-%, besonders bevorzugt 6 bis 16 Gew.-% des Nonanol-Gemisches keine Verzweigung aufweisen, 5 bis 90 Gew.-%, bevorzugt 10 bis 80 Gew.-%, besonders bevorzugt 45 bis 75 Gew.-%, eine Verzweigung, 5 bis 70 Gew.-%, bevorzugt 10 bis 60 Gew.-%, besonders bevorzugt 15 bis 35 Gew.-% zwei Verzweigungen, 0 bis 10 Gew.-%, bevorzugt 0 bis 8 Gew.-%, besonders bevorzugt 0 bis 4 Gew.-% drei Verzweigungen aufweisen und 0 bis 40 Gew.-%, bevorzugt 0,1 bis 30 Gew.-%, besonders bevorzugt 0,5 bis 6,5 Gew.-%. sonstige Komponenten sind. Unter sonstigen Komponenten sind im Allgemeinen Nonanole mit mehr als drei Verzweigungen, Decanole oder Octanole zu verstehen, wobei die Summe der genannten Komponenten 100 Gew.-% ergibt.

Eine besonders bevorzugte Ausführungsform eines Nonanol-Gemisches, das zur Herstellung von bevorzugt verwendeten Cyclohexancarbonsäurederivaten eingesetzt wird, weist die folgende Zusammensetzung auf:
- 1,73 bis 3,73 Gew.-%, bevorzugt 1,93 bis 3,53 Gew.-%, besonders bevorzugt 2,23 bis 3,23 Gew.-% 3-Ethyl-6-methyl-hexanol;
- 0,38 bis 1,38 Gew.-%, bevorzugt 0,48 bis 1,28 Gew.-%, besonders bevorzugt 0,58 bis 1,18 Gew.-% 2,6 Dimethylheptanol;
- 2,78 bis 4,78 Gew.-%, bevorzugt 2,98 bis 4,58 Gew.-%, besonders bevorzugt 3,28 bis 4,28 Gew.-% 3,5-Dimethylheptanol;
- 6,30 bis 16,30 Gew.-%, bevorzugt 7,30 bis 15,30 Gew.-%, besonders bevorzugt 8,30 bis 14,30 Gew.-% 3,6-Dimethylheptanol;
- 5,74 bis 11,74 Gew.-%, bevorzugt 6,24 bis 11,24 Gew.-%, besonders bevorzugt 6,74 bis 10,74 Gew.-% 4,6-Dimethylheptanol;
- 1,64 bis 3,64 Gew.-%, bevorzugt 1,84 bis 3,44 Gew.-%, besonders bevorzugt 2,14 bis 3,14 Gew.-% 3,4,5-Trimethylhexanol;
- 1,47 bis 5,47 Gew.-%, bevorzugt 1,97 bis 4,97 Gew.-%, besonders bevorzugt 2,47 bis 4,47 Gew.-% 3,4,5-Trimethylhexanol, 3-Methyl-4-ethylhexanol und 3-Ethyl-4-methylhexanol;
- 4,00 bis 10,00 Gew.-%, bevorzugt 4,50 bis 9,50 Gew.-%, besonders bevorzugt 5,00 bis 9,00 Gew.-% 3,4-Dimethylheptanol;
- 0,99 bis 2,99 Gew.-%, bevorzugt 1,19 bis 2,79 Gew.-%, besonders bevorzugt 1,49 bis 2,49 Gew.-% 4-Ethyl-5-methylhexanol und 3-Ethylheptanol;
- 2,45 bis 8,45 Gew.-%, bevorzugt 2,95 bis 7,95 Gew.-%, besonders bevorzugt 3,45 bis 7,45 Gew.-% 4,5-Dimethylheptanol und 3-Methyloctanol;
- 1,21 bis 5,21 Gew.-%, bevorzugt 1,71 bis 4,71 Gew.-%, besonders bevorzugt 2,21 bis 4,21 Gew.-% 4,5-Dimethylheptanol;
- 1,55 bis 5,55 Gew.-%, bevorzugt 2,05 bis 5,05 Gew.-%, besonders bevorzugt 2,55 bis 4,55 Gew.-% 5,6-Dimethylheptanol;
- 1,63 bis 3,63 Gew.-%, bevorzugt 1,83 bis 3,43 Gew.-%, besonders bevorzugt 2,13 bis 3,13 Gew.-% 4-Methyloctanol;
- 0,98 bis 2,98 Gew.-%, bevorzugt 1,18 bis 2,78 Gew.-%, besonders bevorzugt 1,48 bis 2,48 Gew.-% 5-Methyloctaonol;
- 0,70 bis 2,70 Gew.-%, bevorzugt 0,90 bis 2,50 Gew.-%, besonders bevorzugt 1,20 bis 2,20 Gew.-% 3,6,6-Trimethylhexanol;
- 1,96 bis 3,96 Gew.-%, bevorzugt 2,16 bis 3,76 Gew.-%, besonders bevorzugt 2,46 bis 3,46 Gew.-% 7-Methyloctanol;
- 1,24 bis 3,24 Gew.-%, bevorzugt 1,44 bis 3,04 Gew.-%, besonders bevorzugt 1,74 bis 2,74 Gew.-% 6-Methyloctanol;
- 0,1 bis 3 Gew.-%, bevorzugt 0,2 bis 2 Gew.-%, besonders bevorzugt 0,3 bis 1 Gew.-% n-Nonanol;
- 25 bis 35 Gew.-%, bevorzugt 28 bis 33 Gew.-%, besonders bevorzugt 29 bis 32 Gew.-% sonstige Alkohole mit 9 und 10 Kohlenstoffatomen; wobei die Gesamtsumme der genannten Komponenten 100 Gew.-% ergibt.

Eine weitere besonders bevorzugte Ausführungsform eines Nonanol-Gemisches, das zur Herstellung von bevorzugt verwendeten Cyclohexancarbonsäurederivaten eingesetzt wird, weist die folgende Zusammensetzung auf:
- 6,0 bis 16,0 Gew.-%, bevorzugt 7,0 bis 15,0 Gew.-%, besonders bevorzugt 8,0 bis 14,0 Gew.-% n-Nonanol;
- 12,8 bis 28,8 Gew.-%, bevorzugt 14,8 bis 26,8 Gew.-%, besonders bevorzugt 15,8 bis 25,8 Gew.-% 6-Methyloctanol;
- 12,5 bis 28,8 Gew.-%, bevorzugt 14,5 bis 26,5 Gew.-%, besonders bevorzugt 15,5 bis 25,5 Gew.-% 4-Methyloctanol;
- 3,3 bis 7,3 Gew.-%, bevorzugt 3,8 bis 6,8 Gew.-%, besonders bevorzugt 4,3 bis 6,3 Gew.-% 2-Methyloctanol;
- 5,7 bis 11,7 Gew.-%, bevorzugt 6,3 bis 11,3 Gew.-%, besonders bevorzugt 6,7 bis 10,7 Gew.-% 3-Ethylheptanol;
- 1,9 bis 3,9 Gew.-%, bevorzugt 2,1 bis 3,7 Gew.-%, besonders bevorzugt 2,4 bis 3,4 Gew.-% 2-Ethylheptanol;
- 1,7 bis 3,7 Gew.-%, bevorzugt 1,9 bis 3,5 Gew.-%, besonders bevorzugt 2,2 bis 3,2 Gew.-% 2-Propylhexanol;
- 3,2 bis 9,2 Gew.-%, bevorzugt 3,7 bis 8,7 Gew.-%, besonders bevorzugt 4,2 bis 8,2 Gew.-% 3,5-Dimethylheptanol;
- 6,0 bis 16,0 Gew.-%, bevorzugt 7,0 bis 15,0 Gew.-%, besonders bevorzugt 8,0 bis 14,0 Gew.-% 2,5-Dimethylheptanol;
- 1,8 bis 3,8 Gew.-%, bevorzugt 2,0 bis 3,6 Gew.-%, besonders bevorzugt 2,3 bis 3,3 Gew.-% 2,3-Dimethylheptanol;
- 0,6 bis 2,6 Gew.-%, bevorzugt 0,8 bis 2,4 Gew.-%, besonders bevorzugt 1,1 bis 2,1 Gew.-% 3-Ethyl-4-methylhexanol;
- 2,0 bis 4,0 Gew.-%, bevorzugt 2,2 bis 3,8 Gew.-%, besonders bevorzugt 2,5 bis 3,5 Gew.-% 2-Ethyl-4-methylhexanol;
- 0,5 bis 6,5 Gew.-%, bevorzugt 1,5 bis 6 Gew.-%, besonders bevorzugt 1,5 bis 5,5 Gew.-% sonstige Alkohole mit 9 Kohlenstoffatomen;
wobei die Gesamtsumme der genannten Komponenten 100 Gew.-% ergibt.

Zusätzlich zu den Cyclohexancarbonsäureestern der Formel (I) können als weitere Komponente in den erfindungsgemäßen Polymer-Zusammensetzungen auch bekannte Weichmacher (z. B. in einer Menge von 0,05 bis 3 Gew.-%) eingesetzt werden. Typische Beispiele sind folgende Verbindungen:
Benzolpolycarbonsäuren und deren Derivate wie beispielsweise:
   Monomethylterephthalate, Dimethylterephthalate, Diethylterephthalate, Di-n-propylterephthalate, Di-n-butylterephthalate, Di-tert-butylterephthalate, Diisobutylterephthalate, Monoglykolester der Terephthalsäure, Diglykolester der Terephthalsäure, Di-n-octylterephthalate, Diisooctylterephthalate, Mono-2-ethylhexyl-terephthalate, Di-2-ethylhexylterephthalate, Di-n-nonylterephthalate, Diisononylterephthalate, Di-n-decylterephthalate, Di-n-undecylterephthalate, Diisodecylterephthalate, Diisododecylterephthalate, Di-n-octadecylterephthalate, Diisooctadecylterephthalate, Di-n-eicosylterephthalate, Monocyclohexylterephthalate und/oder Dicyclohexylterephthalate.
Phthalsäureester wie beispielsweise:
   Monomethylphthalate, Dimethylphthalate, Diethylphthalate, Di-n-propylphthalate, Di-n-butylphthalate, Di-tert-butylphthalate, Diisobutylphthalate, Monoglykolester der Phthalsäure, Diglykolester der Phthalsäure, Di-n-octylphthalate, Diisooctylphthalate, Di-2-ethylhexylphthalate, Di-n-nonylphthalate, Diisononylphthalate, Di-n-decylphthalate, Diisodecylphthalate, Di-n-undecylphthalate, Diisododecyl-phthalate, Di-n-octadecylphthalate, Diisooctadecylphthalate, Di-n-eicosyl-phthalate, Monocyclohexylphthalate, Dicyclohexylphthalate; Alkylisophthalates wie Monomethylisophthalate, Dimethylisophthalate, Diethylisophthalate, Di-n-propylisophthalate, Di-n-butylisophthalate, Di-tert-butylisophthalate, Diisobutylisophthalate, Monoglykolester der Isophthalsäure, Diglykolester der Isophthalsäure, Di-n-octylisophthalate, Diisooctylisophthalate, Di-2-ethylhexylisophthalate, Di-n-nonylisophthalate, Diisononylisophthalate, Di-n-decylisophthalate, Diisodecylisophthalate, Di-n-undecylisophthalate, Diisododecylisophthalate, Di-n-octadecylisophthalate, Diisooctadecylisophthalate, Di-n-eicosylisophthalate, Monocyclohexylisophthalate und/oder Dicyclohexylisophthalate.
Handelsübliche Weichmacher wie:
   Palatinol(R) AH (Di-(2-ethylhexyl)phthalate; Palatinol(R) AH L (Di-(2-ethylhexyl)phthalate); Palatinol(R) C (Dibutylphthalate); Palatinol(R) IC (Diisobutylphthalate); Palatinol(R) N(Diisononylphthalate); Palatinol(R) Z (Diisodecylphthalate) Palatinol(R) 10-P (Di-(2-Propylheptyl)phthalate); Palatinol(R) 711 P (Heptylundecylphthalate); Palatinol(R) 911 (Nonylundecylphthalate); Palatinol(R) 11 P-E (Diundecylphthalate); Palatinol(R) M (Dimethylphthalate); Palatinol(R) A (Diethylphthalate); Palatinol(R) A (R) (Diethylphthalate); und Palatinol(R) K (Dibutylglykolphthalate). Weitere Beispiele sind die kommerziell erhältlichen Adipate wie: Plastomoll(R) DOA (Di-(2-ethylhexyl)adipate) and Plastomoll(R) DNA (Diisononyladipate).

Die Erfindung wird durch die folgenden Beispiele näher erläutert:

### Beispiel 1: Herstellung des Diisononylcyclohexandicarbonsäureesters

### a) (Butendimerisierung):

Die Butendimerisierung wurde in einem adiabatischen Reaktor bestehend aus zwei Teilreaktoren (Länge: jeweils 4 m, Durchmesser: jeweils 80 cm) mit Zwischenkühlung bei 30 bar kontinuierlich durchgeführt. Als Einsatzprodukt wurde ein Raffinat II mit folgender Zusammensetzung verwendet:

| | |
|---|---|
| i-Butan: | 2 Gew.-% |
| n-Butan: | 10 Gew.-% |
| i-Buten: | 2 Gew.-% |
| Buten-1: | 32 Gew.-% |
| Buten-2-trans: | 37 Gew.-% |
| Buten-2-cis: | 17 Gew.-% |

Als Katalysator diente ein Material gemäß DE 4 339 713 bestehend aus 50 Gew.-% NiO, 12,5 Gew.-% TiO₂, 33,5 Gew.-% SiO₂ und 4 Gew.-% Al₂O₃ in Form von 5x5 mm-Tabletten. Die Umsetzung wurde mit einem Durchsatz von 0,375 kg Raffinat II/I Katalysator *h, einer Rückführung C₄/Raffinat II von 3, einer Eintrittstemperatur am 1. Teilreaktor von 38 °C und einer Eintrittstemperatur am 2. Teilreaktor von 60 °C durchgeführt. Der Umsatz bezogen auf die im Raffinat II enthaltenen Butene lag bei 83,1 %; die Selektivität zu den gewünschten Oktenen betrug 83,3 %. Durch fraktionierte Destillation des Reaktoraustrages wurde die Oktenfraktion von unumgesetztem Raffinat II und den Hochsiedern abgetrennt.

### b) (Hydroformylierung des Oktengemisches und anschließende Hydrierung):

750 g des in Verfahrensschritt 1 hergestellten Oktengemisches wurden diskontinuierlich in einem Autoklav mit 0,13 Gew.-% Dikobaltoktacarbonyl Co₂(CO)₈ als Katalysator unter Zusatz von 75 g Wasser bei 185 °C und unter einem Synthesegasdruck von 280 bar bei einem Mischungsverhältnis von H₂ zu CO von 60/40 5 Stunden umgesetzt. Der Verbrauch an Synthesegas, zu erkennen an einem Druckabfall im Autoklaven wurde durch Nachpressen ergänzt. Nach dem Entspannen des Autoklaven wurde der Reaktionsaustrag mit 10 Gew.-%iger Essigsäure durch Einleiten von Luft oxidativ vom Kobaltkatalysator befreit und die organische Produktphase mit Raney-Nickel bei 125 °C und einem Wasserstoffdruck von 280 bar 10 h hydriert. Durch fraktionierte Destillation des Reaktionsaustrages wurde die Isononanolfraktion von den C8-Paraffinen und den Hochsiedern abgetrennt.

### c) (Veresterung der Isononanol-Fraktion):

Im dritten Verfahrensschritt wurden 865,74 g der in Verfahrensschritt 2 erhaltene Isononanolfraktion (20 % Überschuss bzgl. Phthalsäureanhydrid) mit 370,30 g Phthalsäureanhydrid und 0,42 g Isopropylbutyltitanat als Katalysator in einem 2 I-Autoklaven unter N₂-Einperlung (10 l/h) bei einer Rührgeschwindigkeit von 500 U/min und einer Reaktionstemperatur von 230 °C umgesetzt. Das gebildete Reaktionswasser wurde fortlaufend mit dem N₂-Strom aus dem Reaktionsgemisch entfernt. Die Reaktionszeit betrug 180 min. Anschließend wurde der Isononanol-Überschuss bei einem Vakuum von 50 mbar abdestilliert.

1000 g des Roh-Diisononylphthalates wurden mit 150 ml 0,5 %iger Natronlauge durch 10minütiges Rühren bei 80°C neutralisiert. Es bildete sich ein Zwei-Phasen-Gemisch mit einer oberen organischen Phase und einer unteren wässrigen Phase (Ablauge mit hydrolisiertem Katalysator). Die wässrige Phase wurde abgetrennt und die organische Phase zweimal mit 200 ml H₂O nachgewaschen. Zur weiteren Reinigung wurde das neutralisierte und gewaschene Diisononylphthalat mit Wasserdampf bei 180°C und 50 mbar Vakuum 2 h ausgedämpft. Das gereinigte Diisononylphthalat wurde dann 30 min bei 150 °C/50 mbar mittels Durchleiten eines N₂-Stroms (2 l/h) getrocknet, anschließend mit Aktivkohle 5 min verrührt und über eine Nutsche mit Filterhilfsmittel Supra-Theorit 5 abgesaugt (Temperatur 80 °C).

Das so erhaltene Diisononylphthalat besitzt eine Dichte von 0,973 g/cm³, eine Viskosität von 73,0 mPa*s, einen Brechungsindex n_{D}²⁰ von 1,4853, ein Säurezahl von 0,03 mg KOH/g, einen Wassergehalt von 0,03 % und eine Reinheit nach GC von 99,83 %.

### d1) (Hydrierung des Esters):

Ein meso-/makroporöser Aluminiumoxidträger in Form von 4 mm-Extrudaten, der eine BET-Oberfläche von 238 m²/g und ein Porenvolumen von 0,45 ml/g besaß, wurde mit einer wässrigen Ruthenium-(III)-nitrat-Lösung, die eine Konzentration von 0,8 Gew.-% aufwies, getränkt. 0,15 ml/g (ungefähr 33% des Gesamtvolumens) der Poren des Trägers besaßen einen Durchmesser im Bereich von 50 nm bis 10.000 nm und 0,30 ml/g (ungefähr 67% des Gesamt Porenvolumens) der Poren des Trägers wiesen einen Porendurchmesser im Bereich von 2 bis 50 nm auf. Das während des Tränkens vom Träger aufgenommene Lösungsvolumen entsprach dabei in etwa dem Porenvolumen des verwendeten Trägers.

Anschließend wurde der mit der Ruthenium-(III)-nitrat-Lösung getränkte Träger bei 120 °C getrocknet und bei 200 °C im Wasserstrom aktiviert (reduziert). Der so hergestellte Katalysator enthielt 0,5 Gew.-% Ruthenium, bezogen auf das Gewicht des Katalysators. Eine kontinuierlich betriebene Anlage bestehend aus zwei hintereinander geschalteten Rohrreaktoren (Hauptreaktor 160 mL, dᵢₙₙₑₙ = 12 mm, I = 1400 mm und Nachreaktor 100 mL, dᵢₙₙₑₙ = 12 mm, I = 1000 mm) wurde mit dem im Herstellbeispiel beschriebenen Katalysator befüllt (Hauptreaktor 71,5g, Nachreaktor 45,2g). Der Hauptreaktor wurde in Rieselfahrweise mit Umlauf betrieben (Flüssigkeitsbelastung 12 m/h), der Nachreaktor im geraden Durchgang in Sumpffahrweise. Der in Verfahrensschritt 3 hergestellte Phthalsäureester wurde mit reinem Wasserstoff bei einer mittleren Temperatur von 128°C im Hauptreaktor und 128°C im Nachreaktor und einem Druck von 200 bar durch die Reaktorkaskade gepumpt (Zulauf 66 g/h).

Die Katalysatorbelastung im Hauptreaktor betrug 0,6 kg Phthalsäureester/L_{Kat}.×h. Die gaschromatographische Analyse des Reaktionsaustrages zeigte, daß der Phthalsäureester zu >99,9% umgesetzt worden war. Der entsprechende Cyclohexandicarbonsäureester konnte mit einer Selektivität von 99,1% erhalten werden. Der in Verfahrensschritt 3 hergestellte Phthalsäureester konnte noch mit 26 ppm im Austrag nachgewiesen werden. Als Nebenkomponenten konnten etwa 0,9% Leichtsieder (Komponenten mit einem niedrigeren Siedepunkt, als der des Cyclohexandicarbonsäureester) nachgewiesen werden. Der Cyclohexandicarbonsäureester wurde als Gemisch der cis- und trans-Isomeren im Verhältnis von 92:8 erhalten. Er kann abgefüllt oder auch gleich weiter eingesetzt werden.

d2) 50 g eines meso-/ makroporösen Aluminiumoxidträgers im Form von 4 mm-Extrudaten, der eine BET-Oberfläche von 238 m²/g und ein Porenvolumen von 0,45 ml/g besaß, wurde mit einer wässrigen Ruthenium-(III)-nitrosylnitrat-Lösung wie folgt getränkt.

2,51 g Ruthenium-(III)-nitrosylnitrat-Lösung mit einer Konzentration von 0,8 Gew.-% Ruthenium wurde auf zwei gleichgroße Portionen aufgeteilt und jede Portion jeweils mit destilliertem Wasser auf ein Volumen von 16 ml verdünnt. Der meso-/ makroporöse Aluminiumoxidträger wurde dann zunächst mit der ersten Hälfte der Ruthenium-(III)-nitrosylnitrat-Lösung getränkt. Der getränkte Träger wurde bei 120°C 16h getrocknet. Nach dieser Prozedur erfolgte der zweite Tränkschritt in analoger Weise. Der getrocknete Katalysator wurde im Drehrohrofen bei 200°C 2h in einem Wasserstoffstrom reduziert und anschließend mit einem Gemisch von 5% Luft in Stickstoff 60 min. passiviert. Der so hergestellte Katalysator enthielt 0,5 Gew.-% Ruthenium, bezogen auf das Gewicht des Katalysators.

Eine kontinuierlich betriebene Anlage bestehend aus zwei hintereinander geschalteten Rohrreaktoren (Hauptreaktor 160 mL, dᵢₙₙₑₙ = 12 mm, I = 1400 mm und Nachreaktor 100 mL, dᵢₙₙₑₙ = 12 mm, I = 1000 mm) wurde mit dem im Herstellbeispiel beschriebenen Katalysator befüllt (Hauptreaktor 71,5g, Nachreaktor 45,2g). Der Hauptreaktor wurde in Rieselfahrweise mit Umlauf betrieben (Flüssigkeitsbelastung 12 m/h), der Nachreaktor im geraden Durchgang in Sumpffahrweise. Der in Verfahrensschritt 3 hergestellte Phthalsäureester wurde mit reinem Wasserstoff bei einer mittleren Temperatur von 128°C im Hauptreaktor und 128°C im Nachreaktor und einem Druck von 200 bar durch die Reaktorkaskade gepumpt (Zulauf 66 g/h). Die Katalysatorbelastung im Hauptreaktor betrug 0,6 kg Phthalsäureester/L_{Kat}.×h. Die gaschromatographische Analyse des Reaktionsaustrages zeigte, daß der Phthalsäureester zu >99,9% umgesetzt worden war. Der entsprechende Cyclohexandicarbonsäureester konnte mit einer Selektivität von 99,3% erhalten werden. Der in Verfahrensschritt 3 hergestellte Phthalsäureester konnte noch mit 20 ppm im Austrag nachgewiesen werden. Als Nebenkomponenten konnten etwa 0,7% Leichtsieder (Komponenten mit einem niedrigeren Siedepunkt, als der des Cyclohexandicarbonsäureester) nachgewiesen werden. Der Cyclohexandicarbonsäureester wurde als Gemisch der cis- und trans-Isomeren im Verhältnis von 91:9 erhalten.

d3) 50 kg eines SiO₂-Trägers vom Typ D11-10 (Hersteller: BASF SE, Ludwigshafen, Deutschland) in Form von 3 mm-Strängen mit einer Wasseraufnahme von 0,95 ml/g und einer BET-Oberfläche von 135 m²/g wurden in einer Tränktrommel vorgelegt und bei 96 Gew.-% Wasseraufnahme getränkt. Die wässrige Tränklösung enthält 0,176 kg Ru als Ru-(III)-acetat (Hersteller: Fa. Umicore; 4,34 Gew.-% Ru). Der getränkte Katalysator wurde unbewegt bei einer Ofentemperatur von 145 °C getrocknet bis zu einer Restfeuchte von 1 %. Die Reduktion erfolgte in Wasserstoff (ca. 75 % H₂ in N₂, wobei N₂ als Spülstrom verwendet wurde; 1,5 Nm³/h H₂, 0,5 Nm³/h N₂) bei bewegter Schüttung bei 300 °C und einer Verweilzeit von 90 Minuten.
Die Passivierung erfolgte in verdünnter Luft (Luft in N₂). Die Luftzugabe wurde so geregelt, dass die Temperatur des Katalysators unter 30 °C bleibt. Der so hergestellte Katalysator enthält 0,31 % Ru. Eine kontinuierlich betriebene Anlage bestehend aus zwei hintereinander geschalteten Rohrreaktoren (Hauptreaktor 160 mL, dᵢₙₙₑₙ = 12 mm, I = 1400 mm und Nachreaktor 100 mL, dᵢₙₙₑₙ = 12 mm, I = 1000 mm) wurde mit dem im Herstellbeispiel beschriebenen Katalysator befüllt (Hauptreaktor 71,5g, Nachreaktor 45,2g). Der Hauptreaktor wurde in Rieselfahrweise mit Umlauf betrieben (Flüssigkeitsbelastung 12 m/h), der Nachreaktor im geraden Durchgang in Sumpffahrweise. Der in Verfahrensschritt 3 hergestellte Phthalsäureester wurde mit reinem Wasserstoff bei einer mittleren Temperatur von 128°C im Hauptreaktor und 128°C im Nachreaktor und einem Druck von 200 bar durch die Reaktorkaskade gepumpt (Zulauf 66 g/h). Die Katalysatorbelastung im Hauptreaktor betrug 0,6 kg Phthalsäureester/L_{Kat.}×h. Die gaschromatographische Analyse des Reaktionsaustrages zeigte, daß der Phthalsäureester zu >99,9% umgesetzt worden war. Der entsprechende Cyclohexandicarbonsäureester konnte mit einer Selektivität von 99,5% erhalten werden. Der in Verfahrensschritt 3 hergestellte Phthalsäureester konnte noch mit 10 ppm im Austrag nachgewiesen werden. Als Nebenkomponenten konnten etwa 0,5% Leichtsieder (Komponenten mit einem niedrigeren Siedepunkt, als der des Cyclohexandicarbonsäureester) nachgewiesen werden. Der Cyclohexan-dicarbonsäureester wurde als Gemisch der cis- und trans-Isomeren im Verhältnis von 93:7 erhalten.

### Beispiel 2: Verfahren zur Suspensionspolymerisation von Styrol:

In 19.9 kg Styrol werden 10 g Dibenzoylperoxid, 55 g Dicumylperoxid und 20 g Polywachs 2000 Prills gelöst. Zudem werden 20 g des jeweiligen Weichmachers, entweder Weißöl W 70 (Hersteller: Wintershall, Beispiel 1b) oder Hexamoll Dinch (Hersteller: BASF, Beispiel 1a), zugesetzt (0.1 Gew.-% bezogen auf Styrol). Die organische Phase wird in 17.7 I vollentsalztem Wasser in einem 50-I-Rührkessel eingebracht. Die wässrige Phase enthält 37.8 g Natriumpyrophosphat (Fa. Giulini) und 70.9 g Magnesiumsulfat (Bittersalz) (Fa. Kali und Salz). Man erhitzt die Suspension innerhalb von 2 Stunden auf 115°C und anschließend binnen 2 Stunden auf 123°C. 1.5 Stunden nach Erreichen von 80°C werden 1.6 g Emulgator K30 (Hersteller: Bayer AG) zudosiert. Nach einer weiteren Stunde werden 1.1 kg Pentan (Treibmittel der Firma Haltermann / Hersteller: Exxon) nachdosiert. Schließlich wird bei einer Endtemperatur von 139°C auspolymerisiert. Die erhaltenen treibmittelhaltigen Polystyrolperlen werden abdekantiert, von Innenwasser getrocknet und ggf. mit einem Standard EPS Coating (z. B. aus 0,2 bis 0,4 % einer Mischung aus Glycerin-Mono, Di-, Tristearaten und Kieselsäure) beschichtet.

Die Viskositätszahlen der entgasten Polymerisate wurden mittels eines Kapillarviskosimeters (Mikro-Ubbelohde-Viskosimeter) durch Vermessung einer Lösung der Polymere in Toluol bestimmt (siehe DIN-Norm). Die Viskositätszahl (VZ) ist dabei der Quotient aus der relativen VZ-1 und der Konzentration der vermessenen Lösung. Die Viskositätszahl ist eine dem Molekulargewicht proportionale Messgröße. Es ergaben sich folgende Messwerte für die beiden mit den Additiven Weißöl W70 bzw. Hexamoll Dinch hergestellten Polystyrole:

| Additiv | | Hexamoll Dinch | Weißöl |
|---|---|---|---|
| Beispiel | | 1a | 1b |
| Viskositätszahl | [cm³/g] | 88,8 | 89,8 |

Sowohl das mittlere Molekulargewicht als auch die Polydispersität des bei Zugabe von Hexamoll Dinch erhaltenen Polymeren unterscheiden sich nicht von dem Referenzversuch mit Weißöl. Somit kann belegt werden, dass das Additiv Hexamoll Dinch nicht störend in die Polymerisation eingreift. In beiden Fällen wurde ein Mw von ca. 250 000 g/mol und eine Polydispersität von ca. 2.4 erhalten.

### Beispiel 3: Expandierbarkeit der Styrolpolymer-Zusammensetzung

Um die Expandierbarkeit des treibmittelhaltigen Polystyrol-Granulates beurteilen zu können, wird die Polymer-Zusammensetzung drucklos vorgeschäumt in folgender Apparatur:
Stork GmbH, Regelungstechnik u. Apparatebau
Bestehend aus Schäumkasten mit Dampfzufuhr über 2 Düsenreihen
Kondensator für Abluftbrücken und Kondensatableitung
Steuerung über zwei FESTO-Zeitzähler (Minuten und Sekunden)
Zwei gleichzeitig zu bedienende Einschalter und ein Ausschalter
2 Positionsschalter Offen und Geschlossen (für Zeitstart und Reset)
Notausschalter
Innendruck: 0,01 bar
Dampfdruck: 4 bar
Steuerluftdruck: 4 bar.

Nach verschiedenen Verweilzeiten im Vorschäumer werden die Schüttdichten der angeschäumten Polymer-Zusammensetzung bestimmt. Dabei zeigt die Polymer-Zusammensetzung hergestellt mit dem Additiv Hexamoll Dinch ein hervorragendes Expandierverhalten: Nach 6 Minuten Verweilzeit im Vorschäumer können Schüttdichten um 28 g/l erhalten werden. Dagegen kann die Polymer-Zusammensetzung mit dem Additiv Weißöl nach dieser Zeit nur auf eine Dichte von 33 g/l vorgeschäumt werden.

Die Ergebnisse zeigt die nachstehende Tabelle als Schäumkurve.

| | Beispiel 1a | Beispiel 1b |
|---|---|---|
| Additiv | 0.1% Hexamoll Dinch | 0.1 % Weißöl |

| Verweilzeit im Vorschäumer [min] | Schüttdichte in [g/L] | |
|---|---|---|
| 2 | 36,8 | 44,5 |
| 4 | 30,6 | 37,4 |
| 6 | 28,3 | 33,8 |
| 8 | 26,9 | 34 |
| 10 | 26,9 | 30,6 |
| 12 | 27 | 29,4 |
| 14 | 27,4 | 29,7 |

### Beispiel 4: Analysen zur Mechanik der Styrolpolymer-Zusammensetzungen

Die erhaltenen treibmittelhaltigen Polymer-Zusammensetzungen (Granulate) werden nach einem üblichen Verfahren zu Schaumpartikeln aufgeschäumt und anschließend zu Schaumstoffkörpern verarbeitet. Dabei wurden Schäume im Dichtebereich zwischen 16 bis 23 g/l erhalten. Die Schaumstoffkörper wurden hinsichtlich Biegemechanik (nach der Norm EN 12089 für Biegeversuche; Methode B) und Druckfestigkeit bei 10 % Stauchung (nach der Norm EN 826 für Druckversuche) getestet. Dabei weist der Schaumstoff, hergestellt unter Verwendung des Additivs Hexamoll Dinch bei einer Dichte von ca. 18 g/l eine um 25 % bessere Biegefestigkeit und bei einer Dichte von ca. 20 g/l sogar eine um 40 % bessere Biegefestigkeit als der Schaumstoff, hergestellt unter Verwendung des Additivs Weißöl auf.

Die Druckfestigkeit verbessert sich bei Substitution des Additivs Weißöl durch das Additiv Hexamoll Dinch deutlich.

### Beispiel 5: (Herstellung eines Schaumkörpers aus einer EPS Zusammensetzung mit niedrigem Pentangehalt)

Die in Beispiel 2 erhaltenen treibmittelhaltigen Polystyrol-Granulate werden nach dem üblichen Verfahren zu Schaumpartikeln aufgeschäumt und anschließend zu Schaumstoffkörpern verarbeitet. Dabei wurden Schäume im Dichtebereich zwischen 16 bis 23 g/l erhalten. Die Schaumstoffkörper wurden hinsichtlich der Biegemechanik und der Druckfestigkeit bei 10 % Stauchung (siehe o. g. Methodik) getestet.

Dabei weist der Schaumstoff, hergestellt unter Einsatz des Additivs Hexamoll Dinch, bei einer Dichte von ca. 18 g/l und bei ca. 20 g/l bessere mechanische Eigenschaften auf:

**Tabelle 4**

| Weichmacher | | Hexamoll Dinch | | Weißöl | |
|---|---|---|---|---|---|
| Dichte | [g/L] | 17,8 | 22,5 | 16,7 | 19,5 |
| Biegearbeit | [Nm] | 2,43 | 3,14 | 1,8 | 1,87 |
| Biegefestigkeit | [kPa] | 224,7 | 309,2 | 179,8 | 219,2 |
| Druckfestigkeit | [kPa] | 98,3 | 139,9 | 79,5 | 100,7 |

### Beispiel 6 (Herstellung einer EPS-Zusammensetzung mit Flammschutzmittel)

Im 1000 I Reaktor werden 534 kg Styrol sowie 288 g Dibenzoylperoxid, 2,64 kg Dicumylperoxid, 3,50 kg Hexabromo-cyclododecan und 3,5 kg Ceridust (PE Wachs) gelöst. Der jeweilige Weichmacher, entweder Weißöl W 70 oder Hexamoll Dinch wird anschließend in der Styrol Phase aufgelöst. Die organische Phase wird in 477 l vollent-salztes Wasser in einem 1000-I-Rührkessel eingebracht. Die wässrige Phase enthält 47,7 kg Natriumpyrophosphat und 1,96 kg Magnesiumsulfat-heptahydrat (Bittersalz). Man erhitzt die Suspension innerhalb von 1,75 Stunden auf 104°C und anschließend binnen 5,5 Stunden auf 136°C. 1,8 Stunden nach Erreichen von 80°C werden 90,9 g 40 %ige Emulgator K30 Lösung (Bayer Ag) zudosiert. Nach einer weiteren Stunde werden 42,2 kg Pentan nachdosiert. Schließlich wird bei einer Endtemperatur von 136°C auspolymerisiert. Die erhaltenen treibmittelhaltigen Polystyrolperlen werden abdekantiert, von Innenwasser getrocknet und mit einem Standard EPS Coating (0,2 bis 0,4 % einer Mischung aus Glycerin-, Mono-, Di-, Tristearaten und Kieselsäure) beschichtet.

Es wurden die nachfolgenden Mengen an Weichmachern im EPS getestet:

| Beispiel | Hexamoll Dinch [ppm] | Weißöl W70 [ppm] | Viskositätszahl [cm³/g] | Restmonomer [ppm] |
|---|---|---|---|---|
| 6a | 0 | 0 | 73,8 | 930 |
| 6b | 1000 | 0 | 74,8 | 920 |
| 6c | 0 | 1000 | 73,8 | 1000 |
| 6d | 2000 | 0 | 75,4 | 950 |
| 6e | 0 | 2000 | 74,2 | 920 |
| 6f | 3000 | 0 | 74,5 | 940 |
| 6g | 0 | 3000 | 74,7 | 970 |

Das spezielle Additiv Hexamoll Dinch lässt sich als Alternative für Weißöl in einer Standard EPS-Zusammensetzung mit Flammschutzmittel sehr gut einsetzen. Dabei greift es nicht störend in die Polymerisation ein. Die Eigenschaften wie Viskositätszahl (proportional zum Molekulargewicht) und Restmonomer bleiben vergleichbar zu entsprechenden Rezepturen hergestellt mit dem Additiv Weißöl.

Die Schaumstoffkörper, die aus den beschriebenen expandierbaren Styrolpolymerisaten hergestellt wurden, zeigen in dem Fall, in dem 1000 ppm Hexamoll Dinch als Weichmacher eingesetzt wurde, eine erhöhte Biegefestigkeit gegenüber den Beispielen mit 1000 ppm Weißöl und den Beispielen ohne Weichmacher.

Der beobachte, positive Effekt auf die Biegefestigkeit ist bei Ausschäumdrücken von ca. 1,0 bar und bei Dichten von ca. 30 g/l besonders ausgeprägt.

### Beispiel 7 (Herstellung einer EPS-Zusammensetzung mit Flammschutzmittel und Verzweigungsreagenz)

In einem 40 I Reaktor werden 21,5 kg Styrol sowie 6 g Dibenzoylperoxid, 100 g Dicumylperoxid, 105 g Hexabromocyclododecan und 15 Polywachs 2000 Prills (PE Wachs) gelöst. Zudem wird 1,4-Butandioldimethacrylat (als Verzweigungsreagenz) hinzugefügt.

Hexamoll Dinch wird anschließend in der Styrol Phase aufgelöst. Die organische Phase wird in 19,1 l vollentsalztes Wasser in einem 40-I-Rührkessel eingebracht. Die wässrige Phase enthält 34,0 g Natriumpyrophosphat und 63 g Magnesiumsulfat-heptahydrat (Bittersalz).

Man erhitzt die Suspension innerhalb von 2,56 Stunden auf 105°C und anschließend binnen 4,2 Stunden auf 126°C. 1,4 Stunden nach Erreichen von 80°C werden 3,1 g 40 %ige Emulgator K30 Lösung (Bayer Ag) zudosiert. Nach weiteren 100 Minuten werden 7,7 kg Pentan nachdosiert. Schließlich wird bei einer Endtemperatur von 126°C auspolymerisiert. Die erhaltenen treibmittelhaltigen Polystyrolperlen werden abdekantiert, von Innenwasser getrocknet und mit einem Standard EPS Coating (0,2 bis 0,4 % einer Mischung aus Glycerin-, Mono-, Di-, Tristearaten und Kieselsäure) beschichtet.

Es wurden folgende Styrolpolymer-Zusammensetzungen getestet:

| Beispiel | Hexamoll Dinch [ppm] | Butandiolmethacrylat [ppm] | Viskositätszahl [cm³/g] | Mw [g/mol] | Restmonomer [ppm] |
|---|---|---|---|---|---|
| 7a | 3500 | 250 | 97,9 | 320 000 | 860 |
| 7b | 5000 | 250 | 98,8 | 320 000 | 1000 |
| 7c | 3500 | 400 | 108,6 | 460 000 | 960 |
| 7d | 5000 | 400 | 111,9 | 470 000 | 890 |

Die Viskosität der hergestellten Styrolpolymer-Zusammensetzungen wird mittels Mikro-Ubbelohde-Viskosimeter, Mikro-Ubbelohde-Kapillare und Thermostat gemessen (25°C; in Toluol). Zur Eichung dient reines Toluol (Viskositätszahl: 68,8 cm³/g).

Der Einsatz einer Kombination aus dem Additiv Hexamoll Dinch und einem Verzweigungsreagenz bei der Polymerisation führt zu einer deutlich verbesserten Expandierbarkeit der Zusammensetzung gegenüber einer Standard Rezeptur ohne Hexamoll Dinch und ohne Verzweigungsreagenz (Butandiolmethacrylat).

### Beispiel 8: (Herstellung einer EPS-Zusammensetzung mit Flammschutzmittel und Verzweigungsreagenz im 1000 I Reaktor)

In 593 kg Styrol werden 302 g Dibenzoylperoxid, 2,97 g Dicumylperoxid, 3,97 kg Hexabromocyclododecan und 587 g Ceridust (PE Wachs) gelöst.
Zudem werden 250 ppm Butandiolmethacrylat als Verzweigungsreagenz hinzugefügt. 2000 ppm Hexamoll Dinch werden anschließend in der Styrol Phase aufgelöst. Die organische Phase wird in 536 I vollentsalztes Wasser in einem 1000-I-Rührkessel eingebracht. Die wässrige Phase enthält 1,15 kg Natriumpyrophosphat und 2,15 kg Magnesiumsulfat-heptahydrat (Bittersalz).

Man erhitzt die Suspension innerhalb von 1,83 Stunden auf 107°C und anschließend binnen 3,4 Stunden auf 134°C. 1,4 Stunden nach Erreichen von 80°C werden 103 g 40 %ige Emulgator K30 Lösung (Bayer Ag) zudosiert. Nach weiteren 60 Minuten werden 34,1 kg Pentan nachdosiert. Schließlich wird bei einer Endtemperatur von 134°C auspolymerisiert.

Die erhaltenen treibmittelhaltigen Polystyrolperlen werden abdekantiert, von Innenwasser getrocknet und mit einem Standard EPS Coating (0,2 bis 0,4 % einer Mischung aus Glycerin-, Mono-, Di-, Tristearaten und Kieselsäure) beschichtet.

Die Schaumstoffkörper, die aus diesen expandierbaren Polymerisaten hergestellt wurden, zeigen im Dichtebereich zwischen 11 und 13 g/l im Vergleich zu einer Referenzrezeptur eine erhöhte Druckfestigkeit.

## Patentansprüche

1. Zusammensetzung enthaltend mindestens eine expandierbare Styrolpolymer-Komponente (S) und mindestens einen Cyclohexancarbonsäureester sowie gegebenenfalls weitere Komponenten.

2. Zusammensetzung nach Anspruch 1, **dadurch gekennzeichnet, dass** die Zusammensetzung 100 ppm bis 10,0 Gew.-% mindestens eines Cyclohexancarbonsäureesters der Formel (I) enthält, 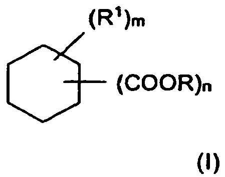 worin bedeuten:
R¹ C₁-C₁₀-Alkyl oder C₃-C₈-Cycloalkyl;
m 0, 1, 2 oder 3;
n 2, 3 oder 4;
R C₁-C₃₀-Alkyl.

3. Zusammensetzung nach einem der Ansprüche 1 oder 2, **dadurch gekennzeichnet, dass** die Zusammensetzung mindestens 50 Gew.-% eines Styrolpolymers (S) enthält, dass aus mindestens 80 Prozent Styrol-Monomeren aufgebaut ist, und dass die Zusammensetzung ferner 100 ppm bis 5,0 Gew.-% mindestens eines Cyclohexancarbonsäureesters der Formel (I) enthält, worin bedeuten:
R¹ C₁-C₁₀-Alkyl;
m 0, 1 oder 2;
n 2 oder 3;
R C₆-C₁₂-Alkyl.

4. Zusammensetzung nach einem der Ansprüche 1 bis 3, **dadurch gekennzeichnet, dass** die Zusammensetzung mindestens 80 Gew.-% eines Styrolpolymer (S) enthält, dass aus mindestens 95 Prozent Styrol-Monomeren aufgebaut ist, und dass die Zusammensetzung ferner 150 ppm bis 3,0 Gew.-% mindestens eines Cyclo-hexancarbonsäureesters der Formel (I) enthält, worin bedeuten:
R¹ C₁-C₁₀-Alkyl:
m 0 oder 1;
n 2 oder 3;
R C₆-C₁₂-Alkyl.

5. Zusammensetzung nach einem der Ansprüche 1 bis 4, **dadurch gekennzeichnet, dass** die Zusammensetzung mindestens 90 Gew.-% eines Styrolhomopolymer (S) enthält, und dass die Zusammensetzung ferner 150 ppm bis 3,0 Gew.-% mindestens eines Cyclohexancarbonsäureesters der Formel (I) enthält, worin bedeuten:
R¹ C₁-C₁₀-Alkyl;
m 0 oder 1;
n 2 oder 3;
R C₆-C₁₂-Alkyl
und dass die Zusammensetzung gegebenenfalls bis zu 8 Gew.-% einer oder mehrerer weiterer Komponenten enthält.

6. Zusammensetzung nach einem der Ansprüche 1 bis 5, **dadurch gekennzeichnet, dass** die Zusammensetzung mindestens 90 Gew.-% eines Styrolhomopolymer (S) enthält, und dass die Zusammensetzung ferner 150 ppm bis 3,0 Gew.-% mindestens eines Cyclohexancarbonsäureesters der Formel (I) enthält, worin bedeuten m ist 0, n ist 2 und R bedeutet C₈-C₁₀-Alkyl, und dass die Zusammensetzung 0,1 bis 8 Gew.-% einer oder mehrerer weiterer Komponenten enthält.

7. Verfahren zur Herstellung von expandierbaren Styrolpolymer-Zusammensetzungen, bei dem bei der Polymerisation der Styrol-Monomere und ggf. weiterer Monomere mindestens ein Cyclohexancarbonsäureester der allgemeinen Formel (I) eingesetzt wird, 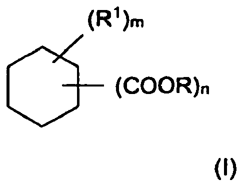 worin bedeuten:
R¹ C₁-C₁₀-Alkyl oder C₃-C₈-Cycloalkyl;
m 0, 1, 2 oder 3;
n 2, 3 oder 4;
R C₁-C₃₀-Alkyl-;
bevorzugt C₁-C₂₀-Alkyl, insbesondere C₆-C₁₂-Alkyl,
insbesondere C₈-C₁₀-Alkyl.

8. Verfahren zur Herstellung von expandierbaren Styrolpolymer-Zusammensetzungen gemäß Anspruch 7, **dadurch gekennzeichnet, dass** bei der Polymerisation folgende Komponenten zum Einsatz kommen, wobei die Gew.-% bezogen sind auf die Gesamtmenge aller organischen Komponenten:
(A) 10 ppm bis 10 Gew.-% mindestens eines Cyclohexancarbonsäureesters,
(B) mindestens 50 Gew.-% Styrol-Monomere und
(C) gegebenenfalls bis zu 8 Gew.-% weitere Komponenten.

9. Verfahren zur Herstellung von expandierbaren Styrolpolymer-Zusammensetzungen gemäß einem der Ansprüche 7 oder 8, **dadurch gekennzeichnet, dass** es sich bei dem Cyclohexancarbonsäureester um mindestens einen 1,2-Cyclohexan-dicarbonsäure-diisononylester handelt.

10. Verfahren zur Herstellung von expandierbaren Styrolpolymer-Zusammensetzungen gemäß einem der Ansprüche 7 bis 9, **dadurch gekennzeichnet, dass** als weitere Komponenten mindestens eine Komponente ausgewählt aus der Gruppe bestehend aus Treibmitteln, Flammschutzmitteln, Flammschutz-Synergisten, Verzweigungs-Hilfsmittel, Initiatoren und Graphit verwendet wird.

11. Verfahren zur Herstellung eines Schaumstoffs, bei dem eine Zusammensetzung, gemäß einem der Ansprüche 1 bis 6 aufgeschäumt wird.

12. Schaumstoff, herstellbar durch Aufschäumung eine Zusammensetzung gemäß einem der Ansprüche 1 bis 6.

13. Schaumstoff hergestellt durch thermische Aufschäumung eine Zusammensetzung gemäß einem der Ansprüche 1 bis 6, wobei dieser eine Dichte von 8,0 bis 200 g/l, insbesondere von 10 bis 50 g/l, aufweist.

14. Verwendung eines Schaumstoffes gemäß einem der Ansprüche 12 oder 13 zur Wärmedämmung, zur thermischen Isolierung von Maschinen und Haushaltsgeräten, als Formteil oder als Verpackungsmaterial.

15. Verwendung eines Cyclohexancarbonsäureesters der Formel (I) zur Herstellung von expandierbaren Styrolpolymer-Zusammensetzungen.

## Claims

1. A composition comprising at least one expandable styrene polymer component (S) and at least one cyclohexanecarboxylic ester and also optionally further components.

2. The composition according to claim 1, wherein the composition comprises 100 ppm to 10.0% by weight of at least one cyclohexanecarboxylic ester of formula (I), 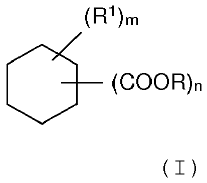 in which:
R¹ is C₁-C₁₀ alkyl or C₃-C₈ cycloalkyl;
m is 0, 1, 2 or 3;
n is 2, 3 or 4;
R is C₁-C₃₀ alkyl.

3. The composition according to either of claims 1 and 2, wherein the composition comprises at least 50% by weight of a styrene polymer (S) composed of at least 80 percent of styrene monomers, and wherein the composition further comprises 100 ppm to 5.0% by weight of at least one cyclohexanecarboxylic ester of the formula (I) in which:
R¹ is C₁-C₁₀ alkyl;
m is 0, 1 or 2;
n is 2 or 3;
R is C₆-C₁₂ alkyl.

4. The composition according to any of claims 1 to 3, wherein the composition comprises at least 80% by weight of a styrene polymer (S) composed of at least 95 percent of styrene monomers, and wherein the composition further comprises 150 ppm to 3.0% by weight of at least one cyclohexanecarboxylic ester of the formula (I) in which:
R¹ is C₁-C₁₀ alkyl;
m is 0 or 1;
n is 2 or 3;
R is C₆-C₁₂ alkyl.

5. The composition according to any of claims 1 to 4, wherein the composition comprises at least 90% by weight of a styrene homopolymer (S), and wherein the composition further comprises 150 ppm to 3.0% by weight of at least one cyclohexanecarboxylic ester of the formula (I) in which:
R¹ is C₁-C₁₀ alkyl;
m is 0 or 1;
n is 2 or 3;
R is C₆-C₁₂ alkyl
and wherein the composition comprises optionally up to 8% by weight of one or more further components.

6. The composition according to any of claims 1 to 5, wherein the composition comprises at least 90% by weight of a styrene homopolymer (S), and wherein the composition further comprises 150 ppm to 3.0% by weight of at least one cyclohexanecarboxylic ester of the formula (I) in which m is 0, n is 2, and R is C₈-C₁₀ alkyl, and wherein the composition comprises 0.1% to 8% by weight of one or more further components.

7. A process for producing expandable styrene polymer compositions, in which the styrene monomer and optionally further monomers are polymerized using at least one cyclohexanecarboxylic ester of the general formula (I) 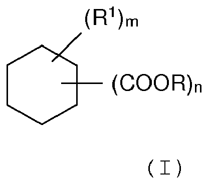 in which:
R¹ is C₁-C₁₀ alkyl or C₃-C₈ cycloalkyl;
m is 0, 1, 2 or 3;
n is 2, 3 or 4;
R is C₁-C₃₀ alkyl; preferably C₁-C₂₀ alkyl, more particularly C₆-C₁₂ alkyl, more particularly C₈-C₁₀ alkyl.

8. The process for producing expandable styrene polymer compositions according to claim 7, wherein the following components are employed in the polymerization, the percent by weight being based on the total amount of all the organic components:
(A) 10 ppm to 10% by weight of at least one cyclohexanecarboxylic ester,
(B) at least 50% by weight of styrene monomers, and
(C) optionally up to 8% by weight of further components.

9. The process for producing expandable styrene polymer compositions according to either of claims 7 and 8, wherein the cyclohexanecarboxylic ester is at least one diisononyl 1,2-cyclohexanedicarboxylate.

10. The process for producing expandable styrene polymer compositions according to any of claims 7 to 9, wherein further components used comprise at least one component selected from the group consisting of blowing agents, flame retardants, flame retardant synergists, branching auxiliaries, initiators, and graphite.

11. A process for producing a foam material, in which a composition according to any of claims 1 to 6 is foamed.

12. A foam material producible by foaming a composition according to any of claims 1 to 6.

13. A foam material produced by thermally foaming a composition according to any of claims 1 to 6, having a density of 8.0 to 200 g/l, more particularly of 10 to 50 g/l.

14. The use of a foam material according to either of claims 12 and 13 for heat retention, for the thermal insulation of machinery and household appliances, as a shaped part or as packaging material.

15. The use of a cyclohexanecarboxylic ester of the formula (I) for producing expandable styrene polymer compositions.

## Revendications

1. Composition contenant au moins un composant polymère de styrène (S) expansible et au moins un ester d'acide cyclohexanecarboxylique ainsi qu'éventuellement d'autres composants.

2. Composition selon la revendication 1, **caractérisée en ce que** la composition contient 100 ppm à 10,0 % en poids d'au moins un ester d'acide cyclohexanecarboxylique de formule (I), 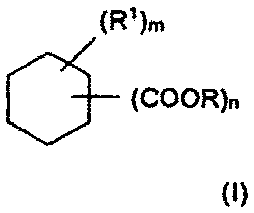 dans laquelle :
R¹ représente un groupe alkyle en C₁-C₁₀ ou cycloalkyle en C₃-C₈ ;
m représente 0, 1, 2 ou 3 ;
n représente 2, 3 ou 4 ;
R représente un groupe alkyle en C₁-C₃₀.

3. Composition selon l'une quelconque des revendications 1 et 2, **caractérisée en ce que** la composition contient au moins 50 % en poids d'un polymère de styrène (S) qui est constitué d'au moins 80 pour cent de monomères styrène, et **en ce que** la composition contient en outre 100 ppm à 5,0 % en poids d'au moins un ester d'acide cyclohexanecarboxylique de formule (I), dans laquelle :
R¹ représente un groupe alkyle en C₁-C₁₀ ;
m représente 0, 1 ou 2 ;
n représente 2 ou 3 ;
R représente un groupe alkyle en C₆-C₁₂.

4. Composition selon l'une quelconque des revendications 1 à 3, **caractérisée en ce que** la composition contient au moins 80 % en poids d'un polymère de styrène (S) qui est constitué d'au moins 95 pour cent de monomères styrène, et **en ce que** la composition contient en outre 150 ppm à 3,0 % en poids d'au moins un ester d'acide cyclohexanecarboxylique de formule (I), dans laquelle :
R¹ représente un groupe alkyle en C₁-C₁₀ ;
m représente 0 ou 1 ;
n représente 2 ou 3 ;
R représente un groupe alkyle en C₆-C₁₂.

5. Composition selon l'une quelconque des revendications 1 à 4, **caractérisée en ce que** la composition contient au moins 90 % en poids d'un homopolymère de styrène (S), et **en ce que** la composition contient en outre 150 ppm à 3,0 % en poids d'au moins un ester d'acide cyclohexanecarboxylique de formule (I), dans laquelle :
R¹ représente un groupe alkyle en C₁-C₁₀ ;
m représente 0 ou 1 ;
n représente 2 ou 3 ;
R représente un groupe alkyle en C₆-C₁₂
et **en ce que** la composition contient éventuellement jusqu'à 8 % en poids d'un ou de plusieurs autres composants.

6. Composition selon l'une quelconque des revendications 1 à 5, **caractérisée en ce que** la composition contient au moins 90 % en poids d'un homopolymère de styrène (S), et **en ce que** la composition contient en outre 150 ppm à 3,0 % en poids d'au moins un ester d'acide cyclohexanecarboxylique de formule (I), dans laquelle m est 0, n est 2 et R représente un groupe alkyle en C₈-C₁₀, et **en ce que** la composition contient 0,1 à 8 % en poids d'un ou de plusieurs autres composants.

7. Procédé pour la production de compositions de polymère de styrène expansibles, dans lequel on utilise dans la polymérisation des monomères styrène et éventuellement d'autres monomères au moins un ester d'acide cyclohexanecarboxylique de formule générale (I), 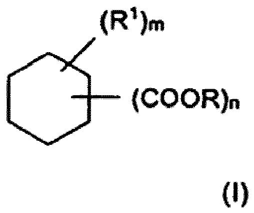 dans laquelle :
R¹ représente un groupe alkyle en C₁-C₁₀ ou cycloalkyle en C₃-C₈ ;
m représente 0, 1, 2 ou 3 ;
n représente 2, 3 ou 4 ;
R représente un groupe alkyle en C₁-C₃₀ ;
de préférence alkyle en C₁-C₂₀, en particulier alkyle en C₆-C₁₂, en particulier alkyle en C₈-C₁₀.

8. Procédé pour la production de compositions de polymère de styrène expansibles selon la revendication 7, **caractérisé en ce qu'**on utilise dans la polymérisation les monomères suivants, les % en poids étant par rapport à la quantité totale de tous les composants organiques :
(A) 10 ppm à 10 % en poids d'au moins un ester d'acide cyclohexanecarboxylique,
(B) au moins 50 % en poids de monomères de styrène et
(C) éventuellement jusqu'à 8 % en poids d'autres composants.

9. Procédé pour la production de compositions de polymère de styrène expansibles selon l'une quelconque des revendications 7 et 8, **caractérisé en ce que** pour ce qui est de l'ester d'acide cyclohexanecarboxylique il s'agit d'au moins un 1,2-cyclohexanedicarboxylate de diisononyle.

10. Procédé pour la production de compositions de polymère de styrène expansibles selon l'une quelconque des revendications 7 à 9, **caractérisé en ce qu'**on utilise comme autres composants au moins un composant choisi dans le groupe constitué par des agents porogènes, des agents ignifuges, des agents synergiques ignifuges, des adjuvants de ramification, des amorceurs et le graphite.

11. Procédé pour la production d'une mousse, dans lequel on transforme en mousse une composition selon l'une quelconque des revendications 1 à 6.

12. Mousse, pouvant être produite par transformation en mousse d'une composition selon l'une quelconque des revendications 1 à 6.

13. Mousse, produite par moussage thermique d'une composition selon l'une quelconque des revendications 1 à 6, celle-ci ayant une densité de 8,0 à 200 g/l, en particulier de 10 à 50 g/l.

14. Utilisation d'une mousse selon l'une quelconque des revendications 12 et 13, pour le calorifugeage, pour l'isolation thermique de machines et d'appareils ménagers, sous forme de pièce moulée ou en tant matériau d'emballage.

15. Utilisation d'un ester d'acide cyclohexanecarboxylique de formule (I) pour la production de compositions de polymère de styrène expansibles.
